(19) **Europäisches Patentamt**
**European Patent Office**
**Office européen des brevets**

(11) **EP 3 221 417 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.12.2025 Patentblatt 2025/50**

(45) Hinweis auf die Patenterteilung:
**18.09.2019 Patentblatt 2019/38**

(21) Anmeldenummer: **15795165.8**

(22) Anmeldetag: **17.11.2015**

(51) Internationale Patentklassifikation (IPC):
**C09K 8/584** (2006.01)   **B01F 17/00** (2006.01)
**C09K 8/60** (2006.01)   **C09K 8/86** (2006.01)
**E21B 43/00** (2006.01)

(52) Gemeinsame Patentklassifikation (CPC):
**C09K 8/584; C09K 8/602; C09K 8/86;**
**C09K 23/017;** C09K 8/524; C09K 2208/28

(86) Internationale Anmeldenummer:
**PCT/EP2015/076832**

(87) Internationale Veröffentlichungsnummer:
**WO 2016/079121 (26.05.2016 Gazette 2016/21)**

(54) **VERFAHREN ZUR ERDÖLFÖRDERUNG**

METHOD OF MINERAL OIL PRODUCTION

PROCÉDÉ POUR LE TRANSPORT DE PÉTROLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2014 US 201462081062 P**

(43) Veröffentlichungstag der Anmeldung:
**27.09.2017 Patentblatt 2017/39**

(73) Patentinhaber: **BASF SE**
**67056 Ludwigshafen (DE)**

(72) Erfinder:
- **BITTNER, Christian**
  **64625 Bensheim (DE)**
- **OETTER, Günter**
  **67227 Frankenthal (DE)**
- **WEISSE, Sebastian Alexander**
  **68519 Viernheim (DE)**
- **RATHS, Hans-Christian**
  **40789 Monheim (DE)**
- **TINSLEY, Jack**
  **Katy, Texas 77450 (US)**
- **KIENLE, Marcel Patrik**
  **67117 Limburgerhof (DE)**

(74) Vertreter: **BASF IP Association**
**BASF SE**
**GBI-C006**
**67056 Ludwigshafen (DE)**

(56) Entgegenhaltungen:
**WO-A1-2009/124922     US-A- 5 378 409**

- **SHUYAN CHEN: "Synthesis and performance evaluation of novel alcohol ether carboxylate surfactants for alkali-surfactant-polymer flooding", INTERNATIONAL JOURNAL OF OIL, GAS AND COAL TECHNOLOGY, vol. 7, no. 1, 1 January 2014 (2014-01-01), pages 52 - 67, XP055760572**
- **ROYA ASHAYER-SOLTANI, THESIS : " SURFACTANT PHASE BEHAVIOUR IN RELATION TO OIL RECOVERY, June 1999 (1999-06-01), London, pages 1 - 185**
- **ARSHAD HUSSAIN, THESIS : " PHASE BEHAVIOR OF MLCROEMULSLONS FOR ENHANCED OIL RECOVERY, June 1997 (1997-06-01), London, pages 1 - 320**
- **"Anionic Surfactants , Organic Chemistry", 1 January 1996, DEKKER, article H MEIJER, ET AL: "Polyether Carboxylates", pages: 313 - 361, XP055760642**

EP 3 221 417 B2

**Beschreibung**

Die vorliegende Erfindung betrifft ein Verfahren zur Förderung von Erdöl aus unterirdischen Erdöllagerstätten, bei dem man eine wässrige, salzhaltige Tensidformulierung umfassend mindestens ein Gemisch aus Alkylethercarboxylat und Alkyletheralkohol, wobei das Alkylethercarboxylat aus dem Alkyletheralkohol hergestellt wurde und das molare Verhältnis im Gemisch Alkylethercarboxylat : Alkyletheralkohol von 51 : 49 bis 92 : 8 beträgt und die Konzentration aller Tenside zusammen 0,05 bis 0,49 Gew. % bezüglich der Gesamtmenge der wässrigen, salzhaltigen Tensidformulierung beträgt, durch mindestens eine Injektionsbohrung in eine Erdöllagerstätte, die eine Lagerstättentemperatur von 55 °C bis 150 °C, Rohöl mit mehr als 20° API und Lagerstättenwasser enthaltend mehr als 100 ppm zweiwertige Kationen aufweist, einpresst und der Lagerstätte durch mindestens eine Produktionsbohrung Rohöl entnimmt. Das Verfahren dient zum Zwecke der Erniedrigung der Grenzflächenspannung zwischen Öl und Wasser auf < 0,1 mN/m bei Lagerstättentemperatur. Die Erfindung betrifft weiterhin ein Konzentrat das Gemisch enthaltend.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 $\mu$m aufweisen. Neben Erdöl, inklusive Anteilen von Erdgas enthält eine Lagerstätte außerdem in der Regel mehr oder weniger stark salzhaltiges Wasser.

Sofern eine Erdöllagerstätte einen ausreichenden Eigendruck aufweist, strömt Erdöl nach dem Anbohren der Lagerstätte aufgrund des Eigendrucks von selbst durch das Bohrloch an die Oberfläche (primäre Erdölförderung). Selbst wenn zunächst ein ausreichender Eigendruck vorhanden ist, lässt der Eigendruck der Lagerstätte bei Entnahme von Erdöl aber in der Regel relativ schnell nach, so dass auf diese Art und Weise je nach Lagerstättentyp meist nur geringe Mengen der in der Lagerstätte vorhandenen Erdölmenge gefördert werden können.

Es ist daher bekannt, bei Nachlassen der primären Förderung zusätzlich zu den Bohrlöchern, welche der Förderung des Erdöls dienen, den sogenannten Produktionsbohrungen, weitere Bohrlöcher in die erdölführende Formation zu bohren. Durch diese sogenannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Diese Technik ist als Wasserfluten bekannt und gehört zu den Techniken der so genannten sekundären Ölförderung. Beim Wasserfluten besteht aber immer die Gefahr, dass das dünnflüssige Wasser nicht gleichmäßig durch die Formation strömt und dabei Öl mobilisiert, sondern vor allem auf Wegen mit geringem Strömungswiderstand von der Injektionsbohrung zur Produktionsbohrung fließt, ohne Öl zu mobilisieren, während Bereiche der Formation mit hohem Strömungswiderstand nicht oder nur wenig durchflossen werden. Man erkennt dies daran, dass der Anteil des Wassers, welches über die Produktionsbohrung gefördert wird, immer weiter zunimmt. Mittels primärer und sekundärer Förderung sind im Regelfalle nicht mehr als ca. 30 bis 35 % der in der Lagerstätte vorhandenen Erdölmenge zu fördern.

Es ist bekannt, Techniken der tertiären Erdölförderung (auch bekannt als "Enhanced Oil Recovery (EOR)") zur Steigerung der Ölausbeute einzusetzen, falls eine wirtschaftliche Förderung mittels primärer oder sekundärer Erdölförderung nicht oder nicht mehr möglich ist. Zur tertiären Erdölförderung gehören Verfahren, bei denen man geeignete Chemikalien, wie Tenside und/oder Polymere als Hilfsmittel zur Ölförderung einsetzt. Eine Übersicht zur tertiären Ölförderung unter Einsatz von Chemikalien findet sich beispielsweise im Artikel von D. G. Kessel, Journal of Petroleum Science and Engineering, 2 (1989) 81 - 101.

Zu den Techniken der tertiären Erdölförderung gehört das so genannte "Polymerfluten". Beim Polymerfluten presst man durch die Injektionsbohrungen eine wässrige Lösung eines verdickend wirkenden Polymers in die Erdöllagerstätte ein, wobei die Viskosität der wässrigen Polymerlösung an die Viskosität des Erdöls angepasst ist. Durch das Einpressen der Polymerlösung wird das Erdöl wie beim Wasserfluten durch die genannten Hohlräume in der Formation von der Injektionsbohrung ausgehend in Richtung der Produktionsbohrung gedrückt, und das Erdöl wird über die Produktionsbohrung gefördert. Dadurch dass die Polymerformulierung in etwa die gleiche Viskosität aufweist wie das Erdöl wird die Gefahr verringert, dass die Polymerformulierung ohne Effekt zur Produktionsbohrung durchbricht. Somit erfolgt die Mobilisierung des Erdöls viel gleichmäßiger als bei der Verwendung von dünnflüssigem Wasser und zusätzliches Erdöl kann in der Formation mobilisiert werden. Einzelheiten zum Polymerfluten sowie hierzu geeigneter Polymere sind beispielsweise in "Petroleum, Enhanced Oil Recovery, Kirk-Othmer, Encyclopedia of Chemical Technology, Online-Ausgabe, John Wiley & Sons, 2010" offenbart.

Es ist bekannt hydrophob assoziierende Copolymere zum Polymerfluten einzusetzen. Unter "hydrophob assoziierenden Copolymeren" versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, welches eine (zusätzliche) verdickende Wirkung hervorruft. Einzelheiten zur Verwendung hydrophob assoziierender Copolymere zur tertiären Erdölförderung sind beispielsweise im Übersichtsartikel von Taylor, K.C, und Nasr-El-Din, H.A. in J. Petr. Sci. Eng. 1998, 19, 265-280 beschrieben.

Eine weitere Form der tertiären Erdölförderung ist das zwecks Förderung des in den Poren durch Kapillarkräfte gefangenen Öls, meist kombiniert mit dem Polymerfluten zur Mobilitätskontrolle (gleichmäßiges Durchströmen der Lagerstätte).

Auf das Erdöl, welches gegen Ende der sekundären Förderung in den Poren des Lagerstättengesteins gefangen ist, wirken viskose und kapillare Kräfte, wobei das Verhältnis dieser beiden Kräfte zueinander die mikroskopische Ölentfernung bestimmt. Mittels eines dimensionslosen Parameters, der so genannten Kapillarzahl, wird das Einwirken dieser Kräfte beschrieben. Sie ist das Verhältnis der Viskositätskräfte (Geschwindigkeit x Viskosität der drückenden Phase) zu den Kapillarkräften (Grenzflächenspannung zwischen Öl und Wasser x Benetzung des Gesteins):

$$N_c = \frac{\mu v}{\sigma \cos \theta}.$$

Dabei steht $\mu$ für die Viskosität des das Erdöl mobilisierenden Fluides, $v$ für die Darcy-Geschwindigkeit (Durchfluss pro Flächeneinheit), $\sigma$ für die Grenzflächenspannung zwischen Erdöl mobilisierender Flüssigkeit und Erdöl und $\theta$ für den Kontaktwinkel zwischen Erdöl und dem Gestein (C. Melrose, C. F. Brandner, J. Canadian Petr. Techn. 58, Oktober - Dezember, 1974). Je höher die Kapillarzahl, desto größer die Mobilisierung des Öls und somit auch der Entölungsgrad.

Es ist bekannt, dass die Kapillarzahl gegen Ende der sekundären Erdölförderung im Bereich von etwa $10^{-6}$ liegt und dass es für die Mobilisierung von zusätzlichem Erdöl notwendig ist, die Kapillarzahl auf etwa $10^{-3}$ bis $10^{-2}$ zu erhöhen.

Hierzu kann man eine besondere Form des Flutverfahrens - das sogenannte Winsor Typ III Mikroemulsionsfluten - durchführen. Beim Winsor Typ III Mikroemulsionsfluten sollen die injizierten Tenside mit der in der Lagerstätte vorhandenen Wasser- und der Ölphase eine Mikroemulsion Windsor Typ III ausbilden. Bei einer Mikroemulsion Windsor Typ III handelt es sich nicht um eine Emulsion mit besonders kleinen Tröpfchen, sondern um eine thermodynamisch stabile, flüssige Mischung von Wasser, Öl und Tensiden. Ihre drei Vorteile sind, dass

- dadurch eine sehr niedrige Grenzflächenspannung $\sigma$ zwischen Erdöl und wässriger Phase erreicht wird,

- sie in der Regel eine sehr niedrige Viskosität aufweist und dadurch nicht in einer porösen Matrix gefangen wird,

- sie schon bei kleinsten Energieeinträgen entsteht und über einen unendlich langen Zeitraum stabil bleiben kann (klassische Emulsionen benötigen hingegen höhere Scherkräfte, welche im Reservoir überwiegend nicht auftauchen, und sind nur kinetisch stabilisiert).

Die Mikroemulsion Winsor Typ III steht mit überschüssigem Wasser und überschüssigem Öl im Gleichgewicht. Unter diesen Bedingungen der Mikroemulsionsausbildung belegen die Tenside die Öl-Wasser-Grenzfläche und erniedrigen die Grenzflächenspannung $\sigma$ besonders bevorzugt auf Werte von $< 10^{-2}$ mN/m (ultralow interfacial tension). Um ein optimales Ergebnis zu erzielen, sollte der Anteil der Mikroemulsion im System Wasser-Mikroemulsion-Öl bei definierter Tensidmenge naturgemäß möglichst groß sein, da dadurch umso niedrigere Grenzflächenspannungen erzielt werden können.

Auf diese Art und Weise lassen sich die Öltröpfchen in ihrer Form verändern (die Grenzflächenspannung zwischen Öl und Wasser ist soweit abgesenkt, dass nicht mehr der Zustand der kleinsten Grenzfläche angestrebt wird und nicht mehr die Kugelform bevorzugt ist) und durch das Flutwasser durch die Kapillaröffnungen hindurchzwängen.

Sind alle Öl-Wasser-Grenzflächen mit Tensid belegt, bildet sich beim Vorliegen von überschüssiger Tensidmenge die Mikroemulsion Winsor Typ III aus. Sie stellt somit ein Reservoir für Tenside dar, welche eine sehr niedrige Grenzflächenspannung zwischen Öl- und Wasserphase bewerkstelligen. Dadurch, dass die Mikroemulsion Winsor Typ III niederviskos ist, wandert sie im Flutprozess mit durch das poröse Lagerstättengestein. Emulsionen hingegen können in der porösen Matrix hängen bleiben und Lagerstätten verstopfen. Trifft die Mikroemulsion Winsor Typ III auf eine noch nicht mit Tensid bedeckte Öl-Wasser-Grenzfläche, so kann das Tensid aus der Mikroemulsion die Grenzflächenspannung dieser neuen Grenzfläche deutlich herabsetzen und zu einer Mobilisierung des Öles (zum Beispiel durch Verformung der Öltropfen) führen.

Die Öltröpfchen können sich anschließend zu einer kontinuierlichen Ölbank vereinigen. Dies hat zweierlei Vorteile:

Zum einen können beim Voranschreiten der kontinuierlichen Ölbank durch neues poröses Gestein die sich dort befindlichen Öltröpfchen mit der Bank verschmelzen.

Weiterhin wird durch die Vereinigung der Öltropfen zu einer Ölbank die Öl-Wasser-Grenzfläche deutlich verringert und somit nicht mehr benötigtes Tensid wieder freigesetzt. Das freigesetzte Tensid kann danach wie oben beschrieben in der Formation verbliebene Öltropfen mobilisieren.

Beim Winsor Typ III Mikroemulsionsfluten handelt es sich folglich um ein äußerst effizientes Verfahren und im Unterschied zu einem Emulsionsflutverfahren bedarf es deutlich weniger Tensid. Beim Mikroemulsionsfluten werden üblicherweise die Tenside wahlweise zusammen mit Cosolvenzien und/oder basischen Salzen (optional in Gegenwart von Chelatbildnern) injiziert. Nachfolgend wird eine Lösung aus verdickendem Polymer zur Mobilitätskontrolle injiziert. Eine weitere Variante ist die Injektion einer Mischung aus verdickendem Polymer sowie Tensiden, Cosolvenzien und/oder basischen Salzen (optional mit Chelatbildner) und nachfolgend eine Lösung aus verdickendem Polymer zur Mobilitätskontrolle. Diese Lösungen sollten in der Regel klar sein, um Verstopfungen des Reservoirs zu vermeiden.

Die Einsatzparameter, wie beispielsweise Art, Konzentration und das Mischungsverhältnis der eingesetzten Tenside zueinander werden vom Fachmann an die in einer gegebenen Ölformation vorherrschenden Bedingungen (beispielsweise Temperatur und Salzgehalt) angepasst.

Stand der Technik

US 4457373 A1 beschreibt die Verwendung von Wasser-Öl-Emulsionen von Aniontensiden des Typus $R\text{-}(OCH_2CH_2)_n\text{-}OCH_2COOM$, welche auf einem Alkylrest R mit 6 bis 20 Kohlenstoffatomen bzw. einem alkyliertem aromatischem Rest, bei dem die Gesamtzahl der Kohlenstoffatome in den Alkylresten 3 bis 28 beträgt, beruhen, in der tertiären Erdölförderung. Bei den Wiederholungseinheiten steht n für eine Zahl von 1 bis 30. Die Herstellung der Tenside erfolgt über eine Umsetzung der entsprechenden Alkoxylate mit Chloressigsäurenatriumsalz und Natriumhydroxid bzw. wässriger Natronlauge. Der Carboxymethylierungsgrad kann von 10% bis 100% (bevorzugt 90 - 100%) reichen. Die Beispiele zeigen nur die Verwendung von Wasser-Öl-Emulsionen mit carboxymethyliertem Nonylphenolethoxylat Natriumsalz mit bspw. n = 6 (Carboxymethylierungsgrad 80%) oder carboxymethylierte Fettalkoholethoxylate Natriumsalz mit bspw. R = C12C14 und n = 4,5 (Carboxymethylierungsgrad 94%) gegenüber Rohöl in Salzwasser bei Temperaturen von 46 bis 85°C. Die verwendete Tensidkonzentration (>5 Gewichtsprozent) war in den Flutversuchen, welche bei ≤55°C durchgeführt wurden, sehr hoch. Es wurde ein Polymer (Polysaccharide) in den Flutversuchen verwendet.

US 4485873 A1 beschreibt die Verwendung von Aniontensiden des Typus $R\text{-}(OCH_2CH_2)_n\text{-}OCH_2COOM$, welche auf einem Alkylrest R mit 4 bis 20 Kohlenstoffatomen bzw. einem alkyliertem aromatischem Rest, bei dem die Gesamtzahl der Kohlenstoffatome in den Alkylresten 1 bis 28 beträgt, beruhen, in der tertiären Erdölförderung. Bei den Wiederholungseinheiten steht n für eine Zahl von 1 bis 30. Die Herstellung der Tenside erfolgt über eine Umsetzung der entsprechenden Alkoxylate mit Chloressigsäurenatriumsalz und Natriumhydroxid bzw. wässriger Natronlauge. Der Carboxymethylierungsgrad kann von 10% bis 100% (bevorzugt 50 - 100%) reichen. Die Beispiele zeigen nur die Verwendung carboxymethylierte Nonylphenolethoxylate Natriumsalz mit bspw. n = 5,5 (Carboxymethylierungsgrad 70%) oder carboxymethylierte Fettalkoholethoxylate Natriumsalz mit bspw. R = C12C14 und n = 4,4 (Carboxymethylierungsgrad 65%) gegenüber Modellöl in Salzwasser bei Temperaturen von 37 bis 74°C. Die verwendete Tensidkonzentration (>5 Gewichtsprozent) war in den Flutversuchen, welche bei ≤60°C durchgeführt wurden, sehr hoch. Als Polymer wurde Hydroxyethylcellulose in den Flutversuchen verwendet.

US 4542790 A1 beschreibt die Verwendung von Aniontensiden des Typus $R\text{-}(OCH_2CH_2)_n\text{-}OCH_2COOM$, welche auf einem Alkylrest R mit 4 bis 20 Kohlenstoffatomen bzw. einem alkylierten aromatischen Rest, bei dem die Gesamtzahl der Kohlenstoffatome in den Alkylresten 1 bis 28 beträgt, beruhen, in der tertiären Erdölförderung. Bei den Wiederholungseinheiten steht n für eine Zahl von 1 bis 30. Die Herstellung der Tenside erfolgt über eine Umsetzung der entsprechenden Alkoxylate mit Chloressigsäurenatriumsalz und Natriumhydroxid bzw. wässriger Natronlauge. Der Carboxymethylierungsgrad kann von 10% bis 100% reichen. Die Beispiele zeigen die Verwendung carboxymethylierte Nonylphenolethoxylate Natriumsalz mit bspw. n = 5,3 (Carboxymethylierungsgrad 76%) oder carboxymethylierte C12C14-Fettalkoholethoxylate Natriumsalz gegenüber niederviskosem Rohöl (10 mPas bei 20°C) in Salzwasser bei Temperaturen von 46 bis 85°C. Die verwendete Tensidkonzentration (2 Gewichtsprozent) war in den Flutversuchen, welche bei ≤60°C durchgeführt wurden, relativ hoch.

US 4811788 A1 offenbart die Verwendung von $R\text{-}(OCH_2CH_2)_n\text{-}OCH_2COOM$, welche auf dem Alkylrest 2-Hexyldecyl (abgeleitet von C16-Guerbetalkohol) beruhen und bei denen n für die Zahlen 0 oder 1 steht, in der tertiären Erdölförderung.

EP 0207312 B1 beschreibt die Verwendung von Aniontensiden des Typus $R\text{-}(OCH_2C(CH_3)H)_m$ $(OCH_2CH_2)_n\text{-}OCH_2COOM$, welche auf einem Alkylrest R mit 6 bis 20 Kohlenstoffatomen bzw. einem alkyliertem aromatischem Rest, bei dem die Gesamtzahl der Kohlenstoffatome in den Alkylresten 5 bis 40 beträgt, beruhen, in Abmischung mit einem hydrophoberen Tensid in der tertiären Erdölförderung. Bei den Wiederholungseinheiten steht m für eine Zahl von 1 bis 20 und n für eine Zahl von 3 bis 100. Die Herstellung der Tenside erfolgt über eine Umsetzung der entsprechenden Alkoxylate mit Chloressigsäurenatriumsalz und Natriumhydroxid bzw. wässriger Natronlauge. Der Carboxymethylierungsgrad kann von 10% bis 100% reichen. Die Beispiele zeigen die Verwendung carboxymethyliertem Dinonylphenolblockpropoxyoxethylat Natriumsalz mit m = 3 und n = 12 (Carboxymethylierungsgrad 75%) zusammen mit Alkylbenzolsulfonat bzw. Alkansulfonat gegenüber Modellöl in Seewasser bei Temperaturen von 20 bzw. 90°C. Die Entölung bei 90°C lieferte in Kernflutversuchen schlechtere Werte als bei 20°C und die verwendete Tensidkonzentration (4 Gewichtsprozent) war sehr hoch.

WO 2009/100298 A1 beschreibt die Verwendung von Aniontensiden des Typus $R^1$-O-$(CH_2C(CH_3)HO)_m$ $(CH_2CH_2O)_n$,-XY$^-$ M$^+$, welche auf einem verzweigten Alkylrest $R^1$ mit 10 bis 24 Kohlenstoffatomen und einem Verzweigungsgrad von 0,7 bis 2,5 beruhen, in der tertiären Erdölförderung. Y$^-$ kann u.a. für eine Carboxylatgruppe stehen. In den Beispielen für die Alkylethercarboxylate steht $R^1$ immer für einen verzweigten Alkylrest mit 16 bis 17 Kohlenstoffatomen und es handelt sich bei X immer um eine $CH_2$-Gruppe. Bei den Wiederholungseinheiten werden Beispiele mit m = 0 und n = 9 bzw. m = 7 und n = 2 bzw. m = 3.3 und n = 6 aufgeführt. Die Herstellung der Tenside erfolgt über eine Umsetzung der entsprechenden Alkoxylate mit Chloressigsäurenatriumsalz und wässriger Natronlauge. Der Carboxymethylierungsgrad wird mit 93% für das Beispiel mit m = 7 und n = 2 offenbart. In den Beispielen werden die Alkylethercarboxylate als alleinige Tenside (0,2 Gewichtsprozent) in Meerwasser bei 72°C gegenüber Rohöl getestet. Die erreichten Grenzflächenspannungen lagen immer oberhalb von 0,1 mN/m.

WO 09124922 A1 beschreibt die Verwendung von Aniontensiden des Typus $R^1$-O-$(CH_2C(R^2)$ $HO)_{n"}(CH_2CH_2O)_{m"}$-$R^5$-COOM, welche auf einem verzweigten, gesättigten Alkylrest $R^1$ mit 17 Kohlenstoffatomen und einem Verzweigungsgrad von 2,8 bis 3,7 beruhen, in der tertiären Erdölförderung. $R^2$ steht für einen Kohlenwasserstoffrest mit 1 bis 10 Kohlenstoffatomen. $R^5$ steht für einen zweiwertigen Kohlenwasserstoffrest mit 1 bis 12 Kohlenstoffatomen. Weiterhin steht n" für eine Zahl von 0 bis 15 und m" für eine Zahl von 1 bis 20. Diese Aniontenside können u.a. durch Oxidation entsprechender Alkoxylate gewonnen werden, wobei eine terminale Gruppe -$CH_2CH_2OH$ in eine terminale Gruppe -$CH_2CO_2M$ umgewandelt wird.

WO 11110502 A1 beschreibt die Verwendung von Aniontensiden des Typus $R^1$-O-$(CH_2C(CH_3)HO)_m$ $(CH_2CH_2O)_n$-XY$^-$ M$^+$, welche auf einem linearen gesättigten oder ungesättigten Alkylrest $R^1$ mit 16 bis 18 Kohlenstoffatomen beruhen, in der tertiären Erdölförderung. Y$^-$ kann u.a. für eine Carboxylatgruppe und X kann u.a. für eine Alkyl- bzw. Alkylengruppe mit bis zu 10 Kohlenstoffatomen stehen. Weiterhin steht m für eine. Zahl von 0 bis 99 und bevorzugt für 3 bis 20 und n für eine Zahl von 0 bis 99. Diese Aniontenside können u.a. durch Umsetzung entsprechender Alkoxylate mit Chloressigsäurenatriumsalz gewonnen werden.

WO 2012/027757 A1 beansprucht Tenside des Typus $R^1$-O-$(CH_2C(R^2)HO)_n(CH(R^3)_z$-COOM sowie deren Verwendung in der tertiären Erdölförderung. $R^1$ steht für Alkylreste bzw. optional substituierte Cycloalkyl bzw. optional substituierte Arylreste mit jeweils 8 bis 150 Kohlenstoffatome. Bei $R^2$ bzw. $R^3$ kann es sich um H oder Alkylreste mit 1 bis 6 Kohlenstoffatomen handeln. Der Wert n steht für eine Zahl von 2 bis 210 und z für eine Zahl von 1 - 6. Als Beispiele finden sich nur Tensidmischungen mindestens enthaltend ein Sulfonat-haltiges Tensid (z.B. interne Olefinsulfonate oder Alkylbenzolsulfonate) und ein Alkylethercarboxylat, bei denen $R^1$ ein verzweigter, gesättigter Alkylrest mit 24 bis 32 Kohlenstoffatomen ist und sich von Guerbetalkoholen mit nur einer Verzweigung (in der 2-Position) ableitet. Besagte Alkylethercarboxylate weisen mindestens 25 Wiederholungseinheiten auf, bei denen $R^2$ für $CH_3$ steht, und mindestens 10 Wiederholungseinheiten, bei denen $R^2$ für H steht, so dass n mindestens für eine Zahl von grösser 39 steht. In allen Beispielen steht $R^3$ für H und z für die Zahl 1. Die Tensidmischungen enthalten mindestens 0,5 Gewichtsprozent Tensid und werden bei Temperaturen von 30 bis 105°C gegenüber Rohölen getestet.

WO 2013/159027 A1 beansprucht Tenside des Typus $R^1$-O-$(CH_2C(R^2)HO)_n$-X sowie deren Verwendung in der tertiären Erdölförderung. $R^1$ steht für Alkylreste mit jeweils 8 bis 20 Kohlenstoffatomen bzw. für optional substituierte Cycloalkyl bzw. optional substituierte Arylreste. Bei $R^2$ kann es sich um H oder $CH_3$ handeln. Der Wert n steht für eine Zahl von 25 bis 115. X steht für $SO_3M$, $SO_3H$, $CH_2CO_2M$ oder $CH_2CO_2H$ (M$^+$ ist ein Kation). Weiterhin werden Strukturen des Typus $R^1$-O-$(CH_2C(CH_3)HO)_x$-$(CH_2CH_2O)_y$-X offenbart, wobei x für eine Zahl von 35 bis 50 und y für eine Zahl von 5 bis 35 stehen. Als Beispiel findet sich das Tensid $C_{18}H_{35}$-O-$(CH_2C(CH_3)HO)_{45}$-$(CH_2CH_2O)_{30}$-$CH_2CO_2M$ ($C_{18}H_{35}$ steht für Oleyl) in Abmischung mit einem internen $C_{19}$-$C_{28}$-Olefinsulfonat und Phenyldiethylenglykol wieder. Die Tensidmischungen enthalten mindestens 1,0 Gewichtsprozent Tensid und werden bei Temperaturen von 100°C und 32500 ppm Gesamtsalinität in Gegenwart der Base Natriummetaborat gegenüber Rohölen getestet.

DE 2418444 A1 offenbart die Herstellung von Alkylethercarbonsäuren durch Umsetzung von Alkoholen oder Alkylethoxylaten mit Chloressigsäurenatriumsalz und Natriumhydroxid bzw. Natronlauge bei 20 - 80°C mit anschließender Zugabe von Schwefelsäure und Phasentrennung bei 90°C.

EP 01 06018 A1 offenbart die Herstellung von carboxymethylierten Alkoholen, Alkylethoxylaten oder Alkylphenolethoxylaten durch Umsetzung von Alkoholen, Alkylethoxylaten oder Alkylphenolethoxylaten mit Chloressigsäure und Natronlauge (doppelte molare Menge in Bezug auf Chloressigsäure) bei 70 - 95°C und reduziertem Druck mit der Maßgabe, dass in der Reaktionsmischung 0,3 bis 1,25% Wasser vorliegt.

US 2010/0081716 A1 offenbart die Herstellung von carboxymethylierten Alkylalkoxylat. Alkohol wird dabei basenkatalysiert alkoxyliert, mit einer Hydroxycarbonsäure oder einer Dicarbonsäure oder einer Tricarbonsäure neutralisiert und dann mit Chloressigsäure bzw. Chloressigsäuresalz und Alkalihydroxid umgesetzt.

US 8304575 B2 offenbart die Herstellung von carboxymethylierten Alkylalkoxylat. Alkohol wird dabei basenkatalysiert alkoxyliert, mit einer Hydroxycarbonsäure oder einer Dicarbonsäure oder einer Tricarbonsäure neutralisiert und dann unter gleichzeitiger Zugabe von wässrigen Lösung von Chloressigsäure bzw. Chloressigsäuresalz und von einer wässriger Alkalihydroxid-Lösung bei 50 - 100°C und reduziertem Druck von 0,0067 bis 266 mbar umgesetzt.

EP 1 061 064 B1 beschreibt ein Verfahren zur Herstellung von Ethercarbonsäuren mit niedrigem Restalkoholgehalt.

S. Chen et al., Int. J. Oil and Coal Technology, Vol. 7, Nr. 1, 2014, Seiten 52-66 beschreiben die Synthese und Eignung von Alkoholethercarboxylaten zum Alkali-Tensid-Polymerfluten bei sehr niedrigen Temperaturen von <30°C.

Aufgabe der Erfindung

Es besteht ein Bedarf für die weiterführende Entölung von Lagerstätten mit salzhaltigem Lagerstättenwasser und mit Lagerstättentemperaturen von 55°C bis 150°C an Tensiden bzw. Tensidformulierungen, welche die folgenden Eigenschaften aufweisen:

- hydrolysestabil;
- salztolerant (wasserlöslich auch in Gegenwart von vielen einwertigen Ionen aber auch mehrwertigen Kationen: z.B. salzhaltiges Wasser mit mehr als 100 ppm an zweiwertigen Kationen wie $Ca^{2+}$ und/oder $Mg^{2+}$);
- geringe Einsatzkonzentration (<0.5 Gewichtsprozent), um die Kosten und den Materialverbrauch hinsichtlich Nachhaltigkeit niedrig zu halten;
- einfache Injektion in die poröse Formation (möglichst alles bei Reservoir-Temperatur klar gelöst);
- bei Lagerstättentemperatur niedrige Grenzflächenspannungen gegenüber Rohöl (<0,1 mN/m, besonders bevorzugt <0,01 mN/m) auch bei Verwendung nur eines Tensides (oder zwei sehr ähnlicher Tenside, die sich nur in wenigen Punkten unterscheiden - z.B. geringe Unterschiede im Alkoxylierungsgrad). Dies gestaltet sich schwierig, da mit zunehmender Temperatur die Öl-Wasser-Grenzfläche in Schwingung gesetzt wird (Auslenkung aufgrund Brownscher Molekularbewegung) und sich dadurch vergrößert. Es bedarf eines effizienten Tensides, um die Grenzfläche ausreichend zu bedecken und die Grenzflächenspannung trotzdem auf einen niedrigen Wert (<0.1 mN/m) abzusenken;
- geringe Adsorption an der Gesteinsoberfläche;
- mitunter basenfreie Formulierungen, da Verwendung von Alkali aufgrund der Anwesenheit von mehrwertigen Kationen nicht möglich ist (führt zu Ausfällungen und damit Verlust von Alkali) bzw. aufgrund von Scale-Bildung die Poren und damit die Lagerstätte verstopft;
- einfacher Herstellprozess, um die Kosten des Tensides niedrig zu halten;
- Lieferform als Tensidkonzentrat, welches bei zumindest 20°C flüssig sein kann (dies würde das Aufschmelzen des Konzentrates bzw. eine Dauerbeheizung vor Ort überflüssig machen), vorzugsweise eine Viskosität von <1500 mPas bei 40°C und 200 Hz (dies würde eine einfache Verpumpung erlauben) und einen hohen Aktivgehalt aufweisen sollte (dies würde die Transportkosten und den Energieverbrauch durch den Transport niedrig halten; zugesetztes Wasser und bestimmte Cosolvenzien erniedrigen zwar Schmelzpunkt und Viskosität des Konzentrates, müssen aber auch transportiert werden, was Energie verbraucht; zudem würden vor Ort grössere Vorratsbehälter benötigt, was die Infrastrukturkosten erhöht oder im Bereich von Offshore-Anlagenschlecht machbar ist, da es wertvollen Platz wegnimmt);
- es sollte keine umweltschädlichen Eigenschaften aufweisen (bei Alkylphenolethoxylaten ist bekannt, dass sie bzw. ihre Abbauprodukte als endokrine Disruptoren wirken können. Verwendet man sie als Rohstoff für andere Tensidstrukturen, sollte Sorge getragen werden, dass sie komplett umgesetzt werden).

Hierbei ist insbesondere das Erreichen niedriger Grenzflächenspannungen von <0.1 mN/m und insbesondere <0.01 mN/m bei Temperaturen ≥55°C schwierig (insbesondere wenn aufgrund der Wasserhärte keine Base wie Alkalihydroxid oder Natriumcarbonat verwendet werden kann, da es sonst zur Bildung von Scale führen könnte).

Bezüglich der Kopfgruppe bei Tensiden sind Olefinsulfonate, Paraffinsulfonate oder Alkylarylsulfonate zwar unter den oben geschilderten Bedindungen hydrolysestabil, aber als Einzeltensid wenig oder kaum salztolerant. So wäre ein internes C20C24-Olefinsulfonat alleine in Formationswasser mit z.B. 10% Salzgehalt und 2000 ppm zweiwertigen Kationen und Temperaturen bis zu 150°C unlöslich.

Alkylethersulfate sind oberhalb von 55°C nicht hydrolysestabil, sofern nicht ein basischer pH-Wert von ca. 10 - 11 eingehalten wird. Dies lässt sich jedoch in vielen Fällen nicht realisieren, da aufgrund der Wasserhärte kein Alkali eingesetzt werden kann bzw. das Reservoirgestein mit der Base reagiert und sich dadurch der pH-Wert in Richtung neutraler pH-Werte ändert. Alkylethersulfonate vereinen oft Hydrolsestabilität und Salztoleranz, jedoch sind sie aufwendig in der Herstellung (mehrstufige Synthesen oder Verwendung von in der Handhabung aufwendige Reagenzien) und meist sehr teuer.

Ein alternativer Ansatz ist in der Verwendung der Klasse der carboxymethylierten Alkylalkoxylate zu sehen, welche durch Umsetzung von Alkylalkoxylat mit bspw. Chloressigsäurenatriumsalz gewonnen werden können. Sie sind hydrolysestabil und können salztolerant sein. Die im Stand der Technik beschriebenen Mischungen benötigen jedoch entweder hohe Tensideinsatzkonzentrationen oder beruhen auf umweltschädlichen Rohstoffen (Alkylphenolalkoxylaten) oder müssen in Kombination mit anderen chemisch unterschiedlichen Tensiden (also Tenside, die nicht als Ausgangsrohstoff für das Alkylethercarboxylat dienen: z.B. organische Sulfonate wie Alkylbenzolsulfonate oder Olefinsulfonate) zur Erreichung von sehr niedrigen Grenzflächenspannungen eingesetzt werden.

Beim Flutverfahren handelt es sich um ein großtechnisches Verfahren. Zwar werden die verwendeten Chemikalien üblicherweise nur als verdünnte Lösungen eingesetzt, aber die pro Tag injizierten Volumina sind hoch und die Injektion wird typischerweise über Monate bis zu mehreren Jahren fortgesetzt. Der Chemikalienbedarf für ein durchschnittliches Ölfeld kann durchaus 5000 bis 10 000 t Polymer pro Jahr betragen. Für ein wirtschaftliches Verfahren ist daher eine möglichst hohe Effizienz, d.h. Wirkung pro Stoffmenge, von großer Bedeutung. Schon eine geringe Verbesserung der Effizienz kann zu einer signifikanten Verbesserung der Wirtschaftlichkeit führen. Folglich ist eine Erniedrigung der Grenzflächenspannung zwischen Öl und Wasser auf < 0,1 mN/m mit einer geringen Anwendungskonzentration von Tensid gewünscht (Gesamtmenge aller Tenside sollte idealerweise < 0,5 Gewichtsprozent der injizierten wässrigen Tensid-haltigen-Lösung ausmachen. Unter der der injizierten wässrigen Tensid-haltigen-Lösung versteht man den sogenannten injizierten surfactant slug. Der surfactant slug füllt einen Teil des Porenvolumens aus und kann neben dem Tensid optional noch andere Additive wie z.B. ein verdickendes Polymer enthalten. Der angestrebte Teil des Porenvolumens kann beispielsweise zwischen 2 und 60%, bevorzugt zwischen 3 und 25% liegen).

Es besteht daher ein Bedarf an Tensidmischungen mit carboxymethylierten Alkylalkoxylaten und deren Ausgangsmaterial, welche bei der Erdölförderung unter den oben genannten Bedingungen zumindest teilweise die im Stand der Technik aufgeführten Nachteile nicht aufweisen bzw. möglichst viele der oben genannten Eigenschaften erfüllen.

Allgemeine Beschreibung der Erfindung

Für die Lösung der obigen Aufgabe wurde daher überraschend gefunden, dass ein Verfahren zur Förderung von Erdöl aus unterirdischen Erdöllagerstätten (optional mittels Winsor Typ III Mikroemulsionsflutens) die Anforderungen erfüllt, bei dem eine wässrige, salzhaltige Tensidformulierung umfassend eine Tensidmischung zwecks Erniedrigung der Grenzflächenspannung zwischen Öl und Wasser auf < 0,1 mN/m bei Lagerstättentemperatur durch mindestens eine Injektionsbohrung in eine Erdöllagerstätte einpresst und der Lagerstätte durch mindestens eine Produktionsbohrung Rohöl entnommen wird, dadurch gekennzeichnet, dass

a) die Erdöllagerstätte eine Lagerstättentemperatur von 55 °C bis 150 °C, ein Rohöl mit mehr als 20° API und ein Lagerstättenwasser mit mehr als 100 ppm zweiwertige Kationen aufweist;
und

b) die Tensidmischung mindestens ein anionisches Tensid (A) der allgemeinen Formel (I)

$$R^1\text{-}O\text{-}(CH_2C(R^2)HO)_x\text{-}(CH_2C(CH_3)HO)_y\text{-}(CH_2CH_2O)_z\text{-}CH_2CO_2M \qquad (I)$$

und mindestens ein nichtionisches Tensid (B) der allgemeinen Formel (II)

$$R^1\text{-}O\text{-}(CH_2C(R^2)HO)_x\text{-}(CH_2C(CH_3)HO)_y\text{-}(CH_2CH_2O)_z\text{-}H \qquad (II)$$

enthält, wobei beim Einpressen (bei der Injektion) im Tensidgemisch ein molares Verhältnis von anionischem Tensid (A) zu nichtionischem Tensid (B) von 51 : 49 bis 92 : 8 vorliegt und das nichtionische Tensid (B) als Ausgangsmaterial für das anionische Tensid (A) dient,
wobei

$R^1$    für einen primären linearen oder verzweigten, gesättigten oder ungesättigten, aliphatischen Kohlenwasserstoffrest mit 10 bis 36 Kohlenstoffatomen steht;
$R^2$    für einen linearen gesättigten aliphatischen Kohlenwasserstoffrest mit 2 bis 14 Kohlenstoffatomen steht;
$M$    für H, Na, K oder $NH_4$ steht;
$x$    für eine Zahl von 0 bis 10 steht;
$y$    für eine Zahl von 0 bis 50 steht;
$z$    für eine Zahl von 1 bis 35 steht;

wobei die Summe aus $x + y + z$ für eine Zahl von 3 bis 80 steht und die $x+y+z$ Alkoxylatgruppen statistisch verteilt, alternierend oder blockweise angeordnet sein können;
und

c) die Konzentration aller Tenside zusammen 0,05 bis 0,49 Gew. % bezüglich der Gesamtmenge der wässrigen, salzhaltigen Tensidformulierung beträgt.

Unter der wässrigen, salzhaltigen Tensidformulierung versteht man eine Tensidmischung, welche in salzhaltigem Wasser aufgelöst wird (z.B. während des Einpressvorganges). Bei dem salzhaltigen Wasser kann es sich u.a. um Flusswasser, um Meerwasser, um Wasser aus einem Aquifer in der Nähe der Lagerstätte, um sogenanntes Injektionswasser, um Lagerstättenwasser, um sogenanntes Produktionswasser, welches wieder reinjiziert wird, bzw. um Mischungen der zuvor beschriebenen Wässer handeln. Es kann sich aber auch um salzhaltiges Wasser handeln, welches aus einem salzreicheren Wasser gewonnen wurde: z.B. teilweise Entsalzung, Abreicherung der mehrwertigen Kationen oder durch Verdünnung mit Frischwasser oder Trinkwasser. Die Tensidmischung kann vorzugsweise als Konzentrat bereitgestellt werden, welches herstellbedingt auch Salz enthalten kann. Dies wird in den nachfolgenden Abschnitten weiter ausgeführt.

Unter Alkyletheralkohol versteht man im Rahmen dieser Erfindung die Alkylalkoxylate bzw. Polyether, die sich durch die Umsetzung von Alkoholen mit Alkylenoxiden ergeben: also Verbindungen des Typus $R^1$-O-$(CH_2C(R^2)$ HO$)_x$-$(CH_2C(CH_3)HO)_y$-$(CH_2CH_2O)_z$-H. Bei diesen nichtionischen Verbindungen kann es sich um Alkyletheralkohole oder um Alkenyletheralkohole handeln. Da es sich vorzugsweise um Alkyletheralkohole handelt wird nachfolgend vereinfacht von Alkyletheralkoholen gesprochen. Ähnliches trifft auf die Gruppe der Alkylethercarboxylate $R^1$-O-$(CH_2C(R^2)HO)_x$-$(CH_2C(CH_3)HO)_y$-$(CH_2CH_2O)_z$-$CH_2CO_2M$ zu. Hier handelt es sich um Alkylenylethercarboxylate oder vorzugsweise Alkylethercarboxylate. Das Alkylethercarboxylat-Alkyletheralkohol-Gemisch wird vorzugsweise durch Carboxymethylierung des entsprechenden Alkylalkoxylates unter Verwendung von Chloressigsäuresalz bzw. Chloressigsäure jeweils in Gegenwart eines Alkalihydroxides hergestellt.

Dementsprechend betrifft die vorliegende Erfindung auch Verfahren zur Förderung von Erdöl, wobei das Tensidgemisch aus anionischem Tensid (A) der allgemeinen Formel (I) und nichtionischem Tensid (B) der allgemeinen Formel (II) unter zumindest einer der nachfolgenden Reaktionsbedingungen erhalten wird:

- das anionische Tensid (A) der allgemeinen Formel (I) wird durch Umsetzung des nichtionischen Tensides (B) der allgemeinen Formel (II), vorzugsweise unter Rührung, in einem Reaktor mit Chloressigsäure oder Chloressigsäure Natriumsalz in Gegenwart von Alkalihydroxid oder wässrigem Alkalihydroxid hergestellt, wobei entstehendes Reaktionswasser so entfernt wird, dass der Wassergehalt im Reaktor durch Anlegen von Vakuum und/oder durch Durchleitung von Stickstoff auf einem Wert von 0,2 bis 1,7% während der Carboxymethylierung gehalten wird;

- wässrige NaOH (vorzugsweise 40 - 80%ig) als Alkalimetallhydroxid und wässrige Chloressigsäure (vorzugsweise 75 - 85%ig) werden in einer Carboxymethylierung verwendet, wobei NaOH zur Chloressigsäure im Verhältnis 2 eq zu 1 eq bis 2,2 eq zu 1 eq verwendet wird; und

  das nichtionische Tensid (B) wird entweder über eine basenkatalysierte Alkoxylierung (bevorzugt < 5 mol% Base als Alkoxylierungskatalysator) unter Verwendung von KOH oder von NaOH oder von CsOH oder über eine Alkoxylierung unter Verwendung eines. Doppelmetallcyanid-Katalysators hergestellt und der Katalysator der Alkoxylierung nach Beendigung der Alkoxylierung nicht neutralisiert und nicht abgetrennt; und
  das nichtionische Tensid (B) der allgemeinen Formel (II) wird in der Carboxymethylierung in einem Reaktor vorgelegt und bei einer Temperatur von 60 - 110°C das Natriumhydroxid und die Chloressigsäure parallel über einen Zeitraum von 1 - 7 h zudosiert, wobei die Dosierung über den gesamten Zeitraum kontinuierlich oder in gleichmäßigen Portionen im Stundentakt erfolgt und wobei das stöchiometrische Verhältnis von nichtionischem Tensid (B) der allgemeinen Formel (II) zur Chloressigsäure 1 eq zu 1 eq bis 1 eq zu 1,9 eq (bevorzugt 1 eq:zu 1 eq bis 1 eq zu 1,5 eq) beträgt; und
  der Wassergehalt im Reaktor wird durch Anlegen von Vakuum und/oder durch Durchleitung von Stickstoff überwiegend auf einem durchschnittlichen Wert von 0,2 bis 1,7% während der Carboxymethylierung gehalten;

- NaOH als Alkalimetallhydroxid und Chloressigsäure Natriumsalz werden in einer Carboxymethylierung verwendet, wobei NaOH zum Chloressigsäure Natriumsalz.im Verhältnis 1 eq zu 1 eq bis 1 eq zu 1,9 eq verweridet wird; und

  das nichtionische Tensid (B) wird über eine basenkatalysierte Alkoxylierung (bevorzugt < 5 mol% Base als Alkoxylierungskatalysator) unter Verwendung von KOH oder von NaOH oder von CsOH hergestellt und in der Carboxymethylierung vorzugsweise unneutralisiert verwendet;

und

das nichtionische Tensid (B) der allgemeinen Formel (II) wird in der Carboxymethylierung in einem Reaktor zusammen mit NaOH bzw wässriger NaOH (vorzugsweise. 40 - 80%ig) vorgelegt, wobei das stöchiometrische Verhältnis von nichtionischem Tensid (B) der allgemeinen Formel (II) zur NaOH 1 eq zu 1 eq bis 1 eq zu 1,5 eq (vorzugsweise 1 eq zu 1 eq bis 1 eq zu 1,35 eq) beträgt, eine Temperatur von 60 - 110°C eingestellt wird, und das nichtionische Tensid (B) der allgemeinen. Formel (II) durch Anlegen von Vakuum und/oder Durchleiten von Stickstoff in das entsprechende Natriumsalz $R^1$-O-$(CH_2C(R^2)HO)_x$-$(CH_2C(CH_3)HO)_y$-$(CH_2CH_2O)_z$-Na überführt wird und bei einer Temperatur von 60 - 110°C das Chloressigsäure Natriumsalz komplett oder vorzugsweiseüber einen Zeitraum von 4 - 12. h zudosiert wird, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq (vorzugsweise 1 eq zu 1 eq bis 1 eq zu 1:5 eq) beträgt und wobei die Dosierung über den gesamten Zeitraum kontinuierlich oder in gleichmäßigen Portionen im Stundentakt erfolgt;
und

der Wassergehalt im Reaktor wird durch Anlegen von Vakuum und/oder durch Durchleitung von Stickstoff auf einem Wert von 0,2 bis 1,7% während der Carboxymethylierung gehalten;

- festes NaOH als Alkalimetallhydroxid und Chloressigsäure Natriumsalz werden in einer Carboxymethylierung verwendet, wobei NaOH zum Chloressigsäure, Natriumsalz im Verhältnis 1 eq zu 1 eq bis 1,1 eq zu 1 eq verwendet wird;
und

das nichtionische Tensid (B) wird über eine basenkatalysierte Alkoxylierung unter Verwendung von KOH oder von NaOH oder von CsOH hergestellt und dann mit Essigsäure neutralisiert und in einer Carboxymethylierung zusammen mit anfangs 0,5 - 1,5 % Wasser verwendet;
und

Chloressigsäure Natriumsalz und das nichtionische Tensid (B) der allgemeinen Formel (II) werden in der Carboxymethylierung in einem Reaktor zusammen vorgelegt, wobei das stöchiometrische Verhältnis von nichtionischem Tensid (B) der allgemeinen Formel (II) zum Chloressigsäure Natriumsaiz 1 eq zu 1 eq bis 1 eq zu 1,9 eq (bevorzugt 1 eq zu 1 eq bis 1 eq zu 1,5 eq) beträgt, und es wird bei einer Temperatur von 20 - 70°C das Natriumhydroxid über einen Zeitraum von 4 - 12 h zudosiert, wobei die Dosierung über den gesamten Zeitraum kontinuierlich oder in gleichmäßigen Portionen im Stundentakt erfolgt;
und

derWassergehalt im Reaktor wird durch Anlegen von Vakuum und/oder durch Durchleitung von Stickstoff :auf einem Wert von 0,2 bis 1,7% während der Carboxymethylierung gehalten;
festes NaOH als Alkalimetalihydroxid und Chloressigsäure Natriumsalz werden in einer Carboxymethylierung verwendet, wobei NaOH bzw im Falle eines basischen Alkoxylates die Summe aus NaOH und $R^1$-O-$(CH_2C(R^2)HO)_x$-$(CH_2C(CH_3)HO)_y$-$(CH_2CH_2O)_z$-K bzw. die Summe im Falle eines basischen Alkoxylates aus NaOH und $R^1$-O-$(CH_2C(R^2)HO)_x$-$(CH_2C(CH_3)HO)_y$-$(CH_2CH_2O)_z$-Na bzw. im Falle eines basischen Alkoxylates die Summe aus NaOH und $R^1$-O-$(CH_2C(R^2)HO)_x$-$(CH_2C(CH_3)HO)_y$-$(CH_2CH_2O)_z$-Cs zum Chloressigsäure Natriumsalz im Verhältnis 1,1 eq zu 1 eq bis 1 eq zu 1,5 eq (bevorzugt 1 eq zu 1 eq bis 1,1 eq zu 1 eq) beträgt, wobei das Verhältnis von nichtionischem Tensid (B) der allgemeinen Formel (II) zu NaOH von 1 eq zu 1 eq bis 1 eq.zu 1,5 eq beträgt;
und

das nichtionische Tensid (B) wird über eine basenkatalysierte Alkoxylierung unter Verwendung von KOH oder von NaOH oder von CsOH oder von einerMischung aus NaOH und KOH hergestellt und in der Carboxymethylierung entweder in neutralisierter und filtrierter (also salzfreier) Form oder in Form eines unneutralisierten basischen Alkoxylates (bevorzugt < 5 mol% Base als Alkoxylierungskatalysator) verwendet;
und

Chloressigsäure Natriumsalz und das nichtionische Tensid (B) der allgemeinen Formel (II) in der Carboxymethylierung werden in einem Reaktor zusammen vorgelegt, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq (bevorzugt 1 eq zu 1 eq bis 1 eq zu 1,5 eq, mehr bevorzugt 1.eq zu 1 eq bis 1 eq zu 1,35eq) beträgt, und bei einer Temperatur von 20 - 70°C das Natriumhydroxid über einen Zeitraum von 4 - 12 h zudosiert wird, wobei die Dosierung über den gesamten Zeitraum kontinuierlich oder in gleichmäßigen Portionen im Stundentakt erfolgt;
und

der Wassergehalt im Reaktor wird durch Anlegen von Vakuum und/oder durch Durchleitung von Stickstoff auf einem Wert von 0,2 bis 1,7% während der Carboxymethylierung gehalten;

- festes NaOH als Alkalimetallhydroxid und Chloressigsäure Natriumsalz werden in einer Carboxymethylierung verwendet, wobei NaOH zum Chloressigsäure Natriumsalz im Verhältnis 1 eq zu 1 eq bis 1,1 eq zu 1 eq verwendet wird; und

das nichtionische Tensid (B) wird über eine Alkoxylierung unter Verwendung von Doppelmetallcyanid-Katalyse hergestellt;
und
Chloressigsäure Natriumsalz und das nichtionische Tensid (B) der allgemeinen Formel (II) werden in der Carboxymethylierung im Reaktor zusammen vorgelegt, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq (bevorzugt 1 eq zu 1 eq bis 1 eq zu 1,5 eq) beträgt, und bei einer Temperatur von 20 - 70°C das Natriumhydroxid über einen Zeitraum von 4 - 12 h zudosiert wird, wobei die Dosierung über den gesamten Zeitraum kontinuierlich oder in gleichmäßigen Portionen im Stundentakt erfolgt;
und

der Wassergehalt im Reaktor wird durch Anlegen von Vakuum und/oder durch Durchleitung von Stickstoff auf einem Wert von 0,2 bis 1,7% während der Carboxymethylierung gehalten.

Ein weiterer Aspekt der vorliegenden Erfindung betrifft ein Konzentrat aus anionischem Tensid (A) der allgemeinen Formel (I) und nichtionischem Tensid (B) der allgemeinen Formel (II) enthaltend 20 Gew.-% bis 70 Gew.-% des Tensidgemisches, 10 Gew.-% bis 40 Gew.-% Wasser und 10 Gew.-% bis 40 Gew.-% eines Cosolvens, bezogen auf die Gesamtmenge des Konzentrats, wobei vorzugsweise

a) das Cosolvens aus der Gruppe der aliphatischen Alkohole mit 3 bis 8 Kohlenstoffatome oder aus der Gruppe der Alkylmonoethylenglykole, der Alkyldiethylenglykole oder der Alkyltriethylenglykole ausgewählt ist, wobei der Alkylrest ein aliphatischer Kohlenwasserstoffrest mit 3 bis 6 Kohlenstoffatomen ist;
und/oder

b) das Konzentrat bei 20°C fließfähig ist und bei 40°C eine Viskosität von <1500 mPas bei 200 Hz aufweist, wobei im Konzentrat ein molares Verhältnis von anionischem Tensid (A) zu nichtionischem Tensid (B) von 51 : 49 bis 92 : 8, bevorzugt von 70 : 30 bis 92 : 8 vorliegt.

Das Konzentrat kann beispielsweise neben dem Alkylethercarboxylat-Alkylalkoxylat-Gemisch noch Alkalichlorid und Diglykolsäure Dialkalisalz enthalten. Optional enthält es noch Chloressigsäurealkalisalz, Glykolsäure Alkalisalz, Wasser und/oder ein Cosolvens. Das Cosolvens ist beispielsweise Butylethlyenglykol, Butyldiethylenglykol oder Butyltriethylenglykol.
Vorzugsweise enthält das Konzentrat 0,5 bis 15 Gew.-% an einer Mischung enthaltend NaCl und Diglykolsäure Dinatriumsalz, wobei NaCl im Überschuss zu Diglykolsäure Dinatriumsalz vorhanden ist.
Weiterhin bevorzugt enthält das Konzentrat als Cosolvens Butyldiethylenolvkol.
Es wurde überraschend gefunden, dass ein Tensidgemisch mit einem molares Verhältnis von anionischem Tensid (A) zu nichtionischem Tensid (B) von 51 : 49 bis 92 : 8 zu Grenzflächenspannungen von <0,1 mN/m bei ≥55°C und Tensidkonzentrationen von < 0,5 Gew.-% führt. Normalerweise werden nahezu quantitative Anionisierungsgrade von Alkylalkoxyalten angestrebt, um eine gute Wirkung zu erzielen. Dies sind bedingt durch die technische Machbarkeit meist Werte von >92% bzw. ≥ 95%. Dementsprechend versteht der zustandige Durchschnittsfachmann die vorgenannten Werte als mitunter typischen Bereich für die anionische Modifikation. Dies kann im Fall der Alkylethercarboxylate: z.B. ein Carboxymethylierungsgrad von 95% sein. Wie nachfolgend ausgeführt wird, zeigt sich überraschenderweise ein mitunter deutlicher geringerer Carboxymethyliefungggrad als besser geeignet, Dies ist beispielsweiseauch für die Herstellung der Alkylethercarboxylate für die tertiäre Erdöfförderung von großer Bedeutung da weniger aufwendige, weniger energie intensive und damit preiswertere Prozesse verwendet werden können, um zu entsprechenden Carboxymethylierungsgraden zu gelangen. Von besonderem Interesse ist dabei ein Tensidgernisch mit einem molaren Verhältnis von anionischem Tensid (A) zu nichtionischem Tensid (B) von 70 : 30 bis 89 : 11 - insbesondere falls die Tenside auf einem Gemisch von primären linearen, gesättigten Alkylresten basieren, welche 16 und 18 Kohlenstoffatome aufweisen, und über Propylenoxy- und Ethylenoxy-Einheiten in der später beschriebenen Art und Weise verfügen, und insbesondere in Gegenwart eines Colsolvens wie z.B. Butyldiethylenglykol. Dadurch lassen sich überraschenderweise Grenzflächenspannungen von <0,01 mN/m bei >55°C erreichen, obwohl keine Base oder ein sehr unterschiedliches Tensid wie z.B. ein internes Olefinsulfonat zugesetzt wurde.
Dernzufolge ist bevorzugt, dass die Tensidformulierung in dem erfindungsgemäßen Verfahren zur Erdöfförderung beziehungsweise das erfindungsgemäße Konzentrat keine Base und/oder kein Olefinsulfonat bzw. kein Alkylbenzotsulfonat (bzw. kein anderes organisches Sulfonat) aufweist.

Nähere Ausführungen zur Erfindung

Die vorliegende Erfindung betrifft ein Verfahren zur Förderung von Erdöl aus unterirdischen Erdöllagerstätten, bei dem eine wässrige, salzhaltige Tensidformulierung umfassend eine Tensidmischung zwecks Erniedrigung der Grenzflächenspannung zwischen Öl und Wasser auf < 0,1 mN/m bei Lagerstättentemperatur, durch mindestens eine Injektionsbohrung in eine Erdöllagerstätte eingepresst und der Lagerstätte durch mindestens eine Produktionsbohrung Rohöl entnommen wird, dadurch gekennzeichnet, dass

a) die Erdöllagerstätte eine Lagerstättentemperatur von 55 °C bis 150 °C, ein Rohöl mit mehr als 20° API und ein Lagerstättenwasser mit mehr als 100 ppm zweiwertige Kationen aufweist; und

b) die Tensidmischung mindestens ein anionisches Tensid (A) der allgemeinen Formel (I)

$$R^1\text{-}O\text{-}(CH_2C(R^2)HO)_x\text{-}(CH_2C(CH_3)HO)_y\text{-}(CH_2CH_2O)_z\text{-}CH_2CO_2M \qquad (I)$$

und mindestens ein nichtionisches Tensid (B) der allgemeinen Formel (II)

$$R^1\text{-}O\text{-}(CH_2C(R^2)HO)_x\text{-}(CH_2C(CH_3)HO)_y\text{-}(CH_2CH_2O)_z\text{-}H \qquad (II)$$

enthält, wobei bei Injektion im Tensidgemisch ein molares Verhältnis von anionischem Tensid (A) zu nichtionischem Tensid (B) von 51 : 49 bis 92 : 8 vorliegt und das nichtionische Tensid (B) als Ausgangsmaterial für das anionische Tensid (A) dient, wobei

$R^1$    für einen primären linearen oder verzweigten, gesättigten oder ungesättigten, aliphatischen Kohlenwasserstoffrest mit 10 bis 36 Kohlenstoffatomen steht; und

$R^2$    für einen linearen gesättigten aliphatischen Kohlenwasserstoffrest mit 2 bis 14 Kohlenstoffatomen steht; und

M    für H, Na, K oder $NH_4$ steht; und

x    für eine Zahl von 0 bis 10 steht; und

y    für eine Zahl von 0 bis 50 steht; und

z    für eine Zahl von 1 bis 35 steht;

wobei die Summe aus x + y + z für eine Zahl von 3 bis 80 steht; und

wobei die Summe aus x + y für eine Zahl von > 0 steht, falls es sich bei $R^1$ um einen primären linearen, gesättigten oder ungesättigten, aliphatischen Kohlenwasserstoffrest mit 10 bis 36 Kohlenstoffatomen handelt; und

c) die Konzentration aller Tenside zusammen 0,05 bis 0,49 Gew. % bezüglich der Gesamtmenge der wässrigen, salzhaltigen Tensidformulierung beträgt.

$R^1$ ist ein primärer linearer oder verzweigter, gesättigter oder ungesättigter, aliphatischen Kohlenwasserstoffrest mit 10 bis 36 Kohlenstoffatomen (bevorzugt 10 bis 28, mehr bevorzugt 13 bis 20, besonders bevorzugt 16 bis 18 Kohlenstoffatome). In einer besonderen Ausführungsform werden gesättigte Kohlenwasserstoffreste verwendet. In einer besonders bevorzugten Ausführungsform werden primäre, lineare, gesättigte Kohlenwasserstoffreste mit 16 bis 18 Kohlenstoffatomen verwendet. In einer anderen bevorzugten Ausführungsform werden primäre, lineare, ungesättigte Kohlenwasserstoffreste mit 18 Kohlenstoffatomen verwendet. Dementsprechend handelt es sich bei $R^1$ um einen acyclischen Rest.

Im Falle von verzweigten Resten $R^1$ liegt der Verzweigungsgrad vorzugsweise im Bereich von 0,1 - 5 (bevorzugt von 0,1 - 2,5, besonders bevorzugt 0,5 bis 2,2). Der Begriff "Verzweigungsgrad" wird hierbei in prinzipiell bekannter Art und Weise als die Zahl der Methylgruppen in einem Molekül des Alkohols abzüglich 1 definiert. Der mittlere Verzweigungsgrad ist der statistische Mittelwert der Verzweigungsgrade aller Moleküle in einer Probe.

In einer bevorzugten Ausführungsform steht der verzweigte Rest $R^1$ für 2-Propylheptyl, Isodecyl, Isoundecyl, Isotridecyl, einen Alkylrest mit 12 bis 15 Kohlenstoffatomen und einem Verzweigungsrad von 0,1 - 0,5, einen Alkylrest mit 13 bis 15 Kohlenstoffatomen und einem Verzweigungsrad von 0,1 - 0,5 oder einen Alkylrest mit 16 bis 17 Kohlenstoffatomen und einem Verzweigungsrad von 1,1 - 1,9.

In einer weiteren bevorzugten Ausführungsform der Erfindung steht $R^1$ für einen primären verzweigten gesättigten aliphatischen Kohlenwasserstoffrest mit 16 bis 20 Kohlenstoffatomen, wobei es sich um 2-Hexyldecyl, 2-Octyldecyl, 2-Hexyldodecyl, 2-Octyldodecyl oder eine Mischung aus den genannten Kohlenwasserstoffresten handelt. Dies gilt insbesondere, wenn für x die Zahl 0 steht.

In einer weiteren bevorzugten Ausführungsform der Erfindung steht $R^1$ für einen primären verzweigten gesättigten aliphatischen Kohlenwasserstoffrest mit 24 bis 28 Kohlenstoffatomen, wobei es sich um 2-Decyltetradecyl, 2-Dodecylhexadecyl, 2-Decylhexadecyl oder 2-Dodecyltetradecyl bzw. eine Mischung aus den genannten Kohlenwasserstoffresten handelt. Dies gilt insbesondere, wenn für x die Zahl 0 steht.

In den oben definierten allgemeinen Formeln stehen x, y und z für natürliche Zahlen einschließlich 0, also für 0, 1, 2 usw. Für den Fachmann auf dem Gebiet der Polyalkoxylate ist jedoch klar, dass es sich bei dieser Definition um die Definition jeweils eines einzelnen Tensids handelt. Im Falle des Vorliegens von Tensidmischungen beziehungsweise Tensidformulierungen, die mehrere Tenside der allgemeinen Formel umfassen, handelt es sich bei den Zahlen x, y und z um Mittelwerte über alle Moleküle der Tenside, da bei der Alkoxylierung von Alkohol mit Ethylenoxid beziehungsweise Propylenoxid beziehungsweise höheren Alkylenoxide (z.B. Butylenoxid bis Hexadecenoxid) jeweils eine gewisse Verteilung von Kettenlängen erhalten wird. Diese Verteilung kann in prinzipiell bekannter Art und Weise durch die sogenannte Polydispersität D beschrieben werden. Bei $D = M_w/M_n$ handelt es sich um den Quotienten aus dem Gewichtsmittel der molaren Masse und dem Zahlenmittel der molaren Masse. Die Polydispersität kann mittels der dem Fachmann bekannten Methoden ermittelt werden, beispielsweise mittels Gelpermeations-Chromatographie.

Die Alkylenoxygruppen können statistisch verteilt, alternierend oder blockweise, d.h. in zwei, drei vier oder mehrerer Blöcken angeordnet sein.

Vorzugsweise sind die x (höheres Alkylen)-, y Propylen- und z Ethylenoxygruppen zumindest teilweise (vorzugsweise zahlenmäßig zu mindestens 50 %, mehr bevorzugt zu mindestens 60%, weiter mehr bevorzugt zu mindestens 70%, mehr bevorzugt zu mindestens 80%, mehr bevorzugt zu mindestens 90%, insbesondere vollständig) blockweise angeordnet.

Blockweise angeordnet bedeutet im Rahmen der vorliegenden Erfindung, dass mindestens ein Alkylenoxy eine Nachbargruppe Alkylenoxy aufweist, die chemisch identisch ist, so dass diese mindestens zwei Alkylenoxyeinheiten einen Block bilden.

Besonders bevorzugt tritt anschließend an den Rest $R^1$-O in Formel (I) bzw. (II) ein (höheres Alkylen)oxyblock mit x (höheres Alkylen)oxygruppen, gefolgt von einem Propylenoxyblock mit y Propylenoxygruppen und abschließend ein Ethylenoxyblock mit z Ethylenoxygruppen auf.

Vorzugsweise steht x für eine ganze Zahl von 0 bis 10 (bevorzugt 0 bis 7, besonders bevorzugt 0 bis 1, und ganz bevorzugt die Zahl 0; x kann auch für eine ganze Zahl von 1 bis 10 stehen) und/oder y für eine ganze Zahl von 0 bis 50 (bevorzugt 0 bis 40, mehr bevorzugt 3 bis 25, besonders bevorzugt 3 bis 10 oder 5 bis 15 und ganz besonders bevorzugt 5 bis 9) und/oder z für eine ganze Zahl von 1 bis 35 (bevorzugt 1 bis 30 oder 3 bis 30, mehr bevorzugt 1 bis 25, besonders bevorzugt 3 bis 24 und ganz besonders bevorzugt 4 bis 15 und insbesondere 5 bis 15), wobei die Summe aus x + y + z für eine Zahl von 3 bis 80, vorzugsweise von 3 bis 49 und insbesondere bevorzugt von 7 bis 24, steht, wobei die Summe aus x + y für eine Zahl von > 0 steht, falls es sich bei $R^1$ um einen primären linearen, gesättigten oder ungesättigten, aliphatischen Kohlenwasserstoffrest mit 10 bis 36 Kohlenstoffatomen handelt.

Eine weitere besondere Ausführungsform der Erfindung ist dadurch gekennzeichnet, dass

R$^1$  für einen primären linearen oder verzweigten, gesättigten oder ungesättigten, aliphatischen Kohlenwasserstoffrest mit 10 bis 36 Kohlenstoffatomen steht; und

x  für die Zahl 0 steht; und

y  für eine Zahl von 3 bis 25 steht (besonders bevorzugt 3 bis 10); und

z  für eine Zahl von 3 bis 30 (besonders bevorzugt 4 bis 15) steht;

und die Summe aus x + y + z für eine Zahl von 6 bis 55 (besonders bevorzugt 7 bis 25) steht.

Eine weitere besondere Ausführungsform der Erfindung ist dadurch gekennzeichnet, dass die Summe aus x + y + z für eine Zahl von 7 bis 24 steht.

In einer weiteren Ausführungsform der Erfindung ist das Verfahren dadurch gekennzeichnet, dass

R$^1$  für einen primären linearen oder verzweigten, gesättigten oder ungesättigten, aliphatischen Kohlenwasserstoffrest mit 10 bis 36 Kohlenstoffatomen steht; und

R$^2$  für einen linearen gesättigten aliphatischen Kohlenwasserstoffrest mit 2 bis 14 Kohlenstoffatomen (besonders bevorzugt 2) steht; und

M  für H, Na, K oder $NH_4$ steht; und

x    für eine Zahl von 1 bis 10 steht (besonders bevorzugt 1 bis 5); und

y    für eine Zahl von 0 bis 50 steht (besonders bevorzugt 1 bis 9); und

z    für eine Zahl von 3 bis 35 steht;

wobei Summe aus x + y + z für eine Zahl von 4 bis 80 (besonders bevorzugt 5 bis 35) steht.

In einer weiteren Ausführungsform der Erfindung ist das Verfahren dadurch gekennzeichnet, dass

$R^1$    für einen primären verzweigten, gesättigten, aliphatischen Kohlenwasserstoffrest mit 10 bis 36 Kohlenstoffatomen steht; und

$R^2$    für einen linearen gesättigten aliphatischen Kohlenwasserstoffrest mit 10 bis 14 Kohlenstoffatomen steht; und

M    für H, Na, K oder $NH_4$ steht; und

x    für eine Zahl von 1 steht; und

y    für die Zahl 0 bis 20 steht; und

z    für eine Zahl von 3 bis 35 steht;

wobei Summe aus x + y + z für eine Zahl von 4 bis 45 steht.

In einer weiteren bevorzugten Ausführungsform ist das Verfahren dadurch gekennzeichnet, dass

$R^1$    für einen primären verzweigten, gesättigten, aliphatischen Kohlenwasserstoffrest mit 10 bis 36 Kohlenstoffatomen steht; und

$R^2$    für einen linearen gesättigten aliphatischen Kohlenwasserstoffrest mit 2 bis 14 Kohlenstoffatomen steht; und

M    für H, Na, K oder $NH_4$ steht; und

x    für eine Zahl von 0 bis 10 (bevorzugt 0) steht; und

y    für die Zahl 0 steht; und

z    für eine Zahl von 3 bis 35 steht;

wobei die Summe aus x + y + z für eine Zahl von 3 bis 45 steht.

In einer weiteren Ausführungsform der Erfindung ist das Verfahren dadurch gekennzeichnet, dass

$R^1$    für einen primären verzweigten gesättigten aliphatischen Kohlenwasserstoffrest mit 16 bis 20 Kohlenstoffatomen steht, wobei es sich um 2-Hexyldecyl, 2-Octyldecyl, 2-Hexyldadecyl oder 2-Octyldodecyl bzw. eine Mischung aus den genannten Kohlenwasserstoffresten handelt; und

x    für die Zahl 0 steht.

In einer weiteren Ausführungsform der Erfindung ist das Verfahren dadurch gekennzeichnet, dass

$R^1$    für einen primären verzweigten gesättigten aliphatischen Kohlenwasserstoffrest mit 24 bis 28 Kohlenstoffatomen steht, wobei es sich um 2-Decyltetradecyl, 2-Dodecylhexadecyl; 2-Decylhexadecyl oder 2-Dodecyltetradecyl bzw. eine Mischung aus den genannten Kohlenwasserstoffresten handelt; und

x    für die Zahl 0 steht.

In einer anderen besonders bevorzugten Ausführungsform der Erfindung ist das Verfahren dadurch gekerinzeichnet, dass

$R^1$    für einen primären linearen, gesättigten, aliphatischen Kohlenwasserstoffrest mit 16 bzw. 18 Kohlenstoffatomen steht; und

$R^2$    für einen linearen gesättigten aliphatischen Kohlenwasserstoffrest mit 10 bis 14 Kohlenstoffatomen steht; und

M    für H, Na, K oder $NH_4$ steht; und

x    für die Zahl 0 steht; und

y    für die Zahl 3 bis 15 steht (bevorzugt 3 bis 10, besonders bevorzugt 5 bis 9); und

z    für eine Zahl von 3 bis 35 steht (bevorzugt 3 bis 25, besonders bevorzugt 8 bis 20);

wobei Summe aus x + y + z für eine Zahl von 6 bis 45 steht.

In obiger Formel (I) kann $M^+$ auch für ein Kation stehen, welches ausgewählt aus der Gruppe $Na^+$; $K^+$, $Li^+$, $NH_4^+$, $H^+$, ½ $Mg^{2+}$ und ½ $Ca^{2+}$ ist. Die bevorzugte Ausführungsform für $M^+$ ist jedoch $Na^+$, $K^+$ oder $NH_4^+$.

Die Erfindung ist dadurch gekennzeichnet, dass bei Injektion im Tensidgemisch bzw. im Konzentrat ein molares Verhältnis von anionischem Tensid (A) der allgemeinen Formel (I) zu nichtionischem Tensid (B) der allgemeinen Formel (II) von 51 : 49 bis 92 : 8 vorliegt und das nichtionische Tensid (B) als Ausgangsmaterial für anionische Tensid (A) dient. In einer bevorzugten Ausführung der Erfindung beträgt das Verhältnis 60 : 40 bis 92 : 8, mehr bevorzugt 70 : 30 bis 92 : 8, besonders bevorzugt 70 : 30 bis 89 : 11 und ganz besonders bevorzugt 71 : 29 bis 85 : 15.

Im Rahmen des erfindungsgemäßen Verfahrens zur tertiären Erdölförderung wird durch die Verwendung der erfindungsgemäßen Tensidmischung die Grenzflächenspannung zwischen Öl und Wasser auf werte < 0,1 mm, bevorzugt auf < 0,05 mN/m, besonders bevorzugt auf < 0,01 mN/m abgesenkt. Somit wird die Grenzflächenspannung zwischen Öl und Wasser auf Werte im Bereich von 0,1 mN/m bis 0,0001 mN/m, bevorzugt auf Werte im Bereich von 0,05 mN/m bis 0,0001 mN/m, besonders bevorzugt auf Werte im Bereich von 0,01 mN/m bis 0,0001 mN/m abgesenkt. Die angegebenen Werte beziehen sich auf die vorherrschende Lagerstättentemperatur.

In einer besonders bevorzugten Ausführung handelt es sich dabei um ein Winsor Typ III Mikroemulsions-Fluten.

In einer weiter bevorzugten Ausführung der Erfindung wird der wässrigen Tensidformulierung ein verdickendes Polymer aus der Gruppe der Biopolymere oder aus der Gruppe der Copolymere basierend auf Acrylamid zugesetzt. Das Copolymer kann beispielsweise u.a. aus folgenden Bausteinen bestehen:

- Acrylamid und Acrylsäure Natriumsalz
- Acrylamid und Acrylsäure Natriumsalz und N-Vinylpyrolidon
- Acrylamid und Acrylsäure Natriumsalz und AMPS (2-Acrylamido-2-methylpropansulfonsäure Natriumsalz)
- Acrylamid und Acrylsäure Natriumsalz und AMPS (2-Acrylamido-2-methylpropansulfonsäure Natriumsalz) und N-Vinylpyrolidon

Das Copolymer kann auch zusätzlich Assoziativgruppen enthalten. Bevorzugte Copolymere sind in EP 2432807 oder in WO 2014095621 beschrieben. Weitere bevorzugte Copolymere sind in US 7700702 beschrieben.

In einer besonders bevorzugten Ausführung handelt es sich dabei um ein Winsor Typ III Mikroemulsions-Polymer-Fluten).

In einer bevorzugten Ausführung der Erfindung ist das Verfahren dadurch gekennzeichnet, dass es sich bei der Förderung des Erdöls aus unterirdischen Erdöllagerstätten um ein Tensidflutverfahren bzw. um ein Tensid-Polymer-Flutverfahren und nicht um ein Alkali-Tensid-Polymer-Flutverfahren bzw. nicht um ein Flutverfahren handelt, bei dem Na$_2$CO$_3$ mit injiziert wird.

In einer besonders bevorzugten Ausführung der Erfindung ist das Verfahren dadurch gekennzeichnet, dass es sich bei der Förderung des Erdöls aus unterirdischen Erdöllagerstätten um ein Winsor Typ III Mikroemulsions-Fluten bzw. um ein Winsor Typ III Mikroemulsions-Polymer-Fluten und nicht um ein Alkali- Winsor Typ III Mikroemulsions -Polymer-Flutverfahren bzw. nicht um ein Flutverfahren handelt, bei dem Na$_2$CO$_3$ mit injiziert wird.

Bei dem Lagerstättengestein kann es sich um Sandstein oder Carbonat handeln.

In einer bevorzugten Ausführungsform der Erfindung ist die Lagerstätte eine Sandstein-Lagerstätte, dadurch gekennzeichnet, dass mehr als 70 Gewichtsprozent aus Sand (Quarz und/oder Feldspat) enthalten sind und bis zu 25 Gewichtsprozent an anderen Mineralien ausgewählt aus Kaolinit, Smectit, Illit, Chlorit, und/oder Pyrit enthalten sein können. Bevorzugt ist, dass mehr als 75 Gewichtsprozent aus Sand (Quarz und/oder Feldspat) enthalten sind und bis zu 20 Gewichtsprozent an anderen Mineralien ausgewählt aus Kaolinit, Smectit, Illit, Chlorit, und/oder Pyrit enthalten sein können. Besonders bevorzugt ist, dass mehr als 80 Gewichtsprozent aus Sand (Quarz und/oder Feldspat) enthalten sind und bis zu 15 Gewichtsprozent an anderen Mineralien ausgewählt aus Kaolinit, Smectit, Illit, Chlorit, und/oder Pyrit enthalten sein können.

Der API-Grad (American Petroleum Institute-Grad) ist eine konventionelle, in den USA gebräuchliche, Dichteeinheit für Rohöle. Sie wird weltweit zur Charakterisierung und als Qualitätsmaßstab von Rohöl verwendet. Der API-Grad ergibt sich aus der relativen Dichte $p_{rel}$ des Rohöls bei 60 °F (15,56 °C) bezogen auf Wasser durch

$$\text{API-Grad} = (141{,}5 \,/\, p_{rel}) - 131{,}5.$$

Erfindungsgemäß soll das Rohöl der Lagerstätte mindestens 20° API aufweisen. Bevorzugt sind mindestens 22° API. Besonders bevorzugt sind mindestens 25° API. Ganz besonders bevorzugt sind mindestens 30° API.

Die Lagerstättentemperatur der Erdöllagerstätte, in der das erfindungsgemäße Verfahren angewandt wird, beträgt erfindungsgemäß 55 bis 150 °C, insbesondere 55 °C bis 140 °C, bevorzugt 60 °C bis 130 °C, besonders bevorzugt 60 °C. bis 120 °C und beispielsweise 65 °C bis 110 °C.

Bei den Salzen im Lagerstättenwasser kann es sich insbesondere um Alkalimetallsalze sowie Erdalkalimetallsalze handeln. Beispiele typischer Kationen umfassen Na$^+$, K$^+$, Mg$^{2+}$ und/oder Ca$^{2+}$ und Beispiele typischer Anionen umfassen Chlorid, Bromid, Hydrogencarbonat, Sulfat oder Borat. Das Lagerstättenwasser soll erfindungsgemäß mindestens 100 ppm zweiwertige Kationen aufweisen. Die Menge an Erdalkalimetallionen kann bevorzugt 100 bis 53000 ppm, besonders bevorzugt 120 ppm bis 20000 ppm und ganz besonders bevorzugt 150 bis 6000 ppm betragen.

In der Regel sind zumindest eines oder mehrere Alkalimetallionen, insbesondere zumindest Na$^+$ vorhanden. Daneben können auch noch Erdalkalimetallionen vorhanden sein, wobei das Gewichtsverhältnis Alkalimetallionen / Erdalkalimetallionen in der Regel ≥ 2, bevorzugt ≥ 3 ist. Als Anionen sind in der Regel zumindest eines oder mehrere Halogenid-Ionen, insbesondere zumindest Cl⁻ vorhanden. In der Regel beträgt die Menge an Cl⁻ zumindest 50 Gew.-%, bevorzugt mindestens 80 Gew.-% bezüglich der Summe aller Anionen.

Die Gesamtmenge aller Salze im Lagerstättenwasser kann bis zu 350000 ppm (Gewichtsanteile) bezüglich der Summe aller Komponenten der Formulierung betragen, beispielsweise 2000 ppm bis 350000 ppm, insbesondere 5000 ppm bis 250000 ppm. Sofern Meerwasser zum Injizieren verwendet wird, kann der Salzgehalt 2000 ppm bis 40 000 ppm betragen und sofern Formationswasser verwendet wird, kann der Salzgehalt 5000 ppm bis 250000 ppm, beispielsweise 10 000 ppm bis 200000 ppm betragen.

Die Konzentration aller Tenside beträgt zusammen 0,05 bis 0,49 Gew. % bezüglich der Gesamtmenge der injizierten wässrigen Formulierung. Bevorzugt beträgt die Gesamttensidkonzentration 0,06 bis 0,39 Gew. %, besonders bevorzugt 0,08 bis 0,29 Gew. %.

Zum beanspruchten Tensidgemisch kann in einer weiteren bevorzugten Ausführungsform der Erfindung mindestens ein organisches Cosolvens zugegeben werden. Bevorzugt handelt es sich um vollständig mit Wasser mischbare Lösemittel, es können aber auch Lösemittel eingesetzt werden, welche nur teilweise mit Wasser mischbar sind. Im Regelfalle sollte die Löslichkeit mindestens 50 g/l bevorzugt mindestens 100 g/l betragen. Beispiele umfassen aliphatische C3- bis C8-Alkohole, bevorzugt C4- bis C6-Alkohole, weiter bevorzugt C3- bis C6-Alkohole, welche zu Erreichen einer ausreichenden Wasserlöslichkeit mit 1 bis 5, bevorzugt 1 bis 3 Ethylenoxyeinheiten substituiert sein können. Weitere Beispiele umfassen aliphatische Diole mit 2 bis 8 Kohlenstoffatomen, welche optional auch noch weiter substituiert sein können. Beispielsweise kann es sich um mindestens ein Cosolvens ausgewählt aus der Gruppe von 2-Butanol, 2 Methyl-1-Propanol, Butylethylenglykol, Butyldiethylenglykol oder Butyltriethylenglykol handeln.

Dementsprechend ist bevorzugt, dass die wässrige, salzhaltige Tensidformulierung neben dem anionischen Tensid (A) der allgemeinen Formel (I) und dem nichtionischen Tensid (B) der allgemeinen Formel (II) noch ein Cosolvens enthält, welches aus der Gruppe der aliphatischen Alkohole mit 3 bis 8 Kohlenstoffatomen oder aus der Gruppe der Alkylmonoethylenglykole, der Alkyldiethylenglykole oder der Alkyltriethylenglykole. ausgewählt ist, wobei der Alkylrest ein aliphatischer Kohlenwasserstoffrest mit 3 bis 6 Kohlenstoffatomen ist.

Besonders bevorzugt ist ein Verfahren, dadurch gekennzeichnet, dass das Gemisch aus anionischen Tensid (A) der allgemeinen Formel (I) und nichtionischem Tensid (B) der allgemeinen Formel (II) in Form eines Konzentrates enthaltend 20 Gew.-% bis 70 Gew.-% des Tensidgemisches, 10 Gew.-% bis 40 Gew.-% Wasser und 10 Gew.-% bis 40 Gew.-% eines Cosolvens, bezogen auf die Gesamtmenge des Konzentrats, bereit gestellt wird, wobei das Cosolvens aus der Gruppe der aliphatischen Alkohole mit 3 bis 8 Kohlenstoffatome oder aus der Gruppe der Alkylmonoethylenglykole, der Alkyldiethylenglykole oder der Alkyltriethylenglykole ausgewählt ist, wobei der Alkylrest ein aliphatischer Kohlenwasserstoffrest mit 3 bis 6 Kohlenstoffatomen ist, und das Konzentrat bei 20°C fließfähig ist und bei 40°C eine Viskosität von <1500 mPas bei 200 Hz aufweist.

Weiterhin ist bevorzugt, dass das Konzentrat 0,5 bis 20 Gew.-% (bevorzugt 1 bis 15, besonders bevorzugt 2 bis 10 Gew.-%) an einer Mischung enthaltend NaCl und Diglykolsäure Dinatriumsalz enthält, wobei NaCl im Überschuss zu Diglykolsäure Dinatriumsalz vorhanden ist.

Ganz besonders bevorzugt ist, dass das Konzentrat als Cosolvens Butyldiethylenglykol enthält.

Eine weitere Ausführung der Erfindung ist ein Verfahren, dadurch gekennzeichnet, dass wässrige, salzhaltige Tensidformulierung neben dem anionischen Tensid (A) der allgemeinen Formel (I) und dem nichtionischen Tensid (B) der allgemeinen Formel (II) noch weitere Tenside (C) enthält, die nicht identisch mit den Tensiden (A) oder (B) sind, und

- aus der Gruppe der Alkylbenzolsulfonate, alpha-Olefinsulfonate, interne Olefinsulfonate, Paraffinsulfonate sind, wobei die Tenside 14 bis 28 Kohlenstoffatome aufweisen; und / oder
- aus der Gruppe der Alkylethoxylate und Alkylpolyglucoside ausgewählt sind, wobei der jeweilige Alkylrest 8 bis 18 Kohlenstoffatome aufweist.

Besonders bevorzugt für die Tenside (C) sind Alkylpolyglucoside, welche aus primären linearen Fettalkoholen mit 8 bis 14 Kohlenstoffatomen aufgebaut wurden und einen Glucosidierungsgrad von 1 bis 2 aufweisen, und Alkylethoxylate, welche aus primären Alkoholen mit 10 bis 18 Kohlenstoffatomen aufgebaut wurden und einen Ethoxylierungsgrad von 3 bis 25 aufweisen.

Die nichtionischen Tenside (B) der allgemeinen Formel (II) können folgendermaßen aufgebaut werden. Zunächst bedarf es der Herstellung eines entsprechenden Alkohols, der beispielhaft wie folgt hergestellt werden kann:

- primäre lineare aliphatische Alkohole werden durch Hydrierung von Fettsäuren (hergestellt aus natürlichen pflanzlichen bzw. tierischen Fetten und Ölen) bzw. durch Hydrierung von Fettsäuremethylestern hergestellt. Alternativ können sie durch den Ziegler-Prozeß hergestellt werden, indem Ethylen an einem. Aluminiumkatalysator oligomerisiert wird und anschließend der Alkohol durch Zugabe von Wasser freigesetzt wird.
- primäre verzweigte aliphatische Alkohole können durch Hydroformylierung (Umsetzung mit Kohlenmonoxid und Wasserstoff) von Alkenen hergestellt werden (Oxoalkohole). Bei den Alkenen kann es sich um Oligomere von Ethylen, Propylen und/oder Butylen handeln. Bei der Oligomerisation können alpha-Olefine als auch Olefine mit interner Doppelbindung entstehen. Durch Olefinmetathese der Alkene sind weitere Variationen möglich. Ein weiterer Zugangsweg zu Alkenen ist die Dehydrierung von Alkanen und Paraffinen.

- primäre verzweigte aliphatische Alkohole können durch Guerbet-Reaktion (Dimerisierung. von Alkoholen unter Abspaltung von Wasser in Gegenwart von Base und bei erhöhter Temperatur) von primären Alkoholen hergestellt werden (Guerbetalkohole). Nähere Ausführungen finden sich bspw. in WO2013060670 wieder.

Anschließend erfolgt die Alkoxylierung der primären Alkohole $R^1OH$ zu den entsprechenden nichtionischen Tenside (B) der allgemeinen Formel (II). Die Durchführung derartiger Alkoxylierungen ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate beeinflussen kann.

Die Tenside gemäß der allgemeinen Formel können bevorzugt durch Basen-katalysierte Alkoxylierung hergestellt werden. Dabei kann der Alkohol $R^1OH$ in einem Druckreaktor mit Alkalimetallhydroxiden (z.B. NaOH, KOH, CsOH), bevorzugt Kaliumhydroxid, oder mit Alkalialkoholaten, wie beispielsweise Natriummethanolat oder Kaliummethanolat, versetzt werden. Durch verminderten Druck (beispielsweise < 100 mbar) und/oder Erhöhung der Temperatur (30 bis 150°C) kann noch in der Mischung vorhandenes Wasser (bzw. MeOH) abgezogen werden. Der Alkohol liegt danach als das entsprechende Alkoholat vor. Anschließend wird mit Inertgas (zum Beispiel Stickstoff) inertisiert und das oder die Alkylenoxid(e) bei Temperaturen von 60 bis 180°C bis zu einem Druck von maximal 20 bar (bevorzugt maximal 10 bar) schrittweise zugegeben. Gemäß einer bevorzugten Ausführung wird das Alkylenoxid anfangs bei 120°C zudosiert. Im Laufe der Reaktion steigt durch die freiwerdende Reaktionswärme die Temperatur auf bis zu 170°C an. Gemäß einer weiteren bevorzugten Ausführungsform der Erfindung wird dabei zuerst das höhere Alkylenoxid (z.B. Butylenoxid oder Hexadecenoxid) bei einer Temperatur im Bereich von 100 bis 145°C zugegeben, daraufhin das Propylenoxid bei einer Temperatur im Bereich von 100 bis 145°C zugegeben und anschließend das Ethylenoxid bei einer Temperatur im Bereich von 120 bis 165°C zugegeben. Am Ende der Reaktion kann der Katalysator beispielsweise durch Zugabe von Säure (beispielsweise Essigsäure oder Phosphorsäure) neutralisiert und bei Bedarf abfiltriert werden. Die Ware kann jedoch auch unneutralisiert bleiben.

Die Alkoxylierung der Alkohole $R^1OH$ kann aber auch mittels anderer Methoden vorgenommen werden, beispielsweise durch säurekatalysierte Alkoxylierung. Weiterhin können beispielsweise Doppelhydroxidtone, wie in DE 4325237 A1 beschrieben, eingesetzt werden oder es können Doppelmetallcyanid-Katalysatoren (DMC-Katalysatoren) verwendet werden. Geeignete DMC-Katalysatoren sind beispielsweise in der DE 10243361 A1, insbesondere in den Abschnitten [0029] bis [0041] sowie der dort zitierten Literatur, offenbart. Beispielsweise können Katalysatoren vom Zn-Co-Typ eingesetzt werden. Zur Durchführung der Reaktion kann der Alkohol $R^1OH$ mit dem Katalysator versetzt, die Mischung wie oben beschrieben entwässert und mit den Alkylenoxiden wie beschrieben umgesetzt werden. Es werden üblicherweise nicht mehr als 1000 ppm Katalysator bezüglich der Mischung eingesetzt und der Katalysator kann aufgrund dieser geringen Menge im Produkt verbleiben. Die Katalysatormenge kann in der Regel geringer sein als 1.000 ppm, beispielsweise 250 ppm oder weniger.

Die anionischen Tenside (A) der allgemeinen Formel (I) können aus den nichtionischen Tenside (B) der allgemeinen Formel (II) hergestellt werden. Die Herstellung erfolgt bevorzugt mittels eines Verfahrens, dadurch gekennzeichnet, dass das anionische Tensid (A) der allgemeinen Formel (I) durch Umsetzung des nichtionischen Tensides (B) der allgemeinen Formel (II) unter Rührung mit Chloressigsäure oder Chloressigsäure Natriumsalz in Gegenwart von Alkalihydroxid oder wässrigem Alkalihydroxid hergestellt wird, wobei Reaktionswasser so entfernt wird, dass der Wassergehalt im Reaktor durch Anlegen von Vakuum und/oder durch Durchleitung von Stickstoff auf einem Wert von 0,2 bis 1,7% (bevorzugt 0,3 bis 1,5%) während der Carboxymethylierung gehalten wird. Besonders bevorzugt wird das Verfahren für Tenside, welche Propylenoxy-Einheiten enthalten. Noch mehr bevorzugt, ist wenn es sich zusätzlich um Tenside handelt, die auf linearem C16C18-Fettalkohol basieren.

Erfindungsgemäß ist ein ebenso ein Konzentrat, wie dies oben bereits ausgeführt wurde, aus anionischem Tensid (A) der allgemeinen Formel (I) und nichtionischem Tensid B) der allgemeinen Formel (II), wobei im Konzentrat ein molares Verhältnis von anionischem Tensid (A) zu nichtionischem Tensid (B) von 51 : 49 bis 92 : 8 (bevorzugt 70 : 30 bis 89 : 11) vorliegt.

Verfahren zur Erdölförderung

Das oben beschriebene Verfahren zur Erdölförderung mit Hilfe des beanspruchten Tensidgemisches aus anionischem Tensid (A) der allgemeinen Formel (I) und dem nichtionischen Tensid (B) der allgemeinen Formel (II) kann optional mit weiteren Verfahren ergänzt durchgeführt werden. So kann optional ein Polymer oder ein Schaum zur Mobilitätskontrolle zugesetzt werden. Das Polymer kann optional zusammen mit der Tensidformulierung und nachfolgend der Tensidformulierung in die Lagerstätte injiziert werden. Es kann aber auch nur mit der Tensidformulierung oder nur nach der Tensidformulierung injiziert werden. Bei den Polymeren kann es sich um Copolymere basierend auf Acrylamid oder ein Biopolymer handeln. Das Copolymer kann beispielsweise u.a. aus folgenden Bausteinen bestehen:

- Acrylamid und Acrylsäure Natriumsalz
- Acrylamid und Acrylsäure Natriumsalz und N-Vinylpyrolidon
- Acrylamid und Acrylsäure Natriumsalz und AMPS (2-Acrylamido-2-methylpropansulfonsäure Natriumsalz)
- Acrylamid und Acrylsäure Natriumsalz und AMPS (2-Acrylamido-2-methylpropansulfonsäure Natriumsalz) und N-Vinylpyrolidon

Das Copolymer kann auch zusätzlich Assoziativgruppen enthalten. Verwendbare Copolymere sind in EP 2432807 oder in WO 2014095621 beschrieben. Weitere verwendbare Copolymere sind in US 7700702 beschrieben.

Zur Stabilisierung der Polymere können weitere Additive wie Biozide, Stabilisatoren, Radikalfänger und Inhibitoren hinzugesetzt werden.

Der Schaum kann an der Lagerstättenoberfläche oder in situ in der Lagerstätte durch Injektion von Gasen wie Stickstoff oder gasförmigen Kohlenwasserstoffen wie Methan, Ethan oder Propan erzeugt werden. Zur Erzeugung und Stabilisierung des Schaumes kann das beanspruchte Tensidgemisch oder auch weitere Tenside hinzugesetzt werden.

Optional kann auch eine Base wie Alkalihydroxid oder Alkalicarbonat zu der Tensidformulierung zugesetzt werden, wobei es kombiniert wird mit Komplexbildnern oder Polyacrylaten, um Ausfällungen infolge der Anwesenheit von mehrwertigen Kationen zu vermeiden. Weiterhin kann zur Formulierung auch ein Cosolvens zugesetzt werden.

Dadurch ergeben sich folgende (kombinierte) Verfahren:

- Tensidfluten
- Winsor-Typ III Mikroemulsionsfluten
- Tensid-Polymer-Fluten
- Winsor-Typ III Mikroemulsions-Polymer-Fluten
- Alkali-Tensid-Polymer-Fluten
- Alkali-Winsor-Typ III Mikroemulsions-Polymer-Fluten
- Tensid-Schaum-Fluten
- Winsor-Typ III Mikroemulsions-Schaum-Fluten
- Alkali-Tensid-Schaum-Fluten
- Alkali-Winsor-Typ III Mikroemulsions-Schaum-Fluten

In einer bevorzugten Ausführungsform der Erfindung wird eines der ersten vier Verfahren angewendet (Tensidfluten, Winsor-Typ III Mikroemulsionsfluten, Tensid-Polymer-Fluten oder Winsor-Typ III Mikroemulsions-Polymer-Fluten). Besonders bevorzugt ist das Winsor-Typ III Mikroemulsions-Polymer-Fluten.

Beim Winsor-Typ III Mikroemulsions-Polymer-Fluten wird im ersten Schritt eine Tensidformulierung mit oder ohne Polymer injiziert. Die Tensidformulierung bewirkt bei Kontakt mit Rohöl die Ausbildung einer Winsor-Typ III Mikroemulsion. Im zweiten Schritt wird nur Polymer injiziert. Es können jeweils im ersten Schritt wässrige Formulierungen mit höherer Salinität als im zweiten Schritt eingesetzt werden. Alternativ können beide Schritte auch mit Wasser gleicher Salinität durchgeführt werden.

In einer Ausführungsform kann man die Verfahren natürlich auch mit Wasserfluten kombinieren. Beim Wasserfluten wird Wasser durch mindestens eine Injektionsbohrung in eine Erdöllagerstätte injiziert und der Lagerstätte durch mindestens eine Produktionsbohrung Rohöl entnommen. Bei dem Wasser kann es sich um Süßwasser oder salzhaltige Wässer wie Meerwasser oder Lagerstättenwasser handeln. Nach dem Wasserfluten kann das erfindungsgemäße Verfahren angewandt werden.

Zur Ausführung des erfindungsgemäßen Verfahrens werden in die Erdöllagerstätte mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen. Durch die mindestens eine Injektionsbohrung wird eine wässrige Formulierung der beschriebenen wasserlöslichen Komponenten in die Erdöllagerstätte injiziert und der Lagerstätte durch mindestens eine Produktionsbohrung Erdöl entnommen. Durch den durch die eingepresste wässrige Formulierung, die sogenannte "Flut", erzeugten Druck, fließt das Erdöl in Richtung der Produktionsbohrung und wird über die Produktionsbohrung gefördert. Mit dem Begriff "Erdöl" ist in diesem Zusammenhang selbstverständlich nicht nur phasenreines Öl gemeint, sondern der Begriff umfasst auch die üblichen. Rohöl-Wasser-Emulsionen. Für den Fachmann ist klar, dass eine Erdöllagerstätte auch eine gewisse Temperaturverteilung aufweisen kann. Die genannte Lagerstättentemperatur bezieht sich auf den Bereich der Lagerstätte zwischen den Injektions- und Produktionsbohrungen, der vom Fluten mit wässrigen Lösungen erfasst wird. Methoden zur Ermittlung der Temperaturverteilung einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen bestimmt, wobei man bei den Simulationsrechnungen auch in die Formation eingebrachte Wärmemengen sowie die aus der Formation abgeführte Wärmemengen berücksichtigt.

Das erfindungsgemäße Verfahren kann insbesondere bei Erdöllagerstätten mit einer durchschnittlichen Porosität von 5 mD bis 4 D, bevorzugt 50 mD bis 2 D und besonders bevorzugt 200 mD bis 1 D angewandt werden. Die Permeabilität einer Erdölformation wird vom Fachmann in der Einheit "Darcy" (abgekürzt "D" bzw. "mD" für "Millidarcy") angegeben und kann aus der Fließgeschwindigkeit einer flüssigen Phase in der Erdölformation in Abhängigkeit der angelegten Druckdifferenz bestimmt werden. Die Fließgeschwindigkeit kann in Kernflutversuchen mit der Formation entnommenen Bohrkernen bestimmt werden. Einzelheiten hierzu finden sich beispielsweise in K. Weggen, G. Pusch, H. Rischmüller in "Oil and Gas", Seiten 37 ff., Ullmann's Encyclopedia of Industrial Chemistry, Online-Ausgabe, Wiley-VCH, Weinheim 2010. Für den Fachmann ist klar, dass die Permeabilität in einer Erdöllagerstätte nicht homogen sein muss, sondern im Allgemeinen eine gewisse Verteilung aufweist und es sich dementsprechend bei der Angabe der Permeabilität einer Erdöllagerstätte um eine durchschnittliche Permeabilität handelt.

Zur Ausführung des Verfahrens wird eine wässrige Formulierung eingesetzt, welche neben Wasser mindestens das beschriebene Tensidgemisch aus anionischen Tensid (A) der allgemeinen Formel (I) und dem nichtionischen Tensid (B) der allgemeinen Formel (II) umfasst.

Die Formulierung wird in Salzen enthaltendem Wasser angesetzt. Selbstverständlich kann es sich um Mischungen verschiedener Salze handeln. Beispielsweise kann Meerwasser zum Ansetzen der wässrigen Formulierung verwendet werden oder es kann gefördertes Formationswasser verwendet werden, welches auf diese Art und Weise wieder verwendet wird. Bei Förderplattformen im Meer wird die Formulierung in der Regel in Meerwasser angesetzt. Bei Fördereinrichtungen an Land kann das Polymer vorteilhaft zunächst in Süßwasser gelöst und die erhaltene Lösung mit Formationswasser auf die gewünschte Einsatzkonzentration verdünnt werden. Das Lagerstättenwasser bzw. das Meerwasser soll mindestens 100 ppm zweiwertige Kationen aufweisen.

Bei den Salzen kann es sich insbesondere um Alkalimetallsalze sowie Erdalkalimetallsalze handeln. Beispiele typischer Kationen umfassen $Na^+$, $K^+$, $Mg^{2+}$ und/oder $Ca^{2+}$ und Beispiele typischer Anionen umfassen Chlorid, Bromid, Hydrogencarbonat, Sulfat oder Borat.

In der Regel sind zumindest eines oder mehrere Alkalimetallionen, insbesondere zumindest $Na^+$ vorhanden. Daneben sind auch noch Erdalkalimetallionen vorhanden sein, wobei das Gewichtsverhältnis Alkalimetallionen / Erdalkalimetallionen in der Regel $\geq 2$, bevorzugt $\geq 3$ ist. Als Anionen sind in der Regel zumindest eines oder mehrere Halogenid-Ionen, insbesondere zumindest $Cl^-$ vorhanden. In der Regel beträgt die Menge an $Cl^-$ zumindest 50 Gew.-%, bevorzugt mindestens 80 Gew.-% bezüglich der Summe aller Anionen.

Die Gesamtmenge aller Salze in der wässrigen Formulierung kann bis zu 350000 ppm (Gewichtsanteile) bezüglich der Summe aller Komponenten der Formulierung betragen, beispielsweise 2000 ppm bis 350000 ppm, insbesondere 5000 ppm bis 250000 ppm. Sofern Meerwasser zum Ansetzen der Formulierung verwendet wird, kann der Salzgehalt 2000 ppm bis 40 000 ppm betragen und sofern Formationswasser verwendet wird, kann der Salzgehalt 5000 ppm bis 250000 ppm, beispielsweise 10 000 ppm bis 200000 ppm betragen. Die Menge an Erdalkalimetallionen kann bevorzugt 100 bis 53000 ppm, besonders bevorzugt 120 ppm bis 20000 ppm und ganz besonders bevorzugt 150 bis 6000 ppm betragen.

Additive können beispielsweise eingesetzt werden, um unerwünschte Nebeneffekte, z.B. das unerwünschte Ausfallen von Salzen zu verhindern oder um das eingesetzte Polymer zu stabilisieren. Die beim Fluten in die Formation injizierten Polymer-haltigen Formulierungen strömen nur sehr langsam in Richtung der Produktionsbohrung, d.h. sie verbleiben längere Zeit unter Formationsbedingungen in der Formation. Ein Abbau des Polymers hat eine Abnahme der Viskosität zur Folge. Dies muss entweder durch die Verwendung einer höheren Menge an Polymer berücksichtigt werden oder aber es muss in Kauf genommen werden, dass sich die Effizienz des Verfahrens verschlechtert. In jedem Falle verschlechtert sich die Wirtschaftlichkeit des Verfahrens. Für den Abbau des Polymers kann eine Vielzahl von Mechanismen verantwortlich sein. Mittels geeigneter Additive kann man den Polymerabbau je nach Bedingungen verhindern oder zumindest verzögern.

In einer Ausführungsform der Erfindung umfasst die verwendete wässrige Formulierung mindestens einen Sauerstofffänger. Sauerstofffänger reagieren mit Sauerstoff, der eventuell in der wässrigen Formulierung enthalten sein kann und verhindern so, dass der Sauerstoff das Polymer oder Polyethergruppen angreifen kann. Beispiele für Sauerstofffänger umfassen Sulfite, wie beispielsweise $Na_2SO_3$, Bisulfite, Phosphite, Hypophosphite oder Dithionite.

In einer weiteren Ausführungsform der Erfindung umfasst die verwendete wässrige Formulierung mindestens einen Radikalfänger. Radikalfänger können eingesetzt werden, um dem Abbau des Polymers durch Radikale entgegenzuwirken. Derartige Verbindungen können mit Radikalen stabile Verbindungen bilden. Radikalfänger sind dem Fachmann prinzipiell bekannt. Beispielsweise kann es sich um Stabilisatoren ausgewählt aus der Gruppe von schwefelhaltigen Verbindungen, sekundären Aminen, sterisch gehinderten Aminen, N-Oxiden, Nitrosoverbindungen, aromatischen Hydroxyverbindungen oder Ketone handeln. Beispiele von Schwefelverbindungen umfassen Thioharnstoff, substituierte Thioharnstoffe wie N,N'-Dimethylthioharnstoff, N,N'-Diethylthioharnstoff, N,N'-Diphenylthioharnstoff, Thiocyanate, wie beispielsweise Ammoniumthiocyant oder Kaliumthiocyanat, Tetramethylthiuramdisulfid oder Mercaptane wie 2-Mercaptobenzothiazol oder 2-Mercaptobenzimidazol bzw. deren Salze, beispielsweise die Natriumsalze, Natriumdimethyldithiocarbamat, 2,2'-Dithiobis(benzthiazol), 4,4'-Thiobis(6-t-butyl-m-Kresol). Weitere Beispiele umfassen Phenoxazin, Salze von carboxyliertem Phenoxazin, carboxyliertes Phenooxazin, Methylenblau, Dicyandiamid, Guanindin, Cyanamid, Paramethoxyphenol, Natriumsalz von Paramethoxyphenol, 2-Methylhydrochinon, Salze von 2-Methylhydrochinon, 2,6-Di-t-butyl-4-methylphenol, Butylhydroxyanisol, 8-Hydroxychinolin, 2,5-Di(t-Amyl)hydrochinon, 5-Hydroxy-1,4-Naphtochinon, 2,5-Di(t-amyl)hydrochinon, Dimedon, Propyl-3,4,5-trihydroxybenzoat, Ammonium N-Nitrosophenylhydroxylamin, 4-Hydroxy-2,2,6,6-tetramethyoxylpiperidin, (N-(1,3-Dimethylbutyl)N'-phenyl-p-phenylendiamin oder 1,2,2,6,6-Pentamethyl-4-piperidinol. Bevorzugt handelt es sich um sterisch gehinderte Amine wie 1,2,2,6,6-Pentamethyl-4-piperidinol und Schwefelverbindungen, Mercaptoverbindungen, insbesondere 2-Mercaptobenzothiazol oder 2-Mercaptobenzimidazol bzw. deren Salze wie beispielsweise die Natriumsalze und besonders bevorzugt sind 2-Mercaptobenzothiazol bzw. Salze davon.

In einer weiteren. Ausführungsform der Erfindung umfasst die verwendete wässrige Formulierung mindestens ein Opferreagens. Opferreagenzien können mit Radikalen reagieren und sie somit unschädlich machen. Beispiele umfassen insbesondere Alkohole. Alkohole können durch Radikale oxidiert werden, beispielsweise zu Ketonen. Beispiele umfassen Monoalkohole und Polyalkohole wie beispielsweise 1-Propanol, 2-Propanol, Propylenglykol, Glycerin, Butandiol oder Pentaerythritol.

In einer weiteren Ausführungsform der Erfindung umfasst die verwendete wässrige Formulierung mindestens einen Komplexbildner. Selbstverständlich können Mischungen verschiedener Komplexbildner eingesetzt werden. Bei Komplexbildnern handelt es sich im Allgemeinen um anionische Verbindungen, welche insbesondere zwei und höherwertige Metallionen, beispielsweise $Mg^{2+}$ oder $Ca^{2+}$ komplexieren können. Auf diese Art und Weise können beispielsweise eventuell unerwünschte Ausfällungen vermieden werden. Weiterhin kann verhindert werden, dass eventuell vorhandene mehrwertige Metallionen das Polymer über vorhandene saure Gruppen, insbesondere COOH-Gruppe vernetzen. Bei den Komplexbildnern kann es sich insbesondere um Carbonsäure oder Phosphonsäurederivate handeln. Beispiele von Komplexbildnern umfassen Ethylendiamintetraessigsäure (EDTA), Ethylendiamindibernsteinsäure (EDDS), Diethylentriaminpentamethylenphosphonsäure (DTPMP), Methylglycindiessigsäure (MGDA) oder Nitrilotriessigsäure (NTA). Selbstverständlich kann es sich auch jeweils um die entsprechenden Salze handeln, beispielsweise die entsprechenden Natriumsalze. In einer besonders bevorzugten Ausführungsform der Erfindung wird MGDA als Komplexbildner verwendet.

Als Alternative oder zusätzlich zu den oben genannten Chelatbildnern können auch Polyacrylate eingesetzt werden.

In einer weiteren Ausführungsform der Erfindung enthält die Formulierung mindestens ein organisches Cosolvens. Bevorzugt handelt es sich um vollständig mit Wasser mischbare Lösemittel, es können aber auch Lösemittel eingesetzt werden, welche nur teilweise mit Wasser mischbar sind. Im Regelfalle sollte die Löslichkeit mindestens 50 g/l bevorzugt mindestens 100 g/l betragen. Beispiele umfassen aliphatische $C_4$- bis $C_8$-Alkohole, bevorzugt $C_4$- bis $C_6$-Alkohole, welche zu Erreichen einer ausreichenden Wasserlöslichkeit mit 1 bis 5, bevorzugt 1 bis 3 Ethylenoxyeinheiten substituiert sein können. Weitere Beispiele umfassen aliphatische Diole mit 2 bis 8 Kohlenstoffatomen, welche optional auch noch weiter substituiert sein können. Beispielsweise kann es sich um mindestens ein Cosolvens ausgewählt aus der Gruppe von 2-Butanol, 2 Methyl-1-Propanol, Butylglykol, Butyldiglykol oder Butyltriglykol handeln.

Die Konzentration des Polymers in der wässrigen Formulierung wird so festgelegt, dass die wässrige Formulierung die gewünschte Viskosität für den Einsatzzweck aufweist. Die Viskosität der Formulierung sollte in der Regel mindestens 5 mPas (gemessen bei 25 °C und einer Scherrate von 7 $s^{-1}$) betragen, bevorzugt mindestens 10 mPas.

Erfindungsgemäß beträgt die Konzentration des Polymers in der Formulierung 0,02 bis 2 Gew.-% bezüglich der Summe aller Komponenten der wässrigen Formulierung. Bevorzugt beträgt die Menge 0,05 bis 0,5 Gew.-%, besonders bevorzugt 0,1 bis 0,3 Gew.-% und beispielsweise 0,1 bis 0,2 Gew.-%.

Die wässrige Polymer enthaltende Formulierung kann hergestellt werden, indem man das Wasser vorlegt, das Polymer als Pulver einstreut und mit dem Wasser vermischt. Vorrichtungen zum Lösen von Polymeren und Injizieren der wässrigen Lösungen in unterirdische Formationen sind dem Fachmann prinzipiell bekannt.

Das Injizieren der wässrigen Formulierung kann mittels üblicher Vorrichtungen vorgenommen werden. Die Formulierung kann mittels üblicher Pumpen in eine oder mehrere Injektionsbohrungen injiziert werden. Die Injektionsbohrungen sind üblicherweise mit einzementierten Stahlrohren ausgekleidet, und die Stahlrohre sind an der gewünschten Stelle perforiert. Die Formulierung tritt durch die Perforation aus der Injektionsbohrung in die Erdölformation ein. Über den mittels der Pumpen angelegten Druck wird in prinzipiell bekannter Art und Weise die Strömungsgeschwindigkeit der Formulierung und damit auch die Scherbelastung festgelegt, mit der die wässrige Formulierung in die Formation eintritt. Die Scherbelastung beim Eintritt in die Formation kann vom Fachmann in prinzipiell bekannter Art und Weise auf Basis des Gesetzes von Hagen-Poiseuille unter Verwendung der beim Eintritt in die Formation durchströmten Fläche, dem mittleren Porenradius und dem Volumenstrom errechnet werden. Die durchschnittliche Permeabilität der Formation kann in prinzipiell bekannter Art und Weise wie beschrieben ermittelt werden. Die Scherbelastung ist naturgemäß umso größer, je größer der in die Formation injizierte Volumenstrom an wässriger Polymerformulierung ist.

Die Geschwindigkeit der Injektion kann vom Fachmann je nach den Verhältnissen in der Formation festgelegt werden. Bevorzugt beträgt die Scherrate beim Eintritt der wässrigen Polymerformulierung in die Formation mindestens 30 000 $s^{-1}$, bevorzugt mindestens 60 000 $s^{-1}$ und besonders bevorzugt mindestens 90 000 $s^{-1}$.

In einer Ausführungsform der Erfindung handelt es sich bei erfindungsgemäßen Verfahren um ein Flutverfahren, in welchem eine Base und üblicherweise ein Komplexbildner bzw. ein Polyacrylat verwendet wird. Dies ist üblicherweise der Fall, wenn der Anteil an mehrwertigen Kationen im Lagerstättenwasser gering ist (100 - 400 ppm). Eine Ausnahme bildet Natriummetaborat, welche als Base auch ohne Komplexbildner in Gegenwart signifikanter mengen an mehrwertigen Kationen eingesetzt werden kann.

Der pH-Wert der wässrigen Formulierung beträgt in der Regel mindestens 8, bevorzugt mindestens 9, insbesondere 9 bis 13, bevorzugt 10 bis 12 und beispielsweise 10,5 bis 11.

Grundsätzlich kann jede Art von Base eingesetzt werden, mit denen sich der gewünschte pH-Wert erreichen lässt und der Fachmann trifft eine geeignete Auswahl. Beispiele geeigneter Basen umfassen Alkalimetallhydroxide, beispielsweise NaOH oder KOH oder Alkalimetallcarbonate, beispielsweise $Na_2CO_3$. Weiterhin kann es sich bei den Basen um basische Salze handeln, beispielsweise Alkalimetallsalze von Carbonsäuren, Phosphorsäure oder insbesondere saure Gruppen umfassende Komplexbildner in der Basenform wie $EDTANa_4$.

Erdöl enthält üblicherweise auch verschiedene Carbonsäuren wie beispielsweise Naphthensäuren, welche durch die basische Formulierung in die entsprechenden Salze übergeführt werden. Die Salze wirken als natürlich vorkommende Tenside und unterstützen so den Prozess der Entölung.

Mit Komplexbildnern können vorteilhaft unerwünschte Ausfällungen von schwerlöslichen Salzen, insbesondere Ca- und Mg-Salzen verhindert werden, wenn die alkalische wässrige Formulierung mit den entsprechenden Metallionen in Kontakt kommt und/oder entsprechende Salze enthaltende wässrige Formulierungen für das Verfahren eingesetzt werden. Die Menge von Komplexbildnern wird vom Fachmann gewählt. Sie kann beispielsweise 0,1 bis 4 Gew.-% bezüglich der Summe aller Komponenten der wässrigen Formulierung betragen.

In einer besonders bevorzugten Ausführungsform der Erfindung wird jedoch ein Verfahren zur Erdölförderung angewendet, in welchem keine Base (z.B. Alkalihydroxide oder Alkalicarbonate) verwendet wird.

Die folgenden Beispiele sollen die Erfindung und ihre Vorteile näher illustrieren:

Herstellung der Alkyletheralkohole (B):

Verwendete Abkürzungen:

EO     Ethylenoxy
PO     Propylenoxy
BuO     1,2-Butylenoxy

Für die Synthese wurden die nachfolgenden Alkohole eingesetzt:

| Alkohol | Beschreibung |
|---|---|
| $C_{16}C_{18}$ | Kommerziell erhältliches Talgfettalkoholgemisch bestehend aus linearen gesättigten primären $C_{16}H_{33}$-OH und $C_{18}H_{37}$-OH |
| $C_{16}C_{18}C_{20}$-Guerbet | Gemisch aus Alkoholen erhalten aus einer Guerbetreaktion von n-Octanol und n-Decanol: 2-Hexyldecan-1-ol, 2-Octyldecan-1-ol, 2-Hexyldodecan-1-ol oder 2-Octyldodecan-1-ol |
| 2PH | Kommerziell erhältlicher Guerbetalkohol 2-Propylheptan-1-ol $C_{10}H_{21}$-OH |

Alkyletheralkohol 1: C16C18 - 3 PO - 10 EO - H per KOH-Katalyse, entsalzt entspricht Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}/C_{18}H_{37}$, x = 0, y = 3 und z =10
In einem 2 l Druckautoklaven mit Ankerrührer wurden 384 g (1,5 mol) C16C18-Alkohol vorgelegt und der Rührer eingeschaltet. Danach wurden 5,2 g 50 %ige wässrige KOH-Lösung (0,046 mol KOH, 2,6 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 262 g (4,5 mol) Propylenoxid innerhalb von 2 h zudosiert bei 130 °C, $p_{max}$ betrug 4,0 bar absolut. Es wurde 2 h bei 130°C nachgerührt. Es wurden 661 g (15 mol) Ethylenoxid innerhalb von 5 h bei 130 °C zudosiert, $p_{max}$ betrug 6,0 bar absolut. Man ließ 1 h ausreagieren bis der Druck konstant war, kühlte auf 100° C ab und entspannfe auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Es wurden 3 Gewichtsprozent Ambosol (Silikat zur Neutralisation) zugegeben, und für 3 h bei 100°C und <10 mbar gerührt. Das Vakuum wurde mit $N_2$ aufgehoben und das Reaktionsgemisch über einen Seitz K900 Filter druckfiltriert. Die Analytik (Massenspektrum, GPC, 1H-NMR in $CDCl_3$, 1H-NMR in MeOD) bestätigte die mittlere Zusammensetzung C16C18 - 3 PO - 10 EO - H.

Alkyletheralkohol 2: C16C18 - 3 PO - 10 EO - H per KOH-Katalyse, neutralisiert mit Essigsäure

In einem 2 l Druckautoklaven mit Ankerrührer wurden 384 g (1,5 mol) C16C18-Alkohol vorgelegt und der Rührer eingeschaltet. Danach wurden 5,2 g 50 %ige wässrige KOH-Lösung (0,046 mol KOH, 2,6 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 262 g (4,5 mol) Propylenoxid innerhalb von 2 h zudosiert bei 130 °C, $p_{max}$ betrug 4,0 bar absolut. Es wurde 2 h bei 130°C nachgerührt. Es wurden 661 g (15 mol) Ethylenoxid innerhalb von 5 h bei 130 °C zudosiert, $p_{max}$ betrug 6,0 bar absolut. Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben, es wurde auf 80°C abgekühlt und 2,8 g Essigsäure (0,046 mol) zugegeben. Danach erfolgte die Abfüllung bei 80 °C unter $N_2$. Die Analytik (Massenspektrum, GPC, 1H-NMR in $CDCl_3$, 1H-NMR in MeOD) bestätigte die mittlere Zusammensetzung C16C18 - 3 PO - 10 EO - H.

Alkyletheralkohol 3: C16C18 - 3 PO - 10 EO - H per KOH-Katalyse, basisch

in einem 2 l Druckautoklaven mit Ankerrührer wurden 384 g (1,5 mol) C16C18-Alkohol vorgelegt und der Rührer eingeschaltet. Danach wurden 5,2 g 50 %ige wässrige KOH-Lösung (0,046 mol KOH, 2,6 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 262 g (4,5 mol) Propylenoxid innerhalb von 2 h zudosiert bei 130 °C, $p_{max}$ betrug 4,0 bar absolut. Es wurde 2 h bei 130°C nachgerührt. Es wurden 661 g (15 mol) Ethylenoxid innerhalb von 5 h bei 130 °C zudosiert, $p_{max}$ betrug 6,0 bar absolut. Man ließ 1 h ausreagieren bis der Druck konstant war, kühlte auf 100°C ab und entspanrite auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Die Analytik (Massenspektrum, GPC, 1H-NMR in $CDCl_3$, 1H-NMR in MeOD) bestätigte die mittlere Zusammensetzung C16C18 - 3 PO - 10 EO - H.

Alkyletheralkohol 4: C16C18 - 3 PO - 10 EO - H per NaOH-Katalyse, basisch

In einem 2 l Druckautoklaven mit Ankerrührer wurden 384 g (1,5 mol) C16C18-Alkohol vorgelegt und der Rührer eingeschaltet. Danach wurden 5,2 g 50 % ige wässrige NaOH-Lösung (0,065 mol NaOH, 2,6 g NaOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 262 g (4,5 mol) Propylenoxid innerhalb von 2 h zudosiert bei 130 °C, $p_{max}$ betrug 5,0 bar absolut. Es wurde 2 h bei 130°C nachgerührt. Es wurden 661 g (15 mol) Ethylenoxid innerhalb von 5 h bei 130 °C zudosiert, $p_{max}$ betrug 6,0 bar absolut. Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Die Analytik (Massenspektrum, GPC, 1H-NMR in $CDCl_3$, 1H-NMR in MeOD) bestätigte die mittlere Zusammensetzung C16C18 - 3 PO - 10 EO - H.

Alkyletheralkahol 5: C16C18 - 7 PO - 10 EO - H per KOH-Katalyse, entsalzt entspricht Tensid der allgemeinen Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}$/$C_{18}H_{37}$, x = 0, y = 7 und z =10

In einem 2 l Druckautoklaven mit Ankerrührer wurden 256 g (1,0 mol) C16C18-Alkohol vorgelegt und der Rührer eingeschaltet.. Danach wurden 2,2 g 50 %ige wässrige KOH-Lösung (0,020 mol KOH, 1,1 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt; auf 140 °C aufgeheizt und danach der Druck auf 2,0 bar absolut eingestellt. Es wurden bei 150 Umdrehungen pro Minute 407 g (7 mol) Propylenoxid innerhalb von 5 h zudosiert bei 140 °C, $p_{max}$ betrug 6,0 bar absolut. Es wurde 2 h bei 140°C nachgerührt. Es wurden 441 g (10 mol) Ethylenoxid innerhalb von 10 h bei 140 °C zudosiert, $p_{max}$ betrug 5,0 bar absolut. Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Es wurden 3 Gewichtsprozent Ambosol (Silikat zur Neutralisation) zugegeben, und für 3 h bei 100°C und <10 mbar gerührt. Das Vakuum wurde mit $N_2$ aufgehoben und das Reaktionsgemisch über einen Seitz K900 Filter druckfiltriert. Die Analytik (Massenspektrum, GPC, 1H-NMR in $CDCl_3$, 1H-NMR in MeOD) bestätigte die mittlere Zusammensetzung C16C18 - 7 PO - 10 EO - H.

Alkyletheralkohol 6: C16C18 - 7 PO - 4 EO - H per KOH-Katalyse, entsalzt entspricht Tensid der allgemeinen

Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}$/$C_{18}H_{37}$, x = 0, y = 7 und z = 4

In einem 2 l Druckautoklaven mit Ankerrührer wurden 308,7 g (1,21 mol) C16C18-Alkohol vorgelegt und der Rührer eingeschaltet. Danach wurden 4,0 g 50 %ige wässrige KOH-Lösung (0,046 mol KOH, 2,0 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 487 g (8,44 mol) Propylenoxid innerhalb von 6 h zudosiert bei 130 °C, $p_{max}$ betrug 6,0 bar absolut. Es wurde 2 h bei 130°C nachgerührt. Es wurden 211 g (4,8 mol) Ethylenoxid innerhalb von 4 h bei 130 °C zudosiert, $p_{max}$ betrug 5,0 bar absolut. Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Es wurden 3 Gewichtsprozent Ambosol (Silikat zur Neutralisation) zugegeben, und für 3 h bei 100°C und <10 mbar gerührt. Das Vakuum wurde mit $N_2$ aufgehoben und das Reaktionsgemisch über einen Seitz K900 Filter druckfiltriert. Die Analytik (Massenspektrum, GPC, 1H-NMR in CDCl$_3$, 1H-NMR in MeOD) bestätigte die mittlere Zusammensetzung C16C18 - 7 PO - 4 EO - H.

Alkyletheralkohol 7: C16C18C20Guerbet - 18 EO - H per KOH-Katalyse, entsalzt entspricht Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}$/$C_{18}H_{37}$/$C_{20}H_{41}$, x = 0, y = 0 und z = 18

In einem 2 l Druckautoklaven mit Ankerrührer wurden 261 g (1,01 mol) C16C18C20-Guerbet-Alkohol vorgelegt und der Rührer eingeschaltet. Danach wurden 4,2 g 50 %ige wässrige KOH-Lösung (0,038 mol KOH, 2,1 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 799 g (18,2 mol) Ethylenoxid innerhalb von 14 h zudosiert bei 130 °C, $p_{max}$ betrug 5,0 bar absolut. Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Es wurden 3 Gewichtsprozent Ambosol (Silikat zur Neutralisation) zugegeben, und für 3. h bei 100°C und <10 mbar gerührt. Das Vakuum wurde mit $N_2$ aufgehoben und das Reaktionsgemisch über einen Seitz K900. Filter druckfiltriert. Die Analytik (Massenspektrum, GPC, 1H-NMR in CDCl$_3$, 1H-NMR in MeOD) bestätigte die mittlere Zusammensetzung C16C18C20-Guerbet - 18 EO - H.

Alkyletheralkohol 8: C16C18C20Guerbet - 10 EO - H per KOH-Katalyse, entsalzt entspricht Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}$/$C_{18}H_{37}$/$C_{20}H_{41}$, x = 0, y = 0 und z =10

In einem 2 l Druckautoklaven mit Ankerrührer wurden 396 g (1,53 mol) C16C18C20-Guerbet-Alkohol vorgelegt und der Rührer eingeschaltet. Danach wurden 4,17 g 50 %ige wässrige KOH-Lösung (0,037 mol KOH 2,1 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 140 °C aufgeheizt und danach der Druck auf 2,0 bar absolut eingestellt. Es wurden bei 150 Umdrehungen pro Minute 675 g (15,3 mol) Ethylenoxid innerhalb von 14 h zudosiert bei 140 °C, $p_{max}$ betrug 5,0 bar absolut. Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Es wurden 3 Gewichtsprozent Ambosol (Silikat zur Neutralisation) zugegeben, und für 3 h bei 100°C und <10 mbar gerührt. Das Vakuum wurde mit $N_2$ aufgehoben und das Reaktionsgemisch über einen Seitz K900 Filter druckfiltriert. Die Analytik (Massenspektrum, GPC, 1H-NMR in CDCl$_3$, 1H-NMR in MeOD) bestätigte die mittlere Zusammensetzung C16C18C20-Guerbet - 10 EO - H.

Alkyletheralkohol 9: 2PH - 14 EO - H per KOH-Katalyse, entsalzt entspricht Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{10}H_{21}$, x = 0, y = 0 und z = 14

In einem 2 l Druckautoklaven mit Ankerrührer wurden 234 g (1,5 mol) 2-Propylheptanol vorgelegt und der Rührer eingeschaltet. Danach wurden 4,6 g 50 %ige wässrige KOH-Lösung (0,041 mol KOH, 2,3 g KOH) zugegeben, Vakuum von 25 mbar angeleut, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 924 g (21 mol) Ethylenoxid innerhalb von 16 h zudosiert bei 130 °C, $p_{max}$ betrug 6,0 bar absolut Man ließ 1 h ausreagieren bis der Druck konstant war, kühlte auf 100°C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Es wurden 3 Gewichtsprozent Ambosol (Silikat zur Neutralisation) zugegeben, und für 3 h bei 100°C und <10 mbar gerührt. Das Vakuum wurde mit $N_2$ aufgehoben und das Reaktionsgemisch über einen Seitz K900 Filter druckfiltriert. Die Analytik (Massenspektrum, GPC, 1H-NMR in CDCl$_3$, 1H-NMR in MeOD) bestätigte die mittlere. Zusammensetzung 2PH - 14 EO - H.

Alkyletheralkohol 10: C16C18 - 7 PO - 10 EO - H per KOH-Katalyse, basisch entspricht Tensid der allgemeinen Formel (II) $R^1$-O-$(CH_2C(R^2)HO)_x$-$(CH_2C(CH_3)HO)_y$-$(CH_2CH_2O)_z$-H mit $R^1 = C_{16}H_{33}/C_{18}H_{37}$, x = 0, y = 7 und z = 10

In einem 2 l Druckautoklaven mit Ankerrührer wurden 304 g (1,19 mol) C16C18-Alkohol vorgelegt und der Rührer eingeschaltet. Danach wurden 4,13 g 50 %ige wässrige KOH-Lösung (0,037 mol KOH, 2,07 g KOH) zugegeben, Vakuum von 25 mbar angelegt, auf 100 °C erhitzt und für 120 min gehalten, um das Wasser abzudestillieren. Man spülte dreimal mit $N_2$. Danach wurde der Behälter auf Druckdichtigkeit geprüft, 1,0 bar Überdruck (2,0 bar absolut) eingestellt, auf 130 °C aufgeheizt und danach der Druck auf 2,0 bar absolut eingestellt. Es wurden bei 150 Umdrehungen pro Minute 482 g (8,31 mol) Propylenoxid innerhalb von 6 h zudosiert bei 130 °C, $p_{max}$ betrug 6,0 bar absolut. Es wurde 2 h bei 130 °C nachgerührt. Es wurden 522 g (11,9 mol) Ethylenoxid innerhalb von 10 h bei 130 °C zudosiert, $p_{max}$ betrug 5,0 bar absolut. Man ließ 1 h ausreagieren bis der Druck konstant war, kühlte auf 100 °C ab und entspannte auf 1,0 bar absolut. Es wurde Vakuum von <10 mbar angelegt und Restoxid für 2 h abgezogen. Das Vakuum wurde mit $N_2$ aufgehoben und es erfolgte die Abfüllung bei 80 °C unter $N_2$. Die Analytik (Massenspektrum, GPC, 1H-NMR in $CDCl_3$, 1H-NMR in MeOD) bestätigte die mittlere Zusammensetzung C16C18 - 7 PO - 10 EO - H.

Herstellung der Alkylefhercarboxylat (A) - Alkyletheralkohol (B) - Gemische:

Verwendete Abkürzungen:

EO      Ethylenoxy
PO      Propylenoxy
BuO     1,2-Butylenoxy

Alkylethercarboxylat-Alkyletheralkohol-Gemisch 1 a): C16C18-3PO-10EO-$CH_2CO_2Na$ / C16C18 - 3 PO - 10 EO - H per KOH-Katalyse, entsalzt entspricht Tensidgemisch aus Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und Tensid der allgemeinen Formel (II). $R^1$-O-$(CH_2C(R^2)HO)_x$-$(CH_2C(CH_3)HO)_y$-$(CH_2CH_2O)_z$-H mit $R^1 = C_{16}H_{33}/C_{18}H_{37}$, x = 0, y = 3 und z = 10, M = Na.

In einem 250 ml Planschliffreaktor mit dreistufigem Balkenrührer wurden 152,3 g (0,175 mol, 1.0 eq) C16C18 - 3 PO - 10 EO - H (aus Herstellbeispiel Alkylalkoxylates 1, KOH-katalysiert, entsalzt) und 22,9 g (0,193 mol, 1,1 eq) Chloressigsäure Natriumsalz gegeben und bei 60 °C für 15 min bei 400 Umdrehungen pro Minute unter Normaldruck gerührt. Danach wurde die nachfolgende Prozedur achtmal durchgeführt: es wurden 0,96 g (0,0240 mol, 0,1375 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit $N_2$ aufgehoben. Insgesamt wurden 7,7 g (0,193 mol, 1,1 eq) NaOH Microprills über einen Zeitraum von ca. 6,5 h zugegeben. Während der ersten Stunde dieses Zeitraums wurde die Umdrehungsgeschwingigkeif wurde auf ca. 1000 Umdrehungen pro Minute erhöht. Danach wurde 4 h bei 60 °C und 30 mbar nachgerührt. Das Vakuum wurde mit $N_2$ aufgehoben und der Versuch ausgefüllt (Ausbeute >95%).

Man erhielt eine bei 20 °C weiß-gelbliche viskose Flüssigkeit, Der pH-Wert (5% in Wasser) betrug 8,0. Der Wassergehalt betrug am Ende der Reaktion 0,9 % (während der Reaktion betrug der Wassergehalt: 0,8% vor der zweiten NaOH-Zugabe, 0,9% vor der dritten NaOH Zugabe, 1,3% vor der vierten NaOH-Zugabe, 1,1% vor der fünften NaOH-Zugabe, 0,7% vor der sechsten NaOH-Zugabe und 0,9% vor der siebten NaOH-Zugabe,). Der Gehalt an NaCl wurde über Chloridanalyse oder 1H-NMR hinsichtlich Umsetzungsrate des Chloressigsäure Natriumsalzes bestimmt. Über ein $^1$H-NMR in MeOD wird der molare Anteil an Chloressigsäure Natriumsalz bestimmt (anhand des isolierten Signals bei 3,92 bis 3,94 ppm). Es entspricht ca. 0,01 eq an Chloressigsäure Natriumsalz. Der Anteil an NaCl liegt bei ca. 6,1 Gewichts% (entspricht -99 mol% Umwandlung des organisch gebundenen Chlors in anorganisches Chlorid), Per NMR-Spektroskopie ($^1$H und $^{13}$C) wurde das Vorliegen des gewünschten Tensidgemisches bestätigt und der Anteil von Nebenverbindungen ermittelt. Eine direkte Ermittlung des Carboxymethylierungsgrades aus dem $^1$H-NMR in MeOD ist leider nicht zweifelsfrei möglich, da das Alkylethercarboxylat-Signal bei ca. 3,65 - 3,80 ppm mit dem Signal der Digylkolsäure Dinatriumsalzes überlagert (Protonen an Kohlenstoffatom direkt benachbart zur Carboxylatgruppe und zum Sauerstoffatom der Etherfunktion). Der Carboxymethylierungsgrad wurde daher wie folgt bestimmt. Über ein $^1$H-NMR in MeOD wird der molare Anteil an Glykolsäure Natriumsalz bestimmt (anhand des isolierten Signals bei 3,82 bis 3,84 ppm: Protonen an Kohlenstoffatom direkt benachbart zur Carboxylatgruppe und zum Sauerstoffatom der Etherfunktion bzw. der Alkoholfunktion). Es entspricht ca. 0,05 eq an Glykolsäure Natriumsalz. Als nächster Schritt wird die OH-Zahl des Reaktionsgemisches bestimmt. Sie liegt bei 15,4 mg KOH / g. Davon muss der Anteil, der von der OH-Gruppe des Glykolsäure Natriumsalzes herrührt, abgezogen werden (ca. 2,7 mg KOH / g). Dies ergibt 12,7 mg KOH / g als korrigierte OH-Zahl. Würde das Alkylalkoxylat noch zu 100% vorliegen, würde die korrigierte OH-Zahl 54,8 mg KOH / g betragen (das Alkylalkoxylat - wenn es nicht abregiert wäre - hätte einen Gewichtsanteil von 85% am Reaktionsgemisch). 12,7 von 54,8 beträgt rund 23%. Damit liegt der molare Anteil an C16C18-3PO-10EO-H bei ca. 23 mol% (und der Anteil an Alkylethercarboxylat bei ca. 77 mol%). Der Carboxymethylierungsgrad beträgt daher ca. 77%. Dies wird zusätzlich abgesichert über ein $^{13}$C-NMR in MeOD. Dort sind die Signale für Diglykolsäure Dinatriumsalz und Alkylethercarboxylat voneinander getrennt (bei 177-178 ppm Signale der Kohlenstoffatorne der Carboxylatgruppen - Signale können durch Aufstockexperimte voneinander unterschieden werden). Eine Ermittlung des Anteils an C16C18-3PO-10EO-H per $^{1}$H-TAI-NMR in CDCl$_3$ (TAI ist ein Shift-Reagenz und steht für Trichloracetylisocyanat) ist nur eingeschränkt möglich, da sich das anionische Alkylethercarboxylat schlechter in CDCl$_3$ löst als das nichtionische Alkylalkoxylat.

Alkylethercarboxylat-Alkyletheralkohol-Gemisch 1 b): C16C18-3PO-10EO-CH$_2$CO$_2$Na / C16C18 - 3 PO - 10 EO - H per KOH-Katalyse, entsalzt

Eine alternative Herstellvorschrift zum Beispiel 1a) ist die Verwendung eines einstufigen Zahnscheibenrührers anstatt des dreistufigen Balkenrührers sowie die Verwendung eines Vakuums von ca. 150 mbar in Kombination mit einem Stickstoffstrom (anstatt Vakuum von 30 mbar). Ansonsten erfolgt die Umsetzung analog.in 1a) beschrieben, Man erzielte einen Carboxymethylierungsgrad von rund 80% sowie ein sehr ähnliches Nebenkomponentenspektrum.

Alkylethercarboxylat-Alkyletheralkohol-Gemisch 2: C16C18-3PO-10EO-CH$_2$CO$_2$Na / C16C18 - 3 PO - 10 EO - H enthaltend Kaliumacetat und Wasser

In einem 250 ml Planschliffreaktor mit dreistufigem Balkenrührer wurden 174,0 g (0,20 mol, 1.0 eq) C16C18 - 3 PO - 10 EO - H vermischt mit 0,35 g Kaliumacetat, 2,0 g Wasser sowie 26,2 g (0,220 mol, 1,1 eq) Chloressigsäure Natriumsalz gegeben und bei 60°C für 15 min bei 400 Umdrehungen pro Minute unter Normaldruck gerührt. Danach wurde die nachfolgende Prozedur achtmal durchgeführt: es wurden 1,1 g (0,0275 mol, 0,1375 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt wurden 8,8 g (0,220 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 60°C und 30 mbar nachgerührt. Das Vakuum wurde mit N$_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 8,5. Der Wassergehalt betrug 1,2 %. Die Analytik erfolgte analog des vorigen Beispiels. Der molare Anteil an Chloressigsäure Natriumsalz beträgt ca. 2 mol%. Der Gehalt an NaCl liegt bei ca. 6,1 Gewichts%. Die OH-Zahl des Reaktionsgemisches liegt bei 21,0 mg KOH / g. Der molare Anteil an Glykolsäurenatriumsalz beträgt ca. 5 mol%. Der Carboxymethylierungsgrad beträgt 72%.

Alkylethercarboxylat-Alkyletheralkohol-Gemisch 3: C16C18-3PO-10EO-CH$_2$CO$_2$Na / C16C18 - 3 PO - 10 EO - H per KOH-Katalyse, basisch

In einem 250 ml Planschliffreaktor mit dreistufigem Balkenrührer wurden 112,8 g (0,13 mol, 1.0 eq) C16C18 - 3 PO - 10 EO -H enthaltend 0,004 mol C16C18 - 3 PO - 10 EO- K (aus Herstellbeispiel Alkyletheralkoholes 3, KOH-katalysiert, basisch)und 17 g (0,143 mol, 1,1 eq) Chloressigsäure Natriumsalz gegeben und bei 60°C für 15 min bei 400 Umdrehungen pro Minute unter Normaldruck gerührt. Danach wurde die nachfolgende Prozedur achtmal durchgeführt: es wurden 0,70 g (0,0174 mol, 0,1338 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt würden 5,56 g (0,139 mol, 1,07 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 60°C und 30 mbar nachgerührt. Das Vakuum wurde mit N$_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 7. Der Wassergehalt betrug 1,0 %. Die Analytik erfolgte analog des vorigen Beispiels. Der molare Anteil an Chloressigsäure Natriumsalz beträgt ca. 1 mol%. Der Gehalt an NaCl liegt bei ca. 6,1 Gewichts%. Die OH-Zahl des Reaktionsgemisches liegt bei 16,7 mg KOH / g. Der molare Anteil an Glykolsäurenatriumsatz beträgt ca. 4 mol%. Der Carboxymethylierungsgrad beträgt 74%.

Alkylethercarboxylat-Alkyletheralkohol-Gemisch 4: C16C18-3PO-10EO-CH$_2$CO$_2$Na/C16C18-3 PO - 10 EO - H per NaOH-Katalyse, basisch

In einem 250 ml Planschliffreaktor mit dreistufigem Balkenrührer wurden 161,8 g (0.186 mol, 1,0 eq) C16C18 - 3 PO - 10 EO - H enthaltend 0,008 mol C16C18 - 3 PO - 10 EO - Na (aus Herstellbeispiel Alkylalkoxylates 4, NaOH-katalysiert, basisch) und 24,4 g (0,205 mol, 1,1 eq) Chloressigsäure Natriumsalz gegeben und bei 60°C für 15 min bei 400 Umdrehungen pro Minute unter Normaldruck gerührt. Danach wurde die nachfolgende Prozedur achtmal durchgeführt: es wurden 0,99 g (0,0246 mol, 0,1324 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt wurden 7,88 g (0,197 mol, 1,06 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 60°C urid 30 mbar nachgerührt. Das Vakuum wurde mit N$_2$ aufgehoben und der Versuch ausgefüllt (Ausbeute >95%).

Man erhielt eine bei 20°C weiß-gelbliche viskose Flüssigkeit. Der pH-Wert (5% in Wasser) betrüg 7. Der Wassergehalt betrug 0,9%. Die Analytik erfolgte analog des vorigen Beispiels. Der molare Anteil an Chloressigsäure Natriumsalz beträgt ca. 1 mol%. Der Gehalt an NaCl liegt bei ca. 6,1 Gewichts% Die OH-Zahl des Reaktionsgemisches liegt bei 15,4 mg KOH / g. Der molare Anteil an Glykolsäurenatriumsalz beträgt ca. 3 mol%. Der Carboxymethylierungsgrad beträgt 75%.

Alkylethercarboxylat-Alkyletheralkohol-Gemisch 5: C16C18-7PO-10EO-$CH_2CO_2Na$ /C16C18 - 7 PO - 10 EO - H per KOH-Katalyse, entsalzt entspricht Tensidgemisch aus Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und Tensid der allgemeinen Formel (II) $R^1$-O-$(CH_2C(R^2)HO)_x$-$(CH_2C(CH_3)HO)_y$-$(CH_2CH_2O)_z$-H mit $R^1 = C_{16}H_{33}/C_{18}H_{37}$, x = 0, y = 7 und z = 10, M = Na.

In einem 250 ml Planschliffreaktor mit dreistufigem Balkenrührer wurden 143,3 g (0,130 mol, 1,0 eq) C16C18 - 7 PO - 10 EO - H (aus Herstellbeispiel Alkylalkoxylates 5, KOH-katalysiert, entsalzt) und 17,0 g (0,143 mol, 1,1 eq) Chloressigsäure Natriumsalz. gegeben und bei 45°C für 15 min bei 400 Umdrehungen pro Minute unter Normaldruck gerührt. Danach wurde die nachfolgende Prozedur achtmal durchgeführt: es wurden 0,72 g (0,0179 mol, 0,1375 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit $N_2$ aufgehoben. Insgesamt wurden 5,72 g (0,143 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 45°C und 30 mbar nachgerührt. Das Vakuum wurde mit $N_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 8,5. Der Wassergehalt betrug 1,5%. Die Analytik erfolgte analog des vorigen Beispiels (unter Berücksichtigung des höheren Molekulargewichtes würde bei 0% Umsatz eine OH-Zahl von 44,6 mg KOH / g für das Reaktionsgemisch betragen). Der molare Anteil an Chloressigsäure Natriumsalz beträgt ca. 5 mol%. Der Gehalt an NaCl liegt bei ca. 4,8 Gewichts%. Die OH-Zahl des Reaktionsgemisches liegt bei 16.2 mg KOH / g. Der molare Anteil an Glykolsäurenatriumsalz beträgt ca. 5 mol%. Der Carboxymethylierungsgrad beträgt 70%.

Alkylethercarboxylat-Alkyletheralkohol-Gemisch 6: C16C18-7PO-4EO-$CH_2CO_2Na$ / C16C18 - 7 PO - 4 EO - H per KOH-Katalyse, entsalzt entspricht Tensidgemisch aus Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und Tensid der allgemeinen. Formel (II) $R^1$-O-$(CH_2C(R^2)HO)_x$-$(CH_2C(CH_3)HO)_y$-$(CH_2CH_2O)_z$-H mit $R^1 = C_{16}H_{33}/C_{18}H_{37}$, x = 0, y = 7 und z = 4, M = Na.

In einem 250 ml Planschliffreaktor mit dreistufigem Balkenrührer wurden 127,5 g (0,15 mol, 1.0 eq) C16C18 - 7 PO - 4 EO - H (aus Herstellbeispiel Alkylalkoxylates 6, KOH-katalysiert, entsalzt) und 19,6 g (0,165 mol, 1,1 eq) Chloressigsäure. Natriumsalz gegeben und bei 60°C für 15 min bei 400 Umdrehungen pro Minute unter Normaldruck gerührt. Danach wurde die nachfolgende Prozedur achtmal durchgeführt: es wurden 0,83 g (0,0206 mol, 0,1375 eq) NaOH-Micropills (Durchmesser 0,5 - 1,5 mm) eingetragen, ein Vakuum von 30 mbar zur Entfernung des Reaktionswassers angelegt, für 50 min gerührt, und danach das Vakuum mit $N_2$ aufgehoben. Insgesamt wurden 6,6 g (0,165 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 60°C und 30 mbar nachgerührt. Das Vakuum wurde mit $N_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 8,5. Der Wassergehalt betrug 0,9%. Die Analytik erfolgte analog des vorigen Beispiels (unter Berücksichtigung des höheren Molekulargewichtes würde bei 0% Umsatz eine OH-Zahl von 56,5 mg KOH / g für das Reaktionsgernisch betragen). Der molare Anteil an Chloressigsäure Natriumsalz beträgt ca. 1 mol%. Der Gehalt an NaCl liegt bei ca. 6,4 Gewichts%. Die OH-Zahl des Reaktionsgemisches liegt bei 23,2 mg KOH / g. Der molare Anteil an Glykolsäurenatriumsalz beträgt ca. 2 mol%. Der Carboxymethylierungsgrad beträgt 61%.

Alkylethercarboxylat-Alkyletheralkohol-Gemisch 7: C16C18C20-Guerbet-18EO-$CH_2CO_2Na$ / C16C18C20-Guerbet - 18 EO - H per KOH-Katalyse, basisch entspricht Tensidgemisch aus Tensid der allgemeinen Formel (I) $R^1$O-$(CH_2C(R^2)HO)_x$-$(CH_2C(CH_3)HO)_y$-$(CH_2CH_2O)_z$-$CH_2CO_2M$ und Tensid der allgemeinen Formel (II) $R^1$-O-$(CH_2C(R^2)HO)_x$-$(CH_2C(CH_3)HO)_y$$(CH_2CH_2O)_z$-H mit $R^1 = C_{16}H_{33}/C_{18}H_{37}/C_{20}H_{41}$, x = 0, y = 0 und z = 18, M = Na.

In einem 250 ml Planschliffreaktor mit dreistufigem Balkenrührer wurden 159,3 g (0,150 mol, 1.0 eq) C16C18C20-Guerbet - 18 EO - H enthaltend 0,006 mol C16C18C20-Guerbet - 18 EO - K (analog Herstellbeispiel Alkylalkoxylates 7 mit dem Unterschied, dass keine Entsalzung vorgenommen wurde und das Alkoxylat basisch blieb) und 19,6 g (0,165 mol, 1,1 eq) Chloressigsäure Natriumsalz gegeben und bei 45°C für 15 min bei 400 Umdrehungen pro Minute unter Normaldruck gerührt. Danach wurde die nachfolgende Prozedur achtmal durchgeführt: es wurden 0,80 g (0,0199 mol, 0,1325 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit $N_2$ aufgehoben. Insgesamt wurden 6,36 g (0,159 mol, 1,06 eq) NaOH Microprills über einer Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 45°C und 30 mbar nachgerührt. Das Vakuum wurde mit $N_2$ aufgehoben und der Versuch ausgefüllt (Ausbeute >95%).

Man erhielt einen bei 20°C weiß-gelblichen Feststoff, Der pH-Wert (5% in Wasser) betrug 7. Der Wassergehalt betrug 1,4%. Die Analytik erfolgte analog des vorigen Beispiels (unter Berücksichtigung des höheren Molekulargewichtes würde bei 0% Umsatz eine OH-Zahl von 46,2 mg KOH / g für das Reaktionsgemisch betragen). Der molare Anteil an Chloressigsäure Natriumsalz beträgt ca. 5 mol%. Der Gehalt an NaCl liegt bei ca. 5,1 Gewichts%. Die OH-Zahl des Reaktionsgemisches liegt bei 10,2 mg KOH / g. Der molare Anteil an Glykolsäurenatriumsalz beträgt ca. 8 mol%. Der Carboxymethylierungsgrad beträgt 87%.

Alkylethercartioxylat-Alkyletheralkohol-Gemisch 8: C16G18C20-Guerbet-10EO-CH$_2$CO$_2$Na / C16C18C20-Guerbet - 10 EO - H per KOH-Katalyse, basisch entspricht Tensidgemisch aus Tensid der allgemeinen Formel (I) R$^1$O-(CH$_2$C(R$^2$)HO)$_x$(CH$_2$C(CH$_3$)HO)$_y$-(CH$_2$CH$_2$O)$_z$CH$_2$CO$_2$M und Tensid der allgemeinen Formel (II) R$^1$-O-(CH$_2$C(R$^2$) HO)$_x$-(CH$_2$C(CH$_3$)HO)$_y$-(CH$_2$CH$_2$O)$_z$-H mit R$^1$ = C$_{16}$H$_{33}$/C$_{18}$H$_{37}$/C$_{20}$H$_{41}$, x = 0, y = 0 und z = 10, M = Na.

In einem 250 ml Planschliffreaktor mit dreistufigem Balkenrührer wurden 142,0 g (0,200 mol, 1.0 eq) C16C18C20-Guertiet - 10 EO - H (aus Herstellbeispiel Alkylalkoxylates 8) und 26,2.g (0,22 mol, 1,1 eq) Chloressigsäure Natriumsalz gegeben und bei 45°C für 15 min bei 400 Umdrehungen pro Minute unter Normaldruck gerührt. Danach wurde die nachfolgende Prozedur achtmal durchgeführt: es wurden 1,1 g (0,0275 mol, 0,1375 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt wurden 8,8 g (0,22 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 45°C und 30 mbar nachgerührt. Das Vakuum wurde mit N$_2$ aufgehoben und der Versuch ausgefüllt (Ausbeute >95%).

Man erhielt einen bei 20°Cweiß-gelblichen Feststoff, Der pH-Wert (5% in Wasser) betrug 7. Der Wassergehalt betrug 1,5%. Die Analytik erfolgte analog des vorigen Beispiels (unter Berücksichtigung des höheren Molekulargewichtes würde bei 0% Umsatz eine OH-Zahl von 64,9 mg KOH / g für das Reaktionsgemisch betragen). Der molare Anteil an Chloressigsäure Natriumsalz beträgt ca. 2 mol%. Der Gehalt an NaCl liegt bei ca. 7,3. Gewichts%. Die OH-Zahl des Reaktionsgemisches liegt bei 10,8 mg KOH / g. Der molare Anteil an Glykoisäurenatriumsalz beträgt ca. 2 mol%. Der Cerboxymethylierungsgrad beträgt 85%.

Alkylethercarboxylat-Alkyletheralkohol-Gemisch 9:2PH-14EO-CH$_2$CO$_2$Na/2PH - 14 EO - H per KOH-Katalyse, basisch entspricht Tensidgemisch aus Tensid der allgemeinen Formel (I) R$^1$-O-(CH$_2$C(R$^2$)HO)$_x$-(CH$_2$C(CH$_3$) HO)$_y$-(CH$_2$CH$_2$O)$_z$-CH$_2$CO$_2$M und Tensid der allgemeinen Formel (II) R$^1$-O-(CH$_2$C(R$^2$)HO)$_x$-(CH$_2$C(CH$_3$) HO)$_y$-(CH$_2$CH$_2$O)$_z$-H mit R$^1$ = C$_{10}$H$_{21}$, x = 0, y = 0 und z = 14, M = Na.

In einem 250 ml Planschliffresktor rnit dreistufigem Balkenrührer wurden 160,9 g (0,208 mol, 1,0 eq) 2PH - 14 EO - H enthaltend 0,006 mol 2PH - 14 EO - K (analog Herstellbeispiel Alkylalkoxylates 9 mit dem Unterschied, dass keine Entsalzung vorgenommen wurde und das Alkoxylat basisch blieb) und 27,2 g (0,229 mol, 1,1 eq) Chloressigsäure Natriumsalz gegeben und bei 60°C für 15 min bei 400 Umdrehungen pro Minute unter Normaldruck gerührt. Danach wurde die nachfolgende Prozedur achtmal durchgeführt: es wurden 1,12 g (0,0279 mol, 0,1340 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesmt wurden 8,92 g (0,223 mol, 1,07 eq) NaOH Microprilis über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 60°C und 30 mbar nachgerührt. Das Vakuum wurde mit N$_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 7. Der Wassergehalt betrug 1,1%. Die Analytik erfolgte analog des vorigen Beispiels (unter Berücksichtigung des niedrigeren Molekulargewichtes würde bei 0% Umsatz eine OH-Zahl von 60,5 mg KOH / g für das Reaktionsgemisch betragen). Der molare Anteil an Chloressigsäure Natriumsalz beträgt ca. 1 mol%. Der Gehalt an NaCl liegt bei ca. 6,8 Gewichts%. Die OH-Zahl des Reaktionsgemisches liegt bei 19,2 mg KOH / g. Der molare Anteil an Glykolsäurenatriumsalz beträgt ca. 12 mol%. Der Carboxymethylierungsgrad beträgt 79%.

Vergleichs-Alkylethercarboxylat-Alkyletheralkohol-Gemisch V10 (nicht erfindungsgemäß, zu geringes molares Verhältnis(A) zu (B)): C16C18-3PO-10EO-CH$_2$CO$_2$Na/C16C18 -3PO - 10EO-H enthaltend Kaliumacetat im Verhältnis 30 mol-% : 70 mol-%

In einem 250 ml Planschliffreaktor mit dreistufigem Balkenrührer wurden 130,2 g (0,15 mol, 1.0 eq) C16C18 - 3 PO - 10 EO - H vermischt mit 0,26 g Kaliumacetat sowie 19,6 g (0,165 mol, 1,1 eq) Chloressigsäure Natriumsalz gegeben und bei 60°C für 15 min bei 400 Umdrehungen pro Minute unter Normaldruck gerührt. Danach wurde die nachfolgende Prozedur achtmal durchgeführt: es wurden 0,83 g (0,0206 mol, 0,1375 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt wurden 6,6 g (0,165 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 60°C und 30 mbar nachgerührt. Das Vakuum wurde mit N$_2$ aufgehoben und der Versuch ausgefüllt (Ausbeute >95%).

Man erhielt eine bei 20°C bräunliche viskose Flüssigkeit. Der pH-Wert (5% in Wasser) betrug 11. Der Wassergehaltbetrug 0,9 %. Die Analytik erfolgte analog des vorigen Beispiels. Der molare Anteil an Chloressigsäure-Natriumsalz beträgt ca. 38 mol%. Der Gehalt an NaCl liegt bei ca. 4,4 Gewichts%. Die OH-Zahl des Reaktionsgemisthes liegt bei 52,6 mg KOH / g. Der molare Anteil an Glykolsäurenatriumsalz beträgt ca. 2 mol%. Der Carboxymethylierungsgrad, beträgt 30%.

Vergleichs-Alkylethercarboxylat-Alkyletheralkohol-Gemisch V11 (nicht erfindungsgemäß, zu hohes molares Verhältnis (A) zu (B)): C16C18-3PO-10EO-CH$_2$CO$_2$Na : C16C18 - 3 PO - 10 EO - H im Verhältnis 95 mol% : 5 mol%.

In einem 250 ml Planschliffreaktor mit dreistufigem Balkenrührer wurden 173,6 g (0.20 mol, 1.0 eq) C16C18 - 3 PO - 10 EO - H (aus Herstellbeispiel Alkylalkoxylates 1, KOH-katalysiert, entsalzt) sowie 47,5 g (0,40 mol, 2.0 eq) Chloressigsäure Natriumsalz gegeben und bei 50°C für 15 min bei 400 Umdrehungen pro Minute unter Normaldruck gerührt. Danach wurde die nachfolgende Prozedur achtmal durchgeführt: es wurden 2 g (0,05 mol, 0,25 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt wurden 16 g (0,40 mol, 2 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 10 h bei 50°C und 30 mbar nachgerührt. Das Vakuum wurde mit N$_2$ aufgehoben und der komplette Versuch in einen 1000 ml Rundhalskolben überführt.

Es wurden bei 70°C 350 ml Wasser und 150 g 1-Pentanol unter Rührung zugegeben. Der pH-Wert wurde von pH = 12 auf pH = 2 mittels 41,3 g 32%iger wässriger HOL-Lösung eingestellt. Der Ansatz wurde auf 90°C erhitzt und für 1 h nachgerührt. Anschließend wurde der Ansatz sofort in einen Scheidetrichter überführt und die heißen Phasen voneinander getrennt. Die wässrige Phase enthaltend NaCl und andere Nebenprodukte wurde verworfen. Die organische Phase (enthaltend Alkylethercarbonsäure und Alkylalkoxylat) wurde abgetrennt und das 1-Pentanol bei 100°C und <10 mbar entfernt. In einem 500 ml Rundhalskolben wurden unter Rühren das Alkylethercarbonsäure-Alkyletheralkohol-Gemisch bei 75°C mit 50%iger wässriger NaOH-Lösung versetzt, so dass sich ein pH-Wert von pH = 7 ergab.

Der Carbaxymethylierungsgrad beträgt laut $^1$H-NMR in MeOD und $^1$H-TAI-NMR in CDCl$_3$ ca. 89%, so daß 11 mol% Alkylalkoxylat vorliegen. Dieses Gemisch wurde einer weiteren Carboxymethylierung unterzogen.

In einem 250 ml Planschliffreaktor mit dreistufigem Balkehrührer wurden 75 g (enthaltend 0,1 mol Alkylalkoxylat, 1,0 eq) des Alkylethercarboxylat-Alkyletheralkohol-Gemisches (enthaltend 11 mol% Alkyletheralkohol) für 30 min bei 50°C und 30 mbar gerührt. Nach Aufheben des Vakuums mit Stickstoff wurden 2,33 g (0,02 mol, 2.0 eq) Chloressigsäure Natriumsalz gegeben und bei 50°C für 15 min bei 400 Umdrehungen pro Minute unter Normaldruck gerührt. Danach wurde die nachfolgende Prozedur achtmal durchgeführt: es wurden 0,1 g (0,0025 mol, 0,25 eq) NaOH-Microprills (Durchmesser 0,5 - 1,5 mm) eingetragen, ein Vakuum von 30 mbar zur Enifernung des Reaktionswassers angelegt, für 50 min gerührt, und danach das Vakuum mit N$_2$ aufgehoben. Insgesamt wurden 0,8 g (0,02 mol, 2 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht Danach wurde. 10 h bei 50°C und 30 mbar nachgerührt. Das Vakuum wurde mit N$_2$ aufgehoben und der komplette Versuch in einen 500 ml Rundhalskolben überführt.

Es wurden bei 60°C 110 g Wasser und 110 g 1-Pentanol unter Rührung zugegeben. Der pH-Wert wurde von pH = 11 auf pH = 3 mittels 32%iger wässriger HCl-Lösung. eingestellt. Der Ansatz wurde auf 90°C erhitzt und für 1 h nachgerührt. Anschließend wurde der Ansatz sofort in einen Scheidetrichter überführt und die heißen Phasen voneinander getrennt. Die wässrige. Phase enthaltend NaCl und andere Nebenprodukte wurde verworfen. Die organische Phase (enthaltend Alkylethercarbonsäure und Alkyletheralkohol) wurde abgetrennt und das 1-Pentanol bei 100°C und <10 mbar entfernt. In einem 250 ml Rundhalskolben wurden unter Rühren das Alkylethercarbonsäure-Alkyletheralkohol-Gemisch bei 60°C mit 50%iger wässriger NaOH-Lösung versetzt, so dass sich ein pH-Wert von pH = 7 ergab.

Der Carboxymethylierungsgrad beträgt laut $^1$H-NMR in MoOD und $^1$H-TAI-NMR in CDCl$_3$ ca. 95%.

Alkylethercarboxylat-Alkyletheralkohol-Gemisch 12:C16C18-7PO-10EO-CH$_2$CO$_2$Na/C16C18 - 7 PO - 10 EO - H per KOH-Katalyse, basisch entspricht Tensidgemisch aus Tensid der allgemeinen Formel (I) R$^1$-O-(CH$_2$C(R$^2$) HO)$_x$-(CH$_2$C(CH$_3$)HO)$_y$-(CH$_2$CH$_2$O)$_z$-CH$_2$CO$_2$M und Tensid der allgemeinen Formel (II) R$^1$-O-(CH$_2$C(R$^2$)HO)$_x$ (CH$_2$C(CH$_3$)HO)$_y$-(CH$_2$CH$_2$O)$_z$-H mit R$^1$ = C$_{16}$H$_{33}$/C$_{18}$H$_{37}$, x = 0, y = 7 und z = 10, M = Na.

In einem 250 ml Planschliffreaktor mit dreistufigem Balkenrührer wurden 165,3 g (0,150 mol, 1.0 eq) C16C18 - 7 PO - 10 EO - H enthaltend 0,005 mol C16C18 - 7 PO - 10 EO - K (aus Herstellbeispiel Alkylalkoxylates 10, KOH-katalysiert, basisch) und 19,6 g (0,165 mol, 1,1 eq) Chloressigsäure. Natriumsalz (98% Reinheit) gegeben und bei 45°C für 15 min bei 400 Umdrehungen pro Minute unter Normaldruck gerührt. Danach wurde die nachfolgende Prozedur achtmal durchgeführt: es wurden 0,83 g (0,0206 mol, 0,1375 eq) NaOH-Microprills (Durchmesser. 0,5 - 1,5 mm) eingetragen, ein Vakuum von 30 mbar zur Entfernung des Reaktionswassers angelegt, für 50 min gerührt, und danach das Vakuum mit N$_2$ aufgehoben. Insgesamt wurden 6,6 g (0,165 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 4 h bei 45°C und 30 mbar nachgerührt. Das Vakuum wurde mit N$_2$ aufgehoben und der Versuch ausgefüllt (Ausbeute >95%). Man erhielt eine bei 20°C weiß-gelbliche viskose Flüssigkeit. Der pH-Wert (5% in Wasser) betrug 7,5. Der Wassergehalt betrug 1,3%. Die Analytik erfolgte analog des vorigen Beispiels (unter Berücksichtigung des höheren Molekulargewichtes würde bei 0% Umsatz eine OH-Zähl von 44,6 mg KOH / g für das Reaktionsgemisch belragen). Der molare Anteil an Chloressigsäure Natriumsalz beträgt ca. 2 mol%. Der Gehalt an NaCl liegt bei ca. 4,8 Gewichts%. Die OH-Zahl des Reaktionsgemisches liegt bei 10,4 mg KOH / g. Der molare Anteil an Glykolsäurenatriumsalz beträgt ca. 5 mol%. Der Carboxymethylierungsgrad beträgt 81%.

Alkylethercarboxylat-Alkyletheralkohol-Gemisch 13: C16C18-7PO-10EO-$CH_2CO_2Na$ / C16C18 - 7 PO - 10 EO - H per KOH-Katalyse, basisch entspricht Tensidgemisch aus Tensid der allgemeinen Formel (I) $R^1$-O-$(CH_2C(R^2)$ HO)$_x$-$(CH_2C(CH_3)HO)_y$-$(CH_2CH_2O)_z CH_2CO_2M$ und Tensid der allgemeinen Formel (II) $R^1$-O-$(CH_2C(R^2)$ HO)$_x$-$(CH_2C(CH_3)HO)_y$-$(CH_2CH_2O)_z$H mit $R^1$ = $C_{16}H_{33}$/$C_{18}H_{37}$, x = 0, y = 7 und z = 10, M = Na.

In einem 250 ml Planschliffreaktor mit dreistufigem Balkenrührer wurden 165,3 g (0,150 mol, 1.0 eq) C16C18 - 7 PO - 10 EO - H enthaltend 0,005 mol C16C18 - 7 PO - 10 EO - K (aus Herstellbeispiel Alkylalkoxylates 10, KOH-katalysiert, basisch) und 19,6 g (0,165 mol, 1,1 eq) Chloressigsäure Natriumsalz (98% Reinheit) gegeben und bei 45°C für 15 min bei 400 Umdrehungen pro Minute unter Normaldruck gerührt. Danach wurde die nachfolgende Prozedur achtmal durchgeführt; es wurden 0,83 g (0,0206 mol, 0,1375 eq) NaOH-Microphlis (Durchmesser 0,5 - 1,5 mm) eingetragen, ein leichter N2-Strom und Vakuum von -100 mbar zur Entfernung des Reaktionswassers angelegt, für 50 min gerührt, und danach das Vakuum mit $N_2$ aufgehoben. Insgesamt wurden 6,6 g (0,165 mol, 1,1 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 3 h bei 45°C und bei -100 mbar mit einem leichter N2-Strom nachgerührt. Das Vakuum wurde mit $N_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 11,2. Der Wassergehalt betrug 1,3%. Die Analytik erfolgte analog des vorigen Beispiels (unter Berücksichtigung des höheren Molekulargewichtes würde bei 0% Umsatz eine OH-Zahl von 44,6 mg KOH / g für das Reaktionsgemisch betragen). Der molare Anteil an Chloressigsäure Natriumsalz beträgt ca. 3 mol%. Der Gehalt an NaCl liegt bei ca. 4,8 Gewichts%. Die OH-Zahl des Reaktionsgemisches liegt bei 12,4 mg KOH / g. Der molare Anteil an Glykolsäurenatriumsalz beträgt ca. 2 mol%. Der Carboxymethylierungsgrad beträgt 73%.

Für die weiteren Anwendungstests wurde der pH-Wert durch Zugabe von wenig wässriger Salzsäure auf einen Bereich von 6 - 8 eingestellt.

Alkylethercarboxylat-Alkyletheralkohol-Gemisch 14: C16C18-7PO-10EO-$CH_2CO_2Na$ / C16C18 - 7 PO - 10 EO - H per KOH-Katalyse, basisch entspricht Tensidgemisch aus Tensid der allgemeinen Formel (I) $R^1$-O-$(CH_2C(R^2)$ HO)$_x$-$(CH_2C(CH_3)HO)_y$-$(CH_2CH_2O)_z CH_2CO_2M$ und Tensid der allgemeinen Formel (II) $R^1$-O-$(CH_2C(R^2)$ HO)$_x$-$(CH_2C(CH_3)HO)_y$-$(CH_2CH_2O)_z$-H mit $R^1$ = $C_{16}H_{33}$/$C_{18}H_{37}$, x = 0, y = 7 und z = 10, M = Na.

In einem 250 ml Planschliffreaktor mit dreistufigem Balkenrührer wurden 165,3 g (0,150 mol, 1.0 eq) C16C18 - 7 PO - 10 EO - H enthaltend 0,005 mol C16C18 - 7 PO - 10 EO - K (aus Herstellbeispiel Alkylalkoxylates 10, KOH-katalysiert, basisch) und 24,1 g (0,203 mol, 1,35 eq) Chloressigsäure Natriumsalz (98% Reinheit) gegeben und 45°C für 15 min bei 400 Umdrehungen pro Minute unter Normaldruck gerührt. Danach wurde die nachfolgende Prozedur achtmal durchgeführt: es wurden 1,02 g (0,0253 mol, 0,1688 eq) NaOH-Microprills (Durchmesser 0,5 - 1,5 mm) eingetragen, ein Vakuum von 30 mbar zur Entfernung des Reaktionswassers angelegt, für 50 min gerührt, und danach das Vakuum mit $N_2$ aufgehoben. Insgesamt wurden 8,1 g (0,203 mol, 1,35 eq) NaOH Microprills über einen Zeitraum von ca. 6,5 h zugegeben. Während der ersten Stunde dieses Zeitraums wurde die Umdrehungsgeschwingigkeit wurde auf ca. 1000 Umdrehungen pro Minute erhöht. Danach wurde 3 h bei 45°C und bei 30 mbar nachgerührt. Das Vakuum wurde mit $N_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 7,5. Der Wassergehalt betrug 1,5%. Die Analytik erfolgte analog des vorigen Beispiels (unter Berücksichtigung des höheren Molekulargewichtes würde bei 0% Umsatz eine OH-Zahl von 43,4 mg KOH / g für das Reaktionsgemisch betragen). Der molare Anteil an Chloressigsäure Natriumsalz beträgt ca. 2 mol%. Der Gehalt an NaCl liegt bei ca. 6,0 Gewichts%. Die OH-Zahl des Reaktionsgemisches liegt bei 8,0 mg KOH / g. Der molare Anteil an Glykolsäurenatriumsalz beträgt ca. 3 mol%. Der Carboxymethylierungsgrad beträgt 85%.

Alkylethercarboxylat-Alkyletheralkohol-Gemisch 15: C16C18-2PO-10EO-$CH_2CO_2Na$ / C16C18 - 7 PO - 10 EO - H per KOH-Katalyse, basisch entspricht Tensidgemisch aus Tensid der allgemeinen Formel (I) $R^1$O-$(CH_2C(R^2)HO)_x$ $(CH_2C(CH_3)HO)_y$-$(CH_2CH_2O)_z CH_2CO_2M$ und Tensid der allgemeinen Formel (II) $R^1$-O-$(CH_2C(R^2)HO)_x$-$(CH_2C(CH_3)$ HO)$_y$-$(CH_2CH_2O)_z$-H mit $R^1$ = $C_{16}H_{33}$/$C_{18}H_{37}$, x = 0, y = 7 und z = 10, M = Na.

In einem 250 ml Planschliffreaktor mit dreistufigem Balkenrührer wurden 165,3 g (0,150 mol, 1.0eq) C16C18 - 7 PO - 10 EO - H enthaltend 0,005 mol C16C18 - 7 PO - 10 EO - K (aus Herstellbeispiel Alkylalkoxylates 10, KOH-katalysiert, basisch) und 12 g (0,150 mol, 1,0 eq) wässrige 50%ige NaOH gegeben bei 400 Umdrehungen pro Minute unter Normaldruck geführt. Es wurde auf 80°C aufgeheizt und bei 30 mbar und 1,5 l $N_2$/h für 8 h das Reaktionswasser entfernt. Während der ersten Stunde dieses Zeitraums wurde die Umdrehungsgeschwingigkeit wurde auf ca. 1000 Umdrehungen pro Minute erhöht. Der W.assergehalt betrug 0.35%.

Nun wurden 19,6 g (0,165 mol, 1,1 eq) Chloressigsäure Natriumsalz (98% Reinheit) innerhalb von 7 h portionsweise bei 80°C, 30 mbar und 1,5 l $N_2$/h gegeben. Danach wurde 4 h bei 80°C und bei 30 mbar und 1,5 l $N_2$/h

nachgerührt. Das Vakuum wurde mit $N_2$ aufgehoben und der Versuch ausgefüllt (Ausbeute >95%).

Man erhielt eine bei 20°C weiß-gelbliche viskose Flüssigkeit. Der pH-Wert (5% in Wasser) betrug 9,6. Der Wassergehalt betrug 0,2%. Die Analytik erfolgte analog des vorigen Beispiels (unter Berücksichtigung des höheren Molekulargewichtes würde bei 0% Umsatz eine OH-Zahl von 44,6 mg KOH / g für das Reaktionsgemisch betragen). Der molare Anteil an Chloressigsäure Natriumsalz beträgt ca. 1 mol%. Der Gehalt an NaCl liegt bei ca. 4,8 Gewichts%. Die OH-Zahl des Reaktionsgemisches liegt bei 13,3 mg KOH / g. Der molare Anteil an Glykolsäurenatriumsalz beträgt ca. 12 mol%. Der Carboxymethylierungsgrad beträgt 83%.

Bei Bedarf ließ sich nach Verdünnung mit Butyldiethylenglykol und Wasser der pH-Wert mit Hilfe von wässriger Salzsäure auf pH = 7.75 einstellen.

Kommentierung der Herstellung der Alkylethercarboxylat (A) - Alkyletheralkohol (B) - Gemische:

Wie in den obigen Beispielen der Gemische 1 bis 15 (ausgenommen V10 und V11) anhand des jeweiligen Carboxymethylierungsgrades zu sehen ist, ist es bei effizienter Verwendung von Carboxymethylierungsreagenz (z.B. <1.3 eq $ClCH_2CO_2Na$, ansonsten erzeugt man eine große Menge an Nebenkomponenten, welche für die spätere Anwendung nicht nützlich sind) schwieriger, Carboxymethylierungsgrade von >84% zu erreichen, je mehr Propylenoxy-Einheiten das nichtionische Tensid (B) der allgemeinen Formel (II) bei gleichem Ethoxylierungsgrad enthält: z.B. 85% Carboxymethylierungsgrad bei Gemisch 8 (basiert auf C16C18C20-Guerbet-10EO) gegenüber 75% Carboxymethylierungsgrad bei Gemisch 4 (basiert auf C16C18-3PO-10EO) gegenüber 70% Carboxymethylierungsgrad bei Gemisch 5 (basiert auf C16C18-7PO-10EO). Dies war unerwartet.

Sehr hohe Carboxymethylierungsgrade von bspw. 95% waren nur über eine zweifach durchgeführte (und damit aufwendige) Umsetzung möglich (siehe Vergleichsgemisch V11). Zudem mussten sehr hohe Überschüsse an Chloressigsäure Natriumsalz (z.B. 2.0 eq) verwendet werden. Das Tensid basierte hier wiederum auf C16C18-3PO-10EO.

Überraschend wurde festgestellt, dass die Anwesenheit von neutralisiertem Alkoxylierungskatalysator wie z.B, KOAc die Carboxymethylierung stört (siehe Vergleichs-Gemisch V10). Der Carboxymethylierungsgrad lag trotz ansonsten ähnlicher Reaktionsbedingungen bei lediglich 30% (V10), während er im Gemisch 1a) bei 77% lag (Tensid basierte jeweils auf C16C18-3PO-10EO).

Ein unerwarteter Lösungsansatz beim Vorliegen von KOAc (welches sich nur schwer abtrennen lässt) demonstriert das Gemisch 2. Dort wurde etwas Wasser zu Beginn der Carboxymethylierung zugesetzt und man erhielt dadurch wieder einen besseren Carboxymethylierungsgrad von 72%.

Ein wesentlich einfacherer und neuer Ansatz (weil er den Neutralisationsschritt bzw. eine Abtrennung von Salzen jeweils am Ende der Alkoxylierung vermeidet) ist die Verwendung von basischem Alkoxylat in der Carboxymethylierung. Die Gemische 3 und 4 zeigen 74 bzw 75% Carboxymethylierungsgrad. Das Tensid basierte hier wiederum auf C16C18-3PO-10EO. Die über das Alkoxylat eingebrachte Menge an Base wurde eingerechnet und die Menge an NaOH-Mikroprills wurde entsprechend verringert. Bei Verwendung von entsalzter Ware lag der Carboxymethylierungsgrad bei 77% (Gemisch 1a)).

Gemisch 1b) zeigt den überraschend positiven Einfluss eines Zahnscheibenrührers, dadurch ließ sich gegenüber Gemisch 1a) der Carboxymethylierungsgrad von 77 auf rund 80% steigern. Wie bei Alkylethercarboxylat-Alkyletheralkohol-Gemisch 12 bzw. 13 im Vergleich zu Alkylethercarboxylat-Alkyletheralkohol-Gemisch 5 überraschenderweise zu sehen ist, ist ein kleiner Überschuss an Base (Summe aus basischem Alkoxylat und NaOH-Microprills) im Vergleich zum Chloressigsäurenatriumsalz von Vorteil, da sich mit 81% (Gemisch 12) bzw. 73% (Gemisch 13) Carboxymethylierungsgrad ein höherer Wert als bei Gemisch 5 (70% Carboxymethylierungsgrad) erreichen lässt. Die Unterschiede zwischen Gemisch 12 und 13 betreffend den Carboxymethylierungsrad lassen sich durch den weniger reduzierten Druck während der Reaktion erklären. Jedoch lassen sich im großtechnischen Verfahren sehr niedrige Drücke von <20 mbar nur mit größerem Aufwand realisieren (z.B. mit leistungsfähigeren und damit energieintensiveren bzw. teureren Pumpe). Daher stellt der Carboxymethylierungsgrad von 73% gegenüber 70% eine Verbesserung dar, weil er im großtechnischen Verfahren zudem einfacher zu realisieren ist. Eine Erhöhung des Carboxymethylierungsgrades auf 85% durch Erhöhung der eq an Chloressigsäure Natriumsalz sowie NaOH zeigt das Gemisch 14. Das Gemisch 15 zeigt ein alternatives Verfahren zur Herstellung des gewünschten Tensidgemisches, wobei das entstehende Reaktionswasser abgereichert wird, bevor Chloressigsäure Natriumsalz zugegeben wird, um die Hydrolyse des Carboxymethylierungsreagenzes zu vermindern.

In nachfolgenden Tests (z.B. Tabelle 1) wird zudem ein weiterer Vorteil des Verfahrens demonstriert. Man benötigt keine aufwendige Abtrennung von NaCl aus den obigen Gemischen. Daher entfallen die in der Literatur zusätzlichen Schritte wie Ansäuern, Phasentrennung und erneute Neutralisation der Alkylethercarbonsäure.

Testung der Alkylethercarboxylat (A) - Alkyletheralkohol (B) - Gemische:

Testmethoden:

Bestimmung der Stabilität

Die Bestimmung der Stabilität der Konzentrate der Alkylethercarboxylat (A) - Alkyletheralkohol (B) - Gemische erfolgte durch optische Betrachtung nach 2 wöchiger Lagerung bei entsprechenden Temperaturen. Die Konzentrate enthielten Wasser und Butyldiethylenglykol sowie die in den Herstellbeispielen beschriebenen Alkylethercarboxylat (A) - Alkyletheralkohol (B) - Gemische (falls erforderlich wurde durch Zugabe von wässriger Salzsäure der pH-Wert auf einen Bereich von 6.5 bis 8 eingestellt). Es wurde notiert, ob die Konzentrate homogen bleiben oder ob sich signifikante Phasenseparationen ergeben, welche eine homogene Probennahme vermeiden. Zudem wurden die Konzentrate (soweit möglich) bei -18°C eingefroren und bei 20°C wieder aufgetaut und beobachtet, ob sich eine irreversible Phasenseparation ergibt.

Bestimmung der Viskosität

Die Bestimmung der dynamischen Viskositäten der Konzentrate der Alkylethercarboxylat (A) - Alkyletheralkohol (B) - Gemische erfolgte mit einem Viskosimeter der Firma Anton Parr: RheolabQC. Die Konzentrate enthielten Wasser und Butyldiethylenglykol (BDG) sowie die in den Herstellbeispielen beschriebenen Alkylethercarboxylat (A) - Alkyletheralkohol (B) - Gemische. Die Viskositäten wurden bei Scherraten von 10, 100, 250 und (optional) 1000 $s^{-1}$ und Temperaturen von (optional 5) 20 und 50 °C durchgeführt.

Bestimmung der Löslichkeit

Die Tenside wurden in der jeweils zu untersuchenden Konzentration in salzhaltigem Wasser mit der jeweiligen Salzzusammensetzung bei 20 - 30°C für 30 min gerührt (alternativ wurde das Tensid in Wasser gelöst, bei Bedarf durch Zugabe von wässriger Salzsäure der pH-Wert auf einen Bereich von 6.5 bis 8 eingestellt und entsprechende Mengen an jeweiligem Salz bei 20°C eingelöst). Danach wurde schriftweise erwärmt bis eine Trübung oder eine Phasenseparation einsetzte. Danach wurde vorsichtig abgekühlt und der Punkt notiert, bei der die Lösung wieder klar bzw. leicht streuend wurde. Dies wurde als Trübungspunkt festgehalten Bei bestimmten festen Temperaturen wurde das Erscheinungsbild der Tensidlösung in salzhaltigem Wasser notiert. Klare Lösungen oder Lösungen, die leicht streuend sind und die durch leichte Scherung wieder etwas heller werden (aber nicht mit der Zeit aufrahmen), werden als akzeptabel angesehen. Besagte leicht streuende Tensidlösungen wurden durch einen Filter mit 2 $\mu$m Porengrösse filtriert. Es zeigte sich keinerlei Abtrennung.

Bestimmung der Grenzflächenspannung

Es wurden Grenzflächenspannungen von Rohöl gegenüber salinem Wasser in Gegenwart der Tensidlösung bei Temperatur per spinning-drop-Verfahren an einem SVT20 der Firma DataPhysics bestimmt. Dazu wurde ein Öltropfen in eine mit saliner Tensidlösung gefüllter Kapillare bei Temperatur injiziert und die Ausdehnung des Tropfens bei circa 4500 Umdrehungen pro Minute beobachtet und die zeitliche Entwicklung der Grenzflächenspannung notiert. Die Grenzflächenspannung IFT (oder s) errechnet sich dabei - wie von Hans-Dieter Dörfler in "Grenzflächen und kolloid-disperse Systeme" Springer Verlag Berlin Heidelberg 2002 beschrieben - nach folgender Formel aus dem Zylinderdurchmesser $d_z$, der Drehzahl w, und der Dichtedifferenz

$$(d_1 - d_2) : s_{\parallel} = 0{,}25 \cdot d_z^3 \cdot w2 \cdot (d_1 - d_2).$$

Der API-Grad (American Petroleum Institute-Grad) ist eine konventionelle, in den USA gebräuchliche, Dichteeinheit für Rohöle. Sie wird weltweit zur Charakterisierung und als Qualitätsmaßstab von Rohöl verwendet. Der API-Grad ergibt sich aus der relativen Dichte $p_{rel}$ des Rohöls bei 60 °F (15,56 °C) bezogen auf Wasser durch

$$\text{API-Grad} = (141{,}5 / p_{rel}) - 131{,}5.$$

Testergebnisse:

Es wurden die folgende Testergebnisse erzielt:
Die Versuchsergebnisse zur Stabilität und Viskosität der Konzentrate sind in Tabelle 1 dargestellt.

Tabelle 1 *Konzentrate aus Tensidgemisch Alkylethercarboxylat-Alkyletheralkohol*

| Beispiel | Tensidkonzentrat | Viskosität bei 20°C und verschiedener Scherrate | Viskosität bei 50°C und verschiedener Scherrate | Erscheinungsbild nach zweiwöchiger Lagerung bei 20°C | Erscheinungsbild nach Einfrieren und späterem Auftauen bei 20°C |
|---|---|---|---|---|---|
| 1 | 40 Gew.-% Alkylethercarboxylat-Alkyletheralkohol-Gemisch 1 b) [enthaltend Tensidgemisch aus $C16C18-3PO-10EO-CH_2CO_2Na$ : $C16C18-3PO-10EO-H$ (80 mol% : 20 mol%)][a], 30 Gew.-% BDG, 30 Gew.-% Wasser | ~65 mPas (100 Hz) | ~ 25 mPas (100 Hz) | Flüssigkeit mit sehr geringer Menge an homogen verteilten Kristallen, welche sich nach Erwärmen auf 50°C auflösen (homogene Eindosierung des Konzentrates in Salzlösung bei 20°C und komplette Auflösung in Salzlösung mit 30000 ppm Gesamtsalinität) | Flüssigkeit mit geringer Menge an homogen verteilten Kristallen, welche sich nach Erwärmen auf 50°C auflösen (homogene Eindosierung des Konzentrates in Salzlösung bei 20°C und komplette Auflösung in Salzlösung mit 30000 ppm Gesamtsalinität) |
| 2 | 60 Gew.-% Alkylethercarboxylat-Alkyletheralkohol-Gemisch 5 [enthaltend Tensidgemisch aus $C16C18-7PO-10EO-CH_2CO_2Na$ : $C16C18-7PO-10EO-H$ (70 mol% : 30 mol%)][b], 20 Gew.-% BDG, 20 Gew.-% Wasser | ~340 mPas (10 Hz) ~340 mPas (100 Hz) ~310 mPas (1000 Hz) | ~110mPas (10 Hz) ~100mPas (100 Hz) ~100 mPas (1000 Hz) | Flüssigkeit mit geringer Menge an homogen verteilten Kristallen, welche sich nach Erwärmen auf 50°C auflösen (homogene Eindosierung des Konzentrates in Salzlösung bei 20°C und komplette Auflösung in Salzlösung mit 30000 ppm Gesamtsalinität). | Flüssigkeit mit geringer Menge an homogen verteilten Kristallen, welche sich nach Erwärmen auf 50°C auflösen (homogene Eindosierung des Konzentrates in Salzlösung bei 20°C und komplette Auflösung in Salzlösung mit 30000 ppm Gesamtsalinität) |
| 3 | 40 Gew.-% Alkylethercarboxylat-Alkyletheralkohol-Gemisch 6 [enthaltend Tensidgemisch aus $C16C18-7PO-4EO-CH_2CO_2Na$ : $C16C18-4PO-10EO-H$ (61 mol% : 39 mol%)][c], 30 Gew.-% BDG, 30 Gew.-% Wasser | ~55 mPas (100 Hz) | ~25 mPas (100 Hz) | Flüssigkeit mit geringer Menge an homogen verteilten Kristallen, welche sich nach Erwärmen auf 50°C auflösen (homogene Eindosierung des Konzentrates in Salzlösung bei 20°C und komplette Auflösung in Salzlösung mit 30000 ppm Gesamtsalinität) | Flüssigkeit mit geringer Menge an homogen verteilten Kristallen, welche sich nach Erwärmen auf 50°C auflösen (homogene Eindosierung des Konzentrates in Salzlösung bei 20°C und komplette Auflösung in Salzlösung mit 30000 ppm Gesamtsalinität) |

(fortgesetzt)

| Beispiel | Tensidkonzentrat | Viskosität bei 20°C und verschiedener Scherrate | Viskosität bei 50°C und verschiedener Scherrate | Erscheinungsbild nach zweiwöchiger Lagerung bei 20°C | Erscheinungsbild nach Einfrieren und späterem Auftauen bei 20°C |
|---|---|---|---|---|---|
| 4 | 60 Gew.-% Alkylethercarboxylat-Alkyletheralkohol-Gemisch 7 [enthaltend Tensidgemisch aus C16C18C20-Guerbet-18EO-$CH_2CO_2Na$ : C16C18C20-Guerbet-18EO-H (87 mol% : 13 mol%)][e], 20 Gew.-% BDG, 20 Gew.-% Wasser | ~260 mPas (10 Hz) ~260 mPas (100 Hz) ~240 mPas (1000 Hz) | ~60 mPas (10hz) ~ 67 mPas (100 Hz) ~ 71 mPas (1000 Hz) | Klare Flüssigkeit (homogene Eindosierung des Konzentrates in Salzlösung bei 20°C und komplette Auflösung in Salzlösung mit 30000 ppm Gesamtsalinität) | Klare Flüssigkeit (homogene Eindosierung des Konzentrates in Salzlösung bei 20°C und komplette Auflösung in Salzlösung mit 30000 ppm Gesamtsalinität) |
| 5 | 40 Gew.-% Alkylethercarboxylat-Alkyletheralkohol-Gemisch 7 [enthaltend Tensidgemisch aus C16C18C20-Guerbet-18EO-$CH_2CO_2Na$ : C16C18C20-Guerbet-18EO-H (87 mol% : 13 mol%)][e] 30 Gew.-% BDG, 30 Gew.-% Wasser | ~70 mPas (100 Hz) | ~30 mPas (100 Hz) | Klare Flüssigkeit (homogene Eindosierung des Konzentrates in Salzlösung bei 20°C und komplette Auflösung in Salzlösung mit 30000 ppm Gesamtsalinität) | Kein Einfrieren bei -18°C möglich; nach 2 Wochen Lagerung bei -18°C weiterhin klare Flüssigkeit |

a) Alkylethercarboxylat-Alkyletheralkohol-Gemisch 1 b); entspricht Tensidgemisch aus 80 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 20 mol% Tensid der allgemeinen Formel (II) $R^1$-O-$(CH_2C(R^2)HO)_x$-$(CH_2C(CH_3)HO)_y$-$(CH_2CH_2O)_z$H mit $R^1$ = $C_{16}H_{33}$/$C_{18}H_{37}$ x = 0, y = 3 und z = 10, M = Na.

b) Alkylethercarboxylat-Alkyletheralkofol-Gemisch 5; entspricht Tensidgemisch aus 70 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 30 mol% Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}$/$C_{18}H_{37}$, x = 0, y = 7 und z = 10, M = Na.

c) Alkylethercarboxylat-Alkyletheralkohol-Gemisch 6; entspricht Tensidgemisch aus 61 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 39 mol% Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}$/$C_{18}H_{37}$, x = 0, y = 7 und z = 4, M = Na.

d) Alkylethercarboxylat-Alkyletheralkohol-Gemisch 8; entspricht Tensidgemisch aus 85 mol% Tensid der allgemeinen Formel (I) $R^1$-O-$(CH_2C(R^2)HO)_x$-$(CH_2C(CH_3)HO)_y$-$(CH_2CH_2O)_z$ -$CH_2CO_2M$ und 15 mol% Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}$/$C_{18}H_{37}$/$C_{20}H_{41}$, x = 0, y = 0 und z = 10, M = Na.

e) Alkylethercarboxylat-Alkyletheralkohol-Gemisch 7; entspricht Tensidgemisch aus 87 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 13 mol% Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}$/$C_{18}H_{37}$/$C_{20}H_{41}$, x = 0, y = 0 und z = 18, M = Na.

Wie in Tabelle 1 anhand der Beispiele 1 bis 4 zu sehen ist, können Konzentrate mit rund 55% Aktivgehalt (Tensidgemisch) erhalten werden, welche trotz Anwesenheit von ≥3 Gew.-% NaCl (aus Alkylethercarboxylat-Alkyletheralkoholgemisch) stabil bleiben: es tritt keine Phasenseparation aufgrund der Anwesenheit von Elektrolyten auf. Dadurch erübrigt sich der Schritt einer aufwendigen Abtrennung von NaCl durch Phasenseparation (z.B. Ansäuern, Erhitzen auf 90°C, Phasentrennung optional mit Lösungsmittel, organische Phase wieder neutralisieren; s.a. Alkylethercarboxylat-Alkylakoxylat-Gemisch 11) in der Alkylethercarboxylat-Herstellung. Dies bedeutet eine schnellere Produktion, geringeren Chemikalienverbrauch, geringeren Energieaufwand und geringere Kosten. Zudem wird kein salzreiches Abwasser dem Oberflächenwasser (über eine Kläranlage) zugeführt. Stattdessen wird das NaCl aus der Herstellung in die Erdöllagerstätte mit verpumpt. Dort trifft es auf salziges Formationswasser mit einem zur verpumpten Menge enorm großen Überschuß an NaCl.

Der Transport dieser Konzentrate (von dem herstellenden Betrieb zur Lagerstätte) ist weniger umweltbelastend, da der Anteil an unnütz transportiertem Wasser gering ist (nicht 70 Gew.-% Wasser wie bei vielen Aniontensidlösungen, sondern beispielsweise lediglich 20 -30 Gew.-%) und somit weniger Platz und Energie verbraucht wird. Aufgrund der grossen Mengen (z.B. 10000 to Tensid pro Jahr) für die Erschließung eines Feldes über 10 Jahre, rechnet sich auch der Aufwand einer Containerisolierung oder moderate Beheizung, um das Konzentrat bei ca. 15 - 20°C zu halten, da auf der Transportseite sehr viel Energie eingespart wird (geringerer Dieselverbrauch bei Schiffen und LKW).

Wie Beispiel 5 zeigt läßt sich das Konzentrat aus Beispiel 4 durch Zugabe gleicher Mengen an BDG und Wasser verdünnen und man gelangt zu sehr kältestabilen Konzentraten (bei -18°C ist das Konzentrat aus Beispiel 5 immer noch flüssig), welche bei der Lagerstätte einfacher gehandhabt werden können (geringere Beheizungsmaßnahmen; Verdünnungsmaßnahmen vor Ort sind möglich, da Wasser und BDG separat zur Verfügung gestellt werden kann bzw. Vorhanden ist).

Die besagten Konzentrate aus Beispiel 1 bis 5 sind im Feld gut handhabbar, da ihre Viskositäten unterhalb von 1000 mPas bei 50°C (auch bei niedrigen Scherraten von 10 Hz) liegen und somit bei den eingesetzten Pumpen keine Schwierigkeiten bereiten. Auch die in manchen Konzentraten beobachteten geringeren Mengen an homogenverteilten Kristallen ist unproblematisch, da diese sich durch kurzes Erwärmen auf 50°C auflösen. Alternativ kann man das Konzentrat mit den Kristallen homogen in das Injektionswasser verpumpen, wobei sich das Konzentrat und die Kristalle sofort auflösen.

Die Versuchsergebnisse zur Löslichkeit und zur Grenzflächenspannung nach 3 h sind in Tabelle 2 dargestellt.

Tabelle 2 Grenzflächenspannungen mit Tensidgemisch Alkylethercarboxylat-Alkyletheralkohol

| Beispiel | Tensidformulierung | Salzlösung | Rohöl [° API] | IFT bei Temperatur | Tensidlöslichkeit in der Salzlösung bei Temperatur |
|---|---|---|---|---|---|
| 1 | 0,11% Tensidgemisch aus C18C18-3PO-10EO-$CH_2CO_2Na$ : C16C18-3PO-10EO-H (80 mol% : 20 mol%)[a] | ~148200 ppm Salzgehalt mit 585 ppm zweiwertigen Kationen (14,4% NaCl, 0,15% KCl, 0,15% $MgCl_2$ x 6 $H_2O$, 0,15% $CaCl_2$ x 2 $H_2O$, 0,15% $Na_2SO_4$) | 25,9 | 0,079 mN/m bei 60° C | Leicht streuend bei 60°C. |
| V2 | 0,1% Dodecylbenzolsulfonat Natriurnsaiz[b] | ~103130 ppm Salzgehalt mit 3513 ppm zweiwertigen Kationen (8,98% NaCl, 0,11% KCl, 0,90% $MgCl_2$ x 6 $H_2O$, 0,90% $CaCl_2$ x 2 $m_2O$, 0,11% $Na_2SO_4$) | 25,9 | >1 mN/m bei 60°C | Unlöslich bei 60°C |
| V3 | 0,1% Dodecylbenzolsulfonat Natriumsalz[b] | ~103130 ppm Salzgehalt mit 3513 ppm zweiwertigen Kationen (8,98% NaCl, 0,11% KCl, 0,90% $MgCl_2$ x 6 $H_2O$, 0,90% $CaCl_2$ x 2 $H_2O$, 0,11% $Na_2SO_4$) | 25,9 | >1 mN/m bei 80°C | Unlöslich bei 80°C |
| 4 | 0,22% Tensidgemisch aus C16C18-7PO-4EO-$CH_2CO_2Na$ : C16C18-7PO-4EO-H (61 mol% :39 mol%)[c] | ~29910 ppm Salzgehalt mit 117 ppm zweiwertigen Kationen (2,88% NaCl, 0,03% KCl, 0,03% $MgCl_2$ x 6 $H_2O$, 0,03% $CaCl_2$ x 2 $H_2O$, 0,03% $Na_2SO_4$) | 25,9 | 0,089 mN/m bei 60°C | klar bei 60°C |

(fortgesetzt)

| Beispiel | Tensidformulierung | Salzlösung | Rohöl [° API] | IFT bei Temperatur | Tensidlöslichkeit in der Salzlösung bei Temperatur |
|---|---|---|---|---|---|
| 5 | 0,22% Tensidgemisch aus C16C18C20-Guerbet-1OEO-CH$_2$CO$_2$Na : C16C18C20-Guerbet-10EO-H (85 mol% : 15 mol%)$^{d)}$ | ~69580 ppm Salzgehalt mit 273 ppm zweiwertigen Kationen (6,72% NaCl, 0,07% KCl, 0,07%: MgCl$_2$ x 6H$_2$O, 0,07% CaCl$_2$ x 2 H$_2$O, 0,07% Na$_2$SO$_4$) | 25,9 | 0,072 mN/m bei 100°C | leicht streuend bei 100°C |
| 6 | 0,22% Tensidgemisch aus C16C18C20-Guerbet-10EO-CH$_2$CO$_2$Na : C16C18C20-Guerbet-10EO-H (85 mol% :15 mol%)$^{d)}$ | ~ 65670 ppm Salzgehalt mit 2236 ppm zweiwertigen Kationen (5,71% NaCl, 0,07% KCl, 0,57% MgCl$_2$ x 6 H$_2$O, 0,57% CaCl$_2$ x 2 H$_2$O, 0,07% Na$_2$SO$_4$) | 25,9 | 0,021 mN/m bei 100°C. | leicht streuend bei 100°C |
| V7 | 0.11% Tensidgemisch aus C16C18-3PO-10EO-CH$_2$CO$_2$Na : C16C18-3PO-10EO-H (25 mol% : 75 mol%)$^{e)}$ | ~ 69580 ppm Salzgehalt mit 273 ppm zweiwertigen Kationen (6,72% NaCl, 0,07% KCl, 0,07% MgCl$_2$ x 6 H$_2$O, 0,07% CaCl$_2$ x 2 H$_2$O, 0,07% Na$_2$SO$_4$) | 25,9 | 0,332 mN/m bei 60°C | klar bei 60°C |
| V8 | 0,22% Tensidgemisch aus G16C18-7PO-4EO-CH$_2$CO$_2$Na : C16C18-7PO-4EO-H (40 mol% : 60 mol%)$^{f)}$ | ~ 29910 ppm Salzgehalt mit 117 ppm zweiwertigen Kationen (2,88% NaCl, 0,03% KCl, 0,03% MgCl$_2$ x 6 H$_2$O, 0,03% CaCl$_2$ x 2 H$_2$O, 0,03% Na$_2$SO$_4$) | 25,9 | 0,536 mN/m bei 60°C | klar bei 60°C |
| 9 | 0,11% Tensidgemisch aus C16C18-3PO-10EO-CH$_2$CO$_2$Na : C16C18-3PO-10EO-H (80 mol% : 20 mol%)$^{a)}$ | ~ 140700 ppm Salzgehalt mit 4957 ppm zweiwertigen Kationen (12,2% NaCl, 0,15% KCl; 1,27% MgCl$_2$ x 6 H$_2$O, 1-27% CaCl$_2$ x 2 H$_2$O, 0,15% Na$_2$SO$_4$) | 25,9 | 0,007 mN/m bei 60°C | Leicht streuend bei 60°C |
| 10 | 0,22% Tensidgemisch aus G16G18-7PO-10EO-CH$_2$CO$_2$Na : C16C18-7PO-10EO-H (70 mol% : 30 mol%)$^{g)}$ | ~30780 ppm Salzgehalt mit 155 ppm zweiwertigen Kationen | 38 | 0,003 mN/m bei 92°C. | Leicht streuend bei 92°C |

a) Abgeleitet aus Alkylethercarboxylat-Alkyletheralkohol-Gemisch 1 b): entspricht Tensidgemisch aus 80 mol% Tensid der allgemeinen Formel (I) R$^1$-O-(CH$_2$C(R$^2$)HO)$_x$-(CH$_2$C(CH$_3$)HO)$_y$-(CH$_2$CH$_2$O)$_z$ -CH$_2$CO$_2$M und 20 mol% Tensid der allgemetnen Formel (II) R$^1$-O-(CH$_2$C(R$^2$)HO)$_x$-(CH$_2$C(CH$_3$)HO)$_y$-(CH$_2$CH$_2$O)$_z$ -H mit R$^1$ = C$_{16}$H$_{33}$/C$_{18}$H$_{37}$, x = 0, y = 3 und z = 10, M = Na.

b) Dodecylbenzolsulfonat Natriumsalz (Lutensit A$^2$LBN, 50% Aktivgehalt).

c) Abgeleitet aus Alkylethercarboxylat-Alkyletheralkohol-Gemisch 6; entspricht Tensidgemisch aus 61 mol% Tensid der allgemeinen Formel (I) R$^1$-O-(CH$_2$C(R$^2$)HO)$_x$-(CH$_2$CCCH$_3$)HO)$_y$-(CH$_2$CH$_2$O)$_z$ -CH$_2$CO$_2$M und 39 mol% Tensid der allgemeinen Formel (II) R$^1$-O-(CH$_2$C(R$^2$)HO)$_x$-(CH$_2$C(CH$_3$)HO)$_y$-(CH$_2$CH$_2$O)$_z$ -H mit R$^1$ = C$_{16}$H$_{33}$/C$_{18}$H$_{37}$, x = 0, y = 7 und z = 4, M = Na.

d) Abgeleitet aus Alkylethercarboxylat-Alkyletheralkohol-Gemisch 8; entspricht Tensidgemisch aus 85 mol% Tensid der allgemeinen Formel (I) R$^1$O-(CH$_2$(R$^2$)HO)$_x$-(CH$_2$C(CH$_3$)HO)$_y$-(CH$_2$CH$_2$O)$_z$ -CH$_2$CO$_2$M und 15 mol% Tensid der allgemeinen Formel (II) R$^1$-O-(CH$_2$C(R$^2$)HO)$_x$-(CH$_2$C(CH$_3$)HO)$_y$$^2$(CH$_2$CH$_2$O)$_z$-H mit R$^1$ =C$_{16}$H$_{33}$/C$_{18}$H$_{37}$/C$_{20}$H$_{41}$, x = 0, y = 0 Q und z= 10, M = Na.

(fortgesetzt)

| Beispiel | Tensidformulierung | Salzlösung | Rohöl [° API] | IFT bei Temperatur | Tensidlöslichkeit in der Salzlösung bei Temperatur |
|---|---|---|---|---|---|
| e) Hergestellt aus Mischung von 0,0625% des Alkyletheralkoholes 1, welches Tensid der allgemeinen Formel (II) $R^1$-O-$(CH_2C(R^2)HO)_x$-$(CH_2C(CH_3)HO)_y$-$(CH_2CH_2O)_2$ -H mit $R^1$ = $C_{16}H_{33}$/$C_{18}H_{37}$, x = 0, y = 3 und z = 10 entspricht, und 0.0375% des Alkylethercarboxylat-Alkyletheralkohol-Gemisch 1 b), welches Tensidgemisch aus 80 mol% Tensid der allgemeinen Formel (I) $R^1$-O-$(CH_2C(R^2)HO)_x$-$GH_2C(CH_3)HO)_y$-$(CH_2CH_2O)_z$ -$CH_2CO_2M$ und 20 mol% Tensid der allgemeinen Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}$/$C_{18}H_{37}$, x = 0, y = 3 und z = 10, M = Na entspricht. | | | | | |
| f) Hergestellt aus Mischung von 0,052% des Alkyletheralkoholes 6, welches Tensid der allgemeinen Formel (II) $R^1$-O-$(CH_2C(R^2)HO)_x$-$(CH_2C(CH_3)HO)_y$-$[CH_2CH_2O)_z$-H mit $R^1$ = $C_{16}H_{38}H_{ay}$, x =0, y = 7 und z= 4 entspricht, und 0.148% des Alkylethercarböxylat- Älkyletheralkohol: Gemisch 6, welches Tensidgemisch aus 61 mol% Tensid der allgemeinen Formel (I) $R^1$-O-$(CH_2C(R^2)HO)_x$-$(CH_2C(CH_3)HO)_y$-$(CH_2CH_2O)_z$ -$CH_2CO_2M$ und 39 mol% Tensid der allgemeinen Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}$/$C_{18}H_{37}$, x = 0, y = 7 und z = 4, M = Na entspricht. | | | | | |
| g) Abgeleitet aus Alkylethercarboxylat-Alkyletheralkohol-Gemisch 5; entspricht Tensidgemisch aus 70 mol% Tensid der allgemeinen Formel (I) $R^1$-O-$(CH_2C(R^2)HO)_x$-$(CH_2C(CH_3)HO)_y$-$(CH_2CH_2O)_z$ -$CH_2CO_2M$ und 30 mol% Tensid der allgemeinen Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}$/$C_{18}H_{37}$, x= 0, y = 7 und z = 10, M = Na. | | | | | |

Wie in Tabelle 2 zu sehen ist, liefern die Alkylethercarboxylat-Alkyletheralkohol-Tensidgemische im beanspruchten Molmengenverhältnis, basierend auf unterschiedlichen Alkylresten und mit unterschiedlichen Alkoxylierungsgraden, Grenzflächenspannungen von <0.1 mN/m bei >55°C und einer Gesamttensidkonzentration von <0.5% Tensid. Überraschenderweise ist dies der Fall, sofern u.a. ein gewisser Carboxymethylierungsgrad beim Alkylethercarboxylat-Alkyletheralkohol-Tensidgemisch vorliegt. Vergleichsbeispiele V7 und V8 zeigen, dass ein Carboxymethylierungsgrad von 25 bzw. 40% nicht ausreichend ist, um die Grenzflächenspannung auf <0.1 mN/m abzusenken. Vergleicht man jedoch Bsp. 4 mit Vergleichsbeispiel V8, so ist zu erkennen, dass unter identischen Bedingungen die Grenzflächenspannung auf 0.089 mN/m (Bsp. 4) abgesenkt wurde, indem der Carboxymethylierungsgrad von 40 auf 61% angehoben wurde. Das verwendete Alkylethercarboxylat-Alkyletheralkohol-Tensidgemisch basierte auf einem linearen primären C16C18-Fettalkohol umgesetzt mit 7 eq Propylenoxid und 4 eq Ethylenoxid sowie dem entsprechenden Carboxylat.

Bsp. 5 und 6 zeigen ein Alkylethercarboxylat-Alkyletheralkohol-Tensidgemisch, welches auf einem primären C16C18C20-Guerbetalkohol (und damit verzweigtem Alkohol) umgesetzt mit 10 eq Ethylenoxid sowie dem entsprechenden Carboxylat basiert. Der Carboxymethylierungsgrad beträgt 85%. Trotz herausfordernder Testbedingungen (hohe Temperatur von 100°C, mittleres Öl mit 25.9° API und mittlere Salinität mit Salzgehalten von ca. 6.5 - 6.9%) wurden Grenzflächenspannungen von 0.072 mN/m (Bsp. 5) bzw. 0.021 mN/m (Bsp. 6) erreicht. Erstaunlicherweise ist trotz vielfach höherer Konzentration an zweiwertigen Kationen (2236 ppm vs. 273 ppm) die Grenzflächenspannung im Beispiel 6 niedriger (0.021 mN/m) als im Beispiel 5 (0.072 mN/m). Ebenfalls überraschend ist die gute Härtetoleranz, da trotz Gegenwart von zweiwertigen Kationen keine Unterschiede in der Löslichkeit zu erkennen sind. Die bei der tertiären Erdölförderung üblicherweise verwendeten organische Sulfonate wie z.B. Dodecylbenzolsulfonat (Vergleichsbeispiel V2 und V3) sind zwar hydrolysestabil, aber unter den gewählten Bedingungen alleine unlöslich (10.3% Salzgehalt mit 3513 ppm zweiwertige Kationen bei 60 bzw. 80°C in Vergleichsbeispiel V2 bzw. V3).

Ähnlich überraschende Befunde zeigt der Vergleich von Bsp. 1 und mit Beispiel 9. Das verwendete Alkylethercarboxylat-Alkyletheralkohol-Tensidgemisch basierte auf einem linearen primären C16C18-Fettalkohol umgesetzt mit 3 eq Propylenoxid und 10 eq Ethylenoxid sowie dem entsprechenden Carboxylat. Der Carboxymethylierungsgrad lag bei 80%. Bei Salzgehalten von ca. 15 bzw. ca. 14% konnte im Fall von 4957 ppm zweiwertige Kationen sogar ultraniedrige Grenzflächenspannungen erzielt werden: 0.007 mN/m im Beispiel 9. Bei niedrigerer Wasserhärte (585 ppm zweiwertige Kationen im Bsp. 1) aber ansonsten analogen Bedingungen war in Bsp. 1 die Grenzflächenspannung höher, aber immer noch <0.1 mN/m. Überraschend ultraniedrige Grenzflächenspannungen von 0.003 mN/m an einem leichten Rohöl (38° API) bei hoher Temperatur (92°C) wurde in Bsp. 10 mit Hilfe eines Alkylethercarboxylat-Alkyletheralkohol-Tensidgemisches erreicht. Das verwendete Alkylethercarboxylat-Alkyletheralkohol- Tensidgemisch basierte auf einem linearen primären C16C18-Fettalkohol umgesetzt mit 7 eq Propylenoxid und 4 eq Ethylenoxid sowie dem entsprechenden Carboxylat. Der Carboxymethylierungsgrad beträgt 70%. Die Grenzflächenspannung betrug nach 3 h wie beschrieben 0.003 mN/m 30 min betrug die Grenzflächenspannung bereits 0.007 mN/m.

Tabelle 3 Grenzflächenspannungen mit Tensidgemisch Alkylethercarboxylat-Alkyletheralkohol und Cosolvens

| Beispiel | Tensidformulierung | Salzlösung | Rohöl [°API] | IFT bei Temperatur | Tensidlöslichkeit in der Salzlösung bei Temperatur |
|---|---|---|---|---|---|
| 1 | 0,11% Tensidgemisch aus $C16C18-3PO-10EO-CH_2CO_2Na$ ; $C16C18-3PO-10EO-H$ (80 mol% : 20 mol%)[a)] | ~ 148200 ppm Salzgehalt mit 585 ppm zweiwertigen Kationen (14,4% NaCl, 0,15% KCl, 0,15% $MgCl_2$ x 6 $H_2O$, 0,15% $CaCl_2$ x 2 $H_2O$, 0,15% $Na_2SO_4$) | 25,9 | 0,079 mN/m bei 60°C | Leicht streuend bei 60°C |
| 2 | 0,11% Tensidgemisch (aus $C16C18-3PO-10EO-CH_2CO_2Na$ : $C16C18-3PO-10EO-H$ (80 mol% : 20 mol%)[a)]) und 0.03% Butyldiethylenglykol | ~ 148200 ppm Salzgehalt mit 585 ppm zweiwertigen Kationen (14,4% NaCl, 0,15% KCl, 0,15% $MgCl_2$ x 6 $H_2O$, 0,15% $CaCl_2$ x 2 $H_2O$, 0,15% $Na_2SO_4$) | 25,9 | 0,035 mN/m bei 60°C | Klar bei 60°C |
| 3 | 0,22% Tensidgemisch (aus $C18C18-3PO-10EO-CH_2CO_2Na$ : $C16C18-3P0-10EO-H$ (80 mol% : 20 mol%)[a)]) und 0,06% Butyldiethylenglykol | ~ 140700 ppm Salzgehalt mit 4957 ppm zweiwertigen Kationen (12,2% NaCl, 0,15% KCl, 1,27% $MgCl_2$ x 6 $H_2O$, 1,27% $CaCl_2$ x 2 $H_2O$, 0,15% $Na_2SO_4$) | 25,9 | 0,019 mN/m bei 60°C | Leicht streuend bei 60°C |
| V4 | 0,2% Tensidgemisch (aus $C16C18-3P0-10E0-CH_2CO_2Na$ : $C16C18-3PO-10EO-H$ (95 mol% : 5 mol%)[b)]) und 0.06% Butyldiethylenglykol | ~ 140700 ppm Salzgehalt mit 4957 ppm zweiwertigen Kationen (12,2% NaCl, 0,15% KCl, 1,27% $MgCl_2$ x 6 $H_2O$, 1,27% $CaCl_2$ x 2 $H_2O$, 0,15% $Na_2SO_4$) | 25,9 | 0,109 mN/m bei 60°C | Leicht streuend bei 60°C |
| 5 | 0,22% Tensidgemisch (aus $C16C18-7PO-10EO-CH_2CO_2Na$ : $C16C18-7PO-10EO-H$ (81 mol% : 19 mol%)[c)]) und 0.073% Butyldiethylenglykol | ~ 30780 ppm Salzgehalt mit 155 ppm zweiwertigen Kationen | 38 | 0,002 mN/m bei 92°C | Leicht streuend bei 92°C |
| 6 | 0,22% Tensidgemisch (aus $C16C18-7P0-10E0-CH_2CO_2Na$ : $C16C18-7PO-10EO-H$ (73 mol% : 27 mol%)[d)]) und 0.073% Butyldiethylenglykol | ~30780 ppm Salzgehalt mit 155 ppm zweiwertigen Kationen | 38 | 0,001 mN/m bei 92°C | Leicht streuend bei 92°C |

(fortgesetzt)

| Beispiel | Tensidformulierung | Salzlösung | Rohöl [°API] | IFT bei Temperatur | Tensidlöslichkeit in der Salzlösung bei Temperatur |
|---|---|---|---|---|---|
| 7 | 0,11% Tensidgemisch (aus C16C18C20-Guerbet-18EO-CH₂CO₂Na : C16C18C20-Guerbet-18EO-H (87 mol% : 13 mol%)e)) und 0.082% Butyldiethylenglykol | ~148200 ppm Salzgehalt mit 585 ppm zweiwertigen Kationen (14,4% NaCl, 0,15% KCl, 0,15% MgCl₂ x 6 H₂O, 0,15% CaCl₂ x 2 H₂O, 0,15% Na₂SO₄) | 25,9 | 0,041 mN/m bei 100°C | Leicht streuend bei 1 00°C |

a) Abgeleitet aus Alkylethercarboxylat-Alkyletheralkohol-Gemisch 1 b); entspricht Tensidgemisch aus 80 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 20 mol% Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}/C_{18}H_{37}$, x = 0, y = 3 und z = 10, M = Na.

b) Abgeleitet aus Vergleichs-Alkylethercarboxylat-Alkyletheralkohol-Gemisch V11; entspricht Tensidgemisch aus 95 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 5 mol% Tensid der allgemeinen Formel (II) $R^1O$-$(CH_2C(R^2)HO)_x$-$(CH_2C(CH_3)HO)_y$-$(CH_2CH_2O)_z$ -H mit $R^1$ = $C_{16}H_{33}/C_{18}H_{37}$, x = 0, y = 3 und z = 10, M = Na.

c) Abgeleitet aus Alkylethercarboxylat-Alkyletheralkohol-Gemisch 12; entspricht Tensidgemisch aus 81 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 19 mol% Tensid der allgemeinen Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}/C_{18}H_{37}$, x = 0, y = 7 und z = 10, M = Na.

d) Abgeleitet aus Alkylethercarboxylat-Alkyletheralkohol-Gemisch 13; entspricht Tensidgemisch aus 73 mol% Tensid der allgemeinen Formel (I) $R^1$-O-$(CH_2C(R^2)HO)_x$-$(CH_2C(CH_3)HO)_y$-$(CH_2CH_2O)_z$ -$CH_2CO_2M$ und 27 mol% Tensid der allgemeinen Formel (II) $R^1$-O-$(CH_2C(R^2)HO)_x$-$(CH_2C(CH_3)HO)_y$-$(CH_2CH_2O)_z$ -H mit $R^1$ = $C_{16}H_{33}/C_{18}H_{37}$, x = 0, y = 7 und z = 10, M = Na.

e) Abgeleitet aus Alkylethercarboxylat-Alkyletheralkohol-Gemisch 7; entspricht Tensidgemisch aus 87 mol% Tensid der allgemeinen Formel (I) $R^1$-O-$(CH_2C(R^2)HO)_x$-$(CH_2C(CH_3)HO)_y$-$(CH_2CH_2O)_z$-$CH_2CO_2M$ und 13. mol% Tensid der allgemeinen Formel (II) $R^1$-O-$(CH_2C(R^2)HO)_x$-$(CH_2C(CH_3)HO)_y$-$(CH_2CH_2O)_z$-H mit $R^1$ = $C_{16}H_{33}/C_{18}H_{37}/C_{20}H_{41}$, x = 0, y = 0 und z = 18, M = Na

Wie Tabelle 3 zu entnehmen ist, liefern die beanspruchten Alkylethercarboxylat-Alkyletheralkohol-Tensidgemische auch in Gegenwart von Cosolvens (Butyldiethylengylkol BDG) Grenzflächenspannungen von <0.1 mN/m bei >55°C und einer Gesamttensidkonzentration von <0.5% Tensid. Der Vergleich von Beispiel 1 und 2 zeigt den Beitrag von Butyldiethylenglykol als Cosolvens (identische Bedingungen: Bsp. 1 ohne BDG, Bsp. 2 mit BDG). Die Grenzflächenspannung konnte von 0.079 auf 0.035 mN/m weiter abgesenkt werden. Anhand von Beispiel 3 und Vergleichsbeispiel V4 wurde überraschend festgestellt, dass ein sehr hoher Carboxymethylierungsgrad nicht von Vorteil sein muss. Unter den harschen salinaren Bedingungen mit ca. 14.1% Salzgehalt und knapp 5000 ppm zweiwertigen Kationen (Wasserhärte) liefert ein Alkylethercarboxylat-Alkyletheralkohol-Tensidgemisch, welches auf einem linearen primären C16C18-Fettalkohol umgesetzt mit 3 eq Propylenoxid und 10 eq Ethylenoxid beruht, mit einem Carboxymethylierungsgrad von 80% (Bsp.3) in Gegenwart von BDG eine Grenzflächenspannung von 0.019 mN/m an einem mittleren Rohöl (25,9° API) bei 60°C (Bsp. 3), während unter analogen Bedingungen eine entsprechende Tensidmischung mit einem Carboxymethylierungsgrad von 95%, welche nichterfindungsgemäß ist, lediglich eine Grenzflächenspannung von 0.109 mN/m.

Ultraniedrige Grenzflächenspannungen lassen sich durch beanspruchte Tensidformulierungen wie in Beispiel 5 und 6 gezeigt erreichen. Alkylethercarboxylat-Alkyletheralkohol-Tensidgemische, welche auf einem linearen primären C16C18-Fettalkohol umgesetzt mit 7 eq Propylenoxid und 10 eq Ethylenoxid sowie dem entsprechenden Carboxylat beruhen, führen abgemischt mit Butyldiethylenglykol zu 0.001 mN/m (Bsp. 5) bzw. 0.002 mN/m (Bsp. 6) - also zu ultraniedrigen Grenzflächenspannungen. Dies sind erstaunlich niedrige Werte, wenn man bedenkt, dass der Carboxymethylierungsgrad der Alkylethercarboxylat-Alkyletheralkohol-Mischung lediglich 81% (Bsp. 5) bzw. sogar nur 73% (Bsp. 6) beträgt. Zudem liegen erschwerte Bedingungen vor, da es sich um hohe Temperaturen (92°C - aufgrund der bei dieser Temperatur erhöhten Fluktuation der Öl-Wasser-Grenzfläche ist es schwierig, niedrige Grenzflächenspannnungen mit nur einem Tensid bzw. zwei sehr ähnlichen Tensiden zu erreichen) handelt und der Einsatz von Alkali aufgrund der Wasserhärte nicht empfehlenswert ist (Niederschlag würde zur Blockade der Formation führen).

Bsp. 7 zeigt ein Alkylethercarboxylat-Alkyletheralkohol-Tensidgemisch, welches auf einem primären C16C18C20-Guerbetalkohol (und damit verzweigtem Alkohol) umgesetzt mit 18 eq Ethylenoxid sowie dem entsprechenden Carboxylat basiert. Der Carboxymethylierungsgrad beträgt 87%. Trotz herausfordernder Testbedingungen (hohe Temperatur von 100°C, mittleres Öl mit 25.9° API und hoher Salinität mit Salzgehalten von ca. 14.8%) wurde in Gegenwart von Butyldiethylenglykol eine Grenzflächenspannung von 0.041 mN/m erreicht.

Tabelle 4 Grenzflächenspannungen mit Tensidgemisch Alkylethercarboxylat-Alkyletheralkohol und Cotensid (und optional mit Colsolvens)

| Beispiel | Tensidformulierung | Salzlösung | Rohöl [°API] | IFT bei Temperatur | Tensidlöslichkeit in der Salzlösung bei Temperatur |
|---|---|---|---|---|---|
| 1 | 0,11% Tensidgemisch (aus C16C18-7PO-10EO-CH$_2$CO$_2$Na : C16C18-7PO-10EO-H (73 mol% : 27 mol%)[a)]) und 0.037% Butyldiethylenglykol und 0.146% Glucopon 225DK[b)] | ~129000 ppm Salzgehalt mit 10820 ppm zweiwertigen Kationen | 29,6 | 0,009 mN/m bei 67°C | klar bei 67°C |
| 2 | 0,11% Tensidgemisch (aus C16C18-7PO-10EO-CH$_2$CO$_2$Na : C16C18-7PO-10EO-H (81 mol% : 19 mol%)[c)]) und 0.037% Butyldiethylenglykol und 0.146% Glucopon 225DK[b)] | ~30780 ppm Salzgehalt mit 155 ppm zweiwertigen Kationen | 38 | 0,007 mN/m bei 92°C | klar bei 92°C |
| 3 | 0,11% Tensidgemisch (aus C16C18-3PO-10EO-CH$_2$CO$_2$Na : C16C18-3PO-10EO-H (80 mol% : 20 mol%)[d)]) und 0.146% Hostapur. SAS 30[e)] | ~103130 ppm Salzgehalt mit 3513 ppm zweiwertigen Kationen (8,98% NaCl, 0,11% KCl, 0,90% MgCl$_2$ x 6 H$_2$O, 0,90% CaCl$_2$ x 2 H$_2$O, 0,11% Na$_2$SO$_4$) | 29,6 | 0,045 mN/m bei 80°C | klar bei 80°C |

a) Abgeleitet aus Alkylethercarboxylat-Alkyletheralkohol-Gemisch 13; entspricht Tensidgemisch aus 73 mol% Tensid der allgemeinen Formel (I) $R^1$-O-(CH$_2$C($R^2$)HO)$_x$-(CH$_2$C(CH$_3$)HO)$_y$-(CH$_2$CH$_2$O)$_z$-CH$_2$CO$_2$M und 27 mol% Tensid der allgemeinen Formel (II) $R^1$-O-(CH$_2$C($R^2$)HO)$_x$-(CH$_2$C(CH$_3$)HO)$_y$-(CH$_2$CH$_2$O)$_z$ -H mit $R^1$ = C$_{16}$H$_{33}$/C$_{18}$H$_{37}$, X = 0, y = 7 und z = 10, M = Na.

b) Alkylpolyglucosid (basierend auf Alkylrest mit 8 bis 10 Kohlenstoffatomen) mit 68.3% Wirkstoffgehalt.

c) Abgeleitet aus Alkylethercarboxylat-Alkyletheralkohol-Gemisch 12; entspricht Tensidgemisch aus 81 mol% Tensid der allgemeinen Formel (I) $R^1$-O-(CH$_2$C($R^2$)HO)$_x$-(CH$_2$C(CH$_3$)HO)$_y$-(CH$_2$CH$_2$O)$_z$-CH$_2$CO$_2$M und 19 mol% Tensid der allgemeinen Formel (II) $R^1$-O-(CH$_2$C($R^2$)HO)$_x$-(CH$_2$C(CH$_3$)HO)$_y$-(CH$_2$CH$_2$O)$_z$ -H mit $R^1$ = C$_{16}$H$_{33}$/C$_{18}$H$_{37}$, x = 0, y = 7 und z = 10, M = Na.

d) Abgeleitet aus Alkylethercarboxylat-Alkyletheralkohol-Gemisch 1 b); entspricht Tensidgemisch aus 80 mol% Tensid der allgemeinen Formel (I) $R^1$-O-(CH$_2$C($R^2$)HO)$_x$-(CH$_2$C(CH$_3$)HO)$_y$-(CH$_2$CH$_2$O)$_z$-CH$_2$CO$_2$M und 20 mol% Tensid der allgemeinen Formel (II) $R^1$-O-(CH$_2$C($R^2$)HO)$_x$-(CH$_2$C(CH$_3$)HO)$_y$-(CH$_2$CH$_2$O)$_z$-H mit $R^1$ = C$_{16}$H$_{33}$/C$_{18}$H$_{37}$, x = 0, y = 3 und z = 10, M = Na.

e) Sekundäres Alkansulfonat Natriumsalz mit 14 bis 17 Kohlenstoffatomen und mit 32.3% Wirkstoffgehalt

Wie in Tabelle 4 zu sehen ist, liefern die beanspruchten Alkylethercarboxylat-Alkyletheralkohol-Tensidgemische auch in Gegenwart von Cotensiden (optional auch in der zusätzlichen Gegenwart von Cosolvens) Grenzflächenspannungen von <0.1 mN/m bei >55°C und einer Gesamttensidkonzentration von <0.5% Tensid. Wie die Beispiele 1 und 2 zeigen, führen die beanspruchten Alkylethercarboxylat-Alkyletheralkohol-Tensidgemische, welche auf einem linearen primären C16C18-Fettalkohol umgesetzt mit 7 eq Propylenoxid und 10 eq Ethylenoxid sowie dem entsprechenden Carboxylat beruhen, in Gegenwart von Butyldiethylengylkol und einem C8C10-basierten Alkylpolyglucosid (Glucopon DK 225) sogar zu ultraniedrigen Grenzflächenspannungen von 0.009 bzw. 0.007 mN/m. Wie man sieht unterscheiden sich die Bedingungen deutlich. In Bsp. 1 liegt eine hohe Salinität (ca. 12.9% Salzgehalt) mit sehr hohem Härte (>10000 ppm zweiwertige Kationen), ein mittleres Rohöl (29.6° API) und erhöhte Temperatur (67°C) vor. In Beispiel 2 ist hingegen die Salinität und Wasserhärte für EOR-Anwendungen moderat (30780 ppm TDS sowie 155 ppm zweiwertige Kationen), das Rohöl leicht (38°API), dafür aber die Temperatur hoch (92°C). Zudem variiert das Verhältnis von Alkylethercarboxylat zu Alkyletheralkohol (73:27 bzw. 81 : 19 mol%). Vergleicht man Beispiel 2 der Tabelle 4 mit Beispiel 5 der Tabelle 3, so kann man feststellen, dass die Bedingungen sehr ähnlich sind, jedoch die Gegenwart des Glucopon 225 DK zu klaren wässrigen Tensidlösungen führt. Dafür ist die Grenzflächenspannung etwas höher, aber immer noch im ultraniedrigen Bereich.

Beispiel 3 der Tabelle 4 zeigt auf, dass sich auch organische Sulfonate wie z.B. das sekundäre C14C17-Paraffinsulfonat (Hostapur SAS 30) als Cotensid verwenden lässt. Es wurde allerdings im Vergleich zu den Beispielen 1 und 2 ein Alkylethercarboxylat-Alkyletheralkohol-Tensidgemisch mit einem niedrigeren Propoxylierungsgrad (3 anstatt 7 Propoxy-Einheiten) sowie kein Cosolvens verwendet. Die Grenzflächenspannung ist mit 0.045 mN/m unterhalb von 0.1 mN/m.

Tabelle 5 Grenzflächenspannungen mit Tensidgemisch Alkylethercarboxylat-Alkyletheralkohol und Cosolvens über einen breiten Temperaturbereich

| Beispiel | Tensidformulierung | Salzlösung | Rohöl [°API] | IFT bei Temperatur | Tensidlöslichkeit in der Salzlösung bei Temperatur |
|---|---|---|---|---|---|
| 1 | 0,15% Tensidgemisch (aus C16C18-7PO-10EO-CH$_2$CO$_2$Na : C16C18-7PO-10EO-H (73 mol% : 27 mol%)$^{a)}$) und 0.05% Butyldiethylenglykol | ~79450 ppm Salzgehalt mit ~310 ppm zweiwertigen Kationen | 38 | 0,004 mN/m bei 60°C | klar bei 60°C |
| 2 | 0,15% Tensidgemisch (aus C16C18-7PO-10EO-CH$_2$CO$_2$Na : C16C18-7PO-10EO-H (73 mol% : 27 mol%)$^{a)}$) und 0.05% Butyldiethylenglykol | ~79450 ppm Salzgehalt mit ~310 ppm zwei-wertigen Katio-nen | 38 | 0,006 mN/m bei 90°C | Leicht streuend bei 90°C |
| 3 | 0,15% Tensidgemisch (aus C16C18-7PO-10EO-CH$_2$CO$_2$Na : C16C18-7PO-10EO-H (73 mol% : 27 mol%)$^{a)}$) und 0.05% Butyldiethylenglykol | ~49670 ppm Salzgehalt mit ~195 ppm zwei-wertigen Katio-nen | 29 | 0,005 mN/m bei 90°C | Leicht streuend bei 90°C |
| 4 | 0,15% Tensidgemisch (aus C16C18-7PO-10EO-CH$_2$CO$_2$Na : C16C18-7PO-10EO-H (73 mol% : 27 mol%)$^{a)}$) und 0.05% Butyldiethylenglykol | ~49670 ppm Salzgehalt mit ~195 ppm zweiwertigen Kationen | 29 | 0,006 mN/m bei 110°C | Leicht streuend bei 110°C |
| a) Abgeleitet aus Alkylethercarboxylat-Alkyletheralkohol-Gemisch 13; entspricht Tensidgemisch aus 73 mol% Tensid der allgemeinen Formel (I) R$^1$-O-(CH$_2$C(R$^2$)HO)$_x$-(CH$_2$C(CH$_3$)HO)$_y$-(CH$_2$CH$_2$O)$_z$-CH$_2$CO$_2$M und 27 mol% Ten-sid der allgemeinen Formel (II) R$^1$-O-(CH$_2$C(R$^2$)HO)$_x$-(CH$_2$C(CH$_3$)HO)$_y$-(CH$_2$CH$_2$O)$_z$-H mit R$^1$ = C$_{16}$H$_{33}$/C$_{18}$H$_{37}$, x = 0, y = 7 und z = 10, M = Na. | | | | | |

Wie in Tabelle 5 zu sehen ist, liefern die beanspruchten Alkylethercarboxylat-Alkyletheralkohol-Tensidgemische abgemischt mit Butyldiethylenglykol ultraniedrige Grenzflächenspannungen von <0,01 mN/m über einen breiten Temperaturbereich. So liefert dasselbe Tensidgemisch im selben Salzwasser bei 60°C eine Grenzflächenspannung von 0,004 mN/m (Beispiel 1) und bei 90°C eine Grenzflächenspannung von 0,006 mN/m (Beispiel 2). In einem anderen Salzwasser und gegenüber einem anderen Rohöl liefert dasselbe Tensidgemisch bei 90°C eine Grenzflächenspannung von 0,005 mN/m (Beispiel 3) und bei 110°C eine Grenzflächenspannung von 0,006 mN/m (Beispiel 4).

Weiterführende Versuchsergebnisse zur Löslichkeit und zur Grenzflächenspannung nach 3 - 8 h sind in Tabelle 6 dargestellt.

Tabelle 6 Grenzflächenspannungen mit Tensidgemisch Alkylethercarboxylat-Alkyletheralkohol und Cosolvens über einen breiten Ölbereich und Salinitätsbereich

| Beispiel | Tensidformulierung | Salzlösung | Rohöl [°API] | IFT bei Temperatur | Tensidlöslichkeit in der Salzlösung bei Temperatur |
|---|---|---|---|---|---|
| 1 | 0,15% Tensidgemisch (aus C16C18-7PO-10EO-CH$_2$CO$_2$Na : C16C18-7PO-10EO-H (73 mol% : 27 mol%)$^{a)}$) und 0,05% Butyldiethylenglykol | ~49670 ppm Salzgehalt mit ~195 ppm zweiwertigen Kationen | 38 | 0,007 mN/m bei 110°C | Leichtstreuend bei 110°C |
| 2 | 0,15% Tensidgemisch (aus C16C18-7PO-10EO-CH$_2$CO$_2$Na : C16C18-7PO-10EO-H (73 mol% : 27 mol%)$^{a)}$) und 0,05% Butyldiethylenglykol | ~46830 ppm Salzgehalt mit ~1600 ppm zweiwertigen Kationen | 38 | 0,009 mN/m bei 110°C | Leichtstreuend bei 110°C |
| 3 | 0,15% Tensidgemisch (aus C16C18-7PO-10EO-CH$_2$CO$_2$Na : C16C18-7PO-10EO-H (73 mol% : 27 mol%)$^{a)}$) und 0,05% Butyldiethylenglykol | ~49670 ppm Salzgehalt mit ~195 ppm zweiwertigen Kationen | 29 | 0,003 mN/m bei 100°C | Leicht streuend bei 100°C |
| 4 | 0,15% Tensidgemisch (aus C16C18-7PO-10EO-CH$_2$CO$_2$Na : C16C18-7PO-10EO-(73 mol% : 27 mol%)$^{a)}$) und 0,05% Butyldiethylenglykol | ~79450 ppm Salzgehalt mit ~310 ppm zweiwerti-gen Kationen | 38 | 0,001 mN/m bei 80°C | klar bei 80°C |
| 5 | 0,15% Tensidgemisch (aus C16C18-7PO-10EO-CH$_2$CO$_2$Na : C16C18-7PO-10EO-H (73 mol% : 27 mol%)$^{a)}$) und 0,05% Butyldiethylenglykol | ~64560 ppm Salzgehalt mit ~250 ppm zweiwertigen Kationen | 38. | 0,008 mN/m bei 80°C | klar bei 80°C |
| 6 | 0,20% Tensidgemisch (aus C16C18-7PO-10EO-CH$_2$CO$_2$Na : C16C18-7PO-10EO-H (73 mol% : 27 mol%)$^{a)}$) und 0,07% Butyldiethylenglykol | ~29780 ppm Salzgehalt mit ~1500 ppm zweiwertigen Kationen | 38 | 0,002 mN/m bei 90°C | klar bei 90°C |
| a) Abgeleitet aus Alkylethercarboxylat-Alkyletheralkohol-Gemisch 13; entspricht Tensidgemisch aus 73 mol% Tensid der allgemeinen Formel (I) R$^1$-O-(CH$_2$C(R$^2$)HO)$_x$-(CH$_2$C(CH$_3$)HO)$_y$-(CH$_2$CH$_2$O)$_z$-CH$_2$CO$_2$M und 27 mol% Tensid der allgemeinen Formel (II) R$^1$-O-(CH$_2$C(R$^2$)HO)$_x$-(CH$_2$C(CH$_3$)HO)$_y$-(CH$_2$CH$_2$O)$_z$-H mit R$^1$ = C$_{16}$H$_{33}$/C$_{18}$H$_{37}$, x = 0, y = 7 und z= 10, M = Na. | | | | | |

Wie in Tabelle 6 zu sehen ist, liefern die beanspruchten Alkylethercarboxylat-Alkyletheralkohol-Tensidgemische abgemischt mit Butyldiethylenglykol ultraniedrige Grenzflächenspannungen von <0,01 mN/m über einen breiten Ölbereich und Salinitätsbereich. So liefert dasselbe Tensidgemisch jeweils bei 110°C und jeweils an dem gleichen Öl eine Grenzflächenspannung von 0,007 mN/m (Beispiel 1) bzw. eine Grenzflächenspannung von 0,009 mN/m (Beispiel 2) in zwei Salzwässern. Die Salinitäten der beiden Salzwässer sind vergleichbar (~49670 ppm vs. 46830 ppm Salzgehalt), jedoch ist der Anteil an zweiwertigen Kationen in Beispiel 2 achtmal höher als in Beispiel 1 (~195 ppm vs. 1600 ppm). Beispiel 6 zeigt auf, dass dasselbe Tensidgemisch auch bei niedrigeren Salzgehalten (~29780 ppm Salzgehalt) mit hohem Anteil an zweiwertigen Kationen (-1500 ppm) eine niedrige Grenzflächenspannung von 0,002 mN/m ergibt. Dies ist sehr überraschend, da anionische Tenside gegenüber mehrwertigen Kationen üblicherweise sehr empfindlich sind. Beispiel 3 zeigt im Vergleich zu Beispiel 1 auf, dass dasselbe Tensidgemsich im gleichen Salzwasser bei ähnlicher Temperatur auch an unterschiedlichen Ölen (29° API in Beispiel 3, alle anderen Beispiele 38° API) niedrige Grenzflächenspannungen ergibt: 0,003 mN/m (Beispiel 3). In einem anderen Salzwasser und gegenüber einem anderen Rohöl liefert dasselbe Tensidgemisch bei 90°C eine Grenzflächenspannung von 0,005 mN/m (Beispiel 3) und bei 110°C eine Grenzflächenspannung von 0,006 mN/m (Beispiel 4).

Beispiele 4 und 5 zeigen auf, dass dasselbe Tensidgemisch bei gleicher Temperatur von 80°C an dem gleichen Öl niedrige Grenzflächenspannungen von <0,01 mN/m auch bei unterschiedlichen Salinitäten ergeben (~79450 ppm vs. ~64560 ppm Salzgehalt).

**Patentansprüche**

1.  Verfahren zur Förderung von Erdöl aus unterirdischen Erdöllagerstätten, bei dem eine wässrige, salzhaltige Tensidformulierung umfassend eine Tensidmischung zwecks Erniedrigung der Grenzflächenspannung zwischen Öl und Wasser auf < 0,1 mN/m bei Lagerstättentemperatur, durch mindestens eine Injektionsbohrung in eine Erdöllagerstätte eingepresst und der Lagerstätte durch mindestens eine Produktionsbohrung Rohöl entnommen wird, **dadurch gekennzeichnet, dass**

    a) die Erdöllagerstätte eine Lagerstättentemperatur von 55 ° C bis 150° C, ein Rohöl mit mehr als 20° API und ein Lagerstättenwasser mit mehr als 100 ppm zweiwertige Kationen aufweist;
    und
    b) die Tensidmischung mindestens ein anionisches Tensid (A) der allgemeinen Formel (I)

    $$R^1\text{-}O\text{-}(CH_2C(R^2)HO)_x\text{-}(CH_2C(CH_3)HO)_y\text{-}(CH_2CH_2O)_z\text{-}CH_2CO_2M \qquad (I)$$

    und mindestens ein nichtionisches Tensid (B) der allgemeinen Formel (II)

    $$R^1\text{-}O\text{-}(CH_2C(R^2)HO)_x\text{-}(CH_2C(CH_3)HO)_y\text{-}(CH_2CH_2O)_z\text{-}H \qquad (II)$$

    enthält, wobei beim Einpressen im Tensidgemisch ein molares Verhältnis von anionischem Tensid (A) zu nichtionischem Tensid (B) von 51 : 49 bis 92 : 8 vorliegt und das nichtionische Tensid (B) als Ausgangsmaterial für das anionische Tensid (A) dient,
    wobei

    $R^1$ für einen primären linearen oder verzweigten, gesättigten oder ungesättigten, aliphatischen Kohlenwasserstoffrest mit 10 bis 36 Kohlenstoffatomen steht; und
    $R^2$ für einen linearen gesättigten aliphatischen Kohlenwasserstoffrest mit 2 bis 14 Kohlenstoffatomen steht; und
    M für H, Na, K oder $NH_4$ steht; und
    x für eine Zahl von 0 bis 10 steht; und
    y für eine Zahl von 0 bis 50 steht; und
    z für eine Zahl von 1 bis 35 steht;
    wobei die Summe aus x + y + z für eine Zahl von 3 bis 80 steht und die x+y+z Alkoxylatgruppen statistisch verteilt, alternierend oder blockweise angeordnet sein können; und
    wobei die Summe aus x + y für eine Zahl von > 0 steht, falls es sich bei $R^1$ um einen primären linearen, gesättigten oder ungesättigten, aliphatischen Kohlenwasserstoffrest mit 10 bis 36 Kohlenstoffatomen handelt;

    und
    c) die Konzentration aller Tenside zusammen 0,05 bis 0,49 Gew. % bezüglich der Gesamtmenge der wässrigen, salzhaltigen Tensidformulierung beträgt.

2.  Verfahren gemäß Anspruch 1, **dadurch gekennzeichnet, dass** beim Einpressen im Tensidgemisch ein molares Verhältnis von anionischem Tensid (A) zu nichtionischem Tensid (B) von 60 : 40 bis 92 : 8 vorliegt und das nichtionische Tensid (B) als Ausgangsmaterial für das anionische Tensid (A) dient.

3.  Verfahren gemäß Anspruch 1, **dadurch gekennzeichnet, dass** bei Injektion im Tensidgemisch ein molares Verhältnis von anionischem Tensid (A) zu nichtionischem Tensid (B) von 60 : 40 bis 92 : 8, vorzugsweise von 70 : 30 bis 92 : 8, vorliegt, das nichtionische Tensid (B) als Ausgangsmaterial für das anionische Tensid (A) dient, und vorzugsweise die Grenzflächenspannung zwischen Öl und Wasser auf < 0,05 mN/m bei Lagerstättentemperatur erniedrigt wird.

4.  Verfahren gemäß Anspruch 3, **dadurch gekennzeichnet, dass** bei Injektion im Tensidgemisch ein molares Verhältnis von anionischem Tensid (A) zu nichtionischem Tensid (B) von 70 : 30 bis 89 : 11 vorliegt, das nichtionische Tensid (B) als Ausgangsmaterial für das anionische Tensid (A) dient, und die Grenzflächenspannung zwischen Öl und Wasser auf < 0,01 mN/m erniedrigt wird.

5. Verfahren gemäß einem der Ansprüche 1 bis 4, **dadurch gekennzeichnet, dass**

$R^1$ für einen primären linearen oder verzweigten, gesättigten oder ungesättigten, aliphatischen Kohlenwasserstoffrest mit 10 bis 36 Kohlenstoffatomen steht; und
$R^2$ für einen linearen gesättigten aliphatischen Kohlenwasserstoffrest mit 2 bis 14 Kohlenstoffatomen steht; und
M für H, Na, K oder $NH_4$ steht; und
x für eine Zahl von 1 bis 10 steht; und
y für eine Zahl von 0 bis 50 steht; und
z für eine Zahl von 3 bis 35 steht;

wobei die Summe aus x + y + z für eine Zahl von 4 bis 80 steht.

6. Verfahren gemäß einem der Ansprüche 1 bis 4, **dadurch gekennzeichnet, dass**

$R^1$ für einen primären verzweigten, gesättigten, aliphatischen Kohlenwasserstoffrest mit 10 bis 36 Kohlenstoffatomen steht; und
$R^2$ für einen linearen gesättigten aliphatischen Kohlenwasserstoffrest mit 2 bis 14 Kohlenstoffatomen steht; und
M für H, Na, K oder $NH_4$ steht; und
x für eine Zahl von 0 bis 10 steht; und
y für die Zahl 0 steht; und
z für eine Zahl von 3 bis 35 steht;

wobei die Summe aus x + y + z für eine Zahl von 3 bis 45 steht.

7. Verfahren gemäß einem der Ansprüche 1 bis 4 oder Anspruch 6, **dadurch gekennzeichnet, dass**

$R^1$ für einen primären verzweigten gesättigten aliphatischen Kohlenwasserstoffrest mit 16 bis 20 Kohlenstoffatomen steht, wobei es sich vorzugsweise um 2-Hexyldecyl, 2-Octyldecyl, 2-Hexyldodecyl, 2-Octyldodecyl oder eine Mischung aus den genannten Kohlenwasserstoffresten handelt; und
x bevorzugt für die Zahl 0 steht.

8. Verfahren gemäß einem der Ansprüche 1 bis 4 oder Anspruch 6, **dadurch gekennzeichnet, dass**

$R^1$ für einen primären verzweigten gesättigten aliphatischen Kohlenwasserstoffrest mit 24 bis 28 Kohlenstoffatomen steht, wobei es sich um 2-Decyltetradecyl, 2-Dodecylhexadecyl, 2-Decylhexadecyl oder 2-Dodecyltetradecyl bzw. eine Mischung aus den genannten Kohlenwasserstoffresten handelt; und
x bevorzugt für die Zahl 0 steht.

9. Verfahren gemäß einem der Ansprüche 1 bis 4, **dadurch gekennzeichnet, dass**

$R^1$ für einen primären linearen oder verzweigten, gesättigten oder ungesättigten, aliphatischen Kohlenwasserstoffrest mit 10 bis 36 Kohlenstoffatomen steht; und
x für die Zahl 0 steht; und
y für eine Zahl von 3 bis 25 steht; und
z für eine Zahl von 3 bis 30 steht;

und die Summe aus x + y + z für eine Zahl von 6 bis 55 steht.

10. Verfahren gemäß Anspruch 9, **dadurch gekennzeichnet, dass**

x für die Zahl 0 steht; und
y für eine Zahl von 3 bis 10 steht; und
z für eine Zahl von 4 bis 15 steht;

und die Summe aus x + y + z für eine Zahl von 7 bis 25 steht.

11. Verfahren gemäß einem der Ansprüche 1 bis 6, 9 und 10, **dadurch gekennzeichnet, dass**

   $R^1$ für einen primären linearen oder verzweigten, gesättigten oder ungesättigten, aliphatischen Kohlenwasserstoffrest mit 13 bis 20 Kohlenstoffatomen steht.

12. Verfahren gemäß einem der Ansprüche 1 bis 6 und 9 bis 11, **dadurch gekennzeichnet, dass**

   $R^1$ für einen primären linearen gesättigten aliphatischen Kohlenwasserstoffrest mit 16 bis 18 Kohlenstoffatomen steht.

13. Verfahren gemäß einem der Ansprüche 1 bis 12, **dadurch gekennzeichnet, dass** die Summe aus x + y + z für eine Zahl von 7 bis 24 steht.

14. Verfahren gemäß einem der Ansprüche 1 bis 13, **dadurch gekennzeichnet, dass** die wässrige Tensidformulierung ein verdickendes Polymer aus der Gruppe der Biopolymere oder aus der Gruppe der Copolymere basierend auf Acrylamid enthält.

15. Verfahren gemäß einem der Ansprüche 1 bis 14, **dadurch gekennzeichnet, dass** das Gemisch aus anionischen Tensid (A) der allgemeinen Formel (I) und nichtionischem Tensid (B) der allgemeinen Formel (II) in Form eines Konzentrates enthaltend 20 Gew.-% bis 70 Gew.-% des Tensidgemisches, 10 Gew.-% bis 40 Gew.-% Wasser und 10 Gew.-% bis 40 Gew.-% eines Cosolvens, bezogen auf die Gesamtmenge des Konzentrats, bereit gestellt wird, wobei vorzugsweise

   a) das Cosolvens aus der Gruppe der aliphatischen Alkohole mit 3 bis 8 Kohlenstoffatome oder aus der Gruppe der Alkylmonoethylenglykole, der Alkyldiethylenglykole oder der Alkyltriethylenglykole ausgewählt ist, wobei der Alkylrest ein aliphatischer Kohlenwasserstoffrest mit 3 bis 6 Kohlenstoffatomen ist;
   und/oder
   b) das Konzentrat bei 20° C fließfähig ist und bei 40° C eine Viskosität von <1500 mPas bei 200 Hz aufweist.

16. Verfahren gemäß Anspruch 15, **dadurch gekennzeichnet, dass** das Konzentrat 0,5 bis 15 Gew.-% an einer Mischung enthaltend NaCl und Diglykolsäure Dinatriumsalz enthält, wobei NaCl im Überschuss zu Diglykolsäure Dinatriumsalz vorhanden ist.

17. Verfahren gemäß einem der Ansprüche 15 bis 16, **dadurch gekennzeichnet, dass** das Konzentrat als Cosolvens Butyldiethylenglykol enthält.

18. Verfahren gemäß einem der Ansprüche 1 bis 17, **dadurch gekennzeichnet, dass** die wässrige, salzhaltige Tensidformulierung neben dem anionischen Tensid (A) der allgemeinen Formel (I) und dem nichtionischen Tensid (B) der allgemeinen Formel (II) noch weitere Tenside (C) enthält, die

   a) nicht identisch mit den Tensiden (A) oder (B) sind;
   und
   b) aus der Gruppe der Alkylbenzolsulfonate, alpha-Olefinsulfonate, interne Olefinsulfonate, Paraffinsulfonate sind, wobei die Tenside 14 bis 28 Kohlenstoffatome aufweisen;
   und/oder
   c) aus der Gruppe der Alkylethoxylate und Alkylpolyglucoside ausgewählt sind, wobei der jeweilige Alkylrest 8 bis 18 Kohlenstoffatome aufweist.

19. Verfahren gemäß einem der Ansprüche 1 bis 18, **dadurch gekennzeichnet, dass** die wässrige, salzhaltige Tensidformulierung neben dem anionischen Tensid (A) der allgemeinen Formel (I) und dem nichtionischen Tensid (B) der allgemeinen Formel (II) noch ein Cosolvens enthält, welches aus der Gruppe der aliphatischen Alkohole mit 3 bis 8 Kohlenstoffatomen oder aus der Gruppe der Alkylmonoethylenglykole, der Alkyldiethylenglykole oder der Alkyltriethylenglykole ausgewählt ist, wobei der Alkylrest ein aliphatischer Kohlenwasserstoffrest mit 3 bis 6 Kohlenstoffatomen ist.

20. Verfahren gemäß einem der Ansprüche 1 bis 19, **dadurch gekennzeichnet, dass** die Lagerstätte eine Sandstein-Lagerstätte ist, und dass mehr als 70 Gewichtsprozent aus Sand (Quarz und/oder Feldspat) enthalten sind und bis zu 25 Gewichtsprozent an anderen Mineralien ausgewählt aus Kaolinit, Smectit, Illit, Chlorit, und/oder Pyrit enthalten sein können.

21. Verfahren gemäß einem der Ansprüche 1 bis 20, **dadurch gekennzeichnet, dass** es sich bei der Förderung des Erdöls aus unterirdischen Erdöllagerstätten um ein Tensidflutverfahren bzw. um ein Tensid-Polymer-Flutverfahren und nicht um ein Alkali-Tensid-Polymer-Flutverfahren bzw. nicht um ein Flutverfahren handelt, bei dem $Na_2CO_3$ mit injiziert wird.

22. Verfahren gemäß einem der Ansprüche 1 bis 21, **dadurch gekennzeichnet, dass** es sich bei der Förderung des Erdöls aus unterirdischen Erdöllagerstätten um ein Winsor Typ III Mikroemulsionsfluten handelt.

23. Verfahren gemäß einem der Ansprüche 1 bis 22, **dadurch gekennzeichnet, dass** das Tensidgemisch aus anionischem Tensid (A) der allgemeinen Formel (I) und nichtionischem Tensid (B) der allgemeinen Formel (II) unter zumindest einer der nachfolgenden Reaktionsbedingungen erhalten wird:

• das anionische Tensid (A) der allgemeinen Formel (I) wird durch Umsetzung des nichtionischen Tensides (B) der allgemeinen Formel (II), vorzugsweise unter Rührung, in einem Reaktor mit Chloressigsäure oder Chloressigsäure Natriumsalz in Gegenwart von Alkalihydroxid oder wässrigem Alkalihydroxid hergestellt, wobei entstehendes Reaktionswasser so entfernt wird, dass der Wassergehalt im Reaktor durch Anlegen von Vakuum und/oder durch Durchleitung von Stickstoff auf einem Wert von 0,2 bis 1,7% während der Carboxymethylierung gehalten wird;
• wässrige NaOH als Alkalimetallhydroxid und wässrige Chloressigsäure werden in einer Carboxymethylierung verwendet, wobei NaOH zur Chloressigsäure im Verhältnis 2 eq zu 1 eq bis 2,2 eq zu 1 eq verwendet wird; und

das nichtionische Tensid (B) wird entweder über eine basenkatalysierte Alkoxylierung unter Verwendung von KOH oder von NaOH oder von CsOH oder über eine Alkoxylierung unter Verwendung eines Doppelmetallcyanid-Katalysators hergestellt und der Katalysator der Alkoxylierung nach Beendigung der Alkoxylierung nicht neutralisiert und nicht abgetrennt; und

das nichtionische Tensid (B) der allgemeinen Formel (II) wird in der Carboxymethylierung in einem Reaktor vorgelegt und bei einer Temperatur von 60 - 110° C das Natriumhydroxid und die Chloressigsäure parallel über einen Zeitraum von 1 - 7 h zudosiert, wobei die Dosierung über den gesamten Zeitraum kontinuierlich oder in gleichmäßigen Portionen im Stundentakt erfolgt und wobei das stöchiometrische Verhältnis von nichtionischem Tensid (B) der allgemeinen Formel (II) zur Chloressigsäure 1 eq zu 1 eq bis 1 eq zu 1,9 eq beträgt; und

der Wassergehalt im Reaktor wird durch Anlegen von Vakuum und/oder durch Durchleitung von Stickstoff überwiegend auf einem durchschnittlichen Wert von 0,2 bis 1,7% während der Carboxymethylierung gehalten;

• NaOH als Alkalimetallhydroxid und Chloressigsäure Natriumsalz werden in einer Carboxymethylierung verwendet, wobei NaOH zum Chloressigsäure Natriumsalz im Verhältnis 1 eq zu 1 eq bis 1 eq zu 1,9 eq verwendet wird; und

das nichtionische Tensid (B) wird über eine basenkatalysierte Alkoxylierung unter Verwendung von KOH oder von NaOH oder von CsOH hergestellt und in der Carboxymethylierung vorzugsweise unneutralisiert verwendet; und

das nichtionische Tensid (B) der allgemeinen Formel (II) wird in der Carboxymethylierung in einem Reaktor zusammen mit NaOH bzw. wässriger NaOH vorgelegt, wobei das stöchiometrische Verhältnis von nichtionischem Tensid (B) der allgemeinen Formel (II) zur NaOH 1 eq zu 1 eq bis 1 eq zu 1,5 eq beträgt, eine Temperatur von 60 - 110° C eingestellt wird, und das nichtionische Tensid (B) der allgemeinen Formel (II) durch Anlegen von Vakuum und/oder Durchleiten von Stickstoff in das entsprechende Natriumsalz $R^1$-O-$(CH_2C(R^2)HO)_x$-$(CH_2C(CH_3)HO)_y$-$(CH_2CH_2O)_z$-Na überführt wird und bei einer Temperatur von 60 - 110° C das Chloressigsäure Natriumsalz komplett oder vorzugsweise über einen Zeitraum von 4 - 12 h zudosiert wird, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq beträgt und wobei die Dosierung über den gesamten Zeitraum kontinuierlich oder in gleichmäßigen Portionen im Stundentakt erfolgt; und

der Wassergehalt im Reaktor wird durch Anlegen von Vakuum und/oder durch Durchleitung von Stickstoff auf einem Wert von 0,2 bis 1,7% während der Carboxymethylierung gehalten;

• festes NaOH als Alkalimetallhydroxid und Chloressigsäure Natriumsalz werden in einer Carboxymethylierung verwendet, wobei NaOH zum Chloressigsäure Natriumsalz im Verhältnis 1 eq zu 1 eq bis 1,1 eq zu 1 eq verwendet wird; und

das nichtionische Tensid (B) wird über eine basenkatalysierte Alkoxylierung unter Verwendung von KOH oder von NaOH oder von CsOH hergestellt und dann mit Essigsäure neutralisiert und in einer Carboxymethylierung zusammen mit anfangs 0,5 - 1,5 % Wasser verwendet; und

Chloressigsäure Natriumsalz und das nichtionische Tensid (B) der allgemeinen Formel (II) werden in der Carboxymethylierung in einem Reaktor zusammen vorgelegt, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq beträgt, und es wird bei einer Temperatur von 20 - 70° C das Natriumhydroxid über einen Zeitraum von 4 - 12 h zudosiert, wobei die Dosierung über den gesamten Zeitraum kontinuierlich oder in gleichmäßigen Portionen im Stundentakt erfolgt; und

der Wassergehalt im Reaktor wird durch Anlegen von Vakuum und/oder durch Durchleitung von Stickstoff auf einem Wert von 0,2 bis 1,7% während der Carboxymethylierung gehalten;

• festes NaOH als Alkalimetallhydroxid und Chloressigsäure Natriumsalz werden in einer Carboxymethylierung verwendet, wobei NaOH bzw. im Falle eines basischen Alkoxylates die Summe aus NaOH und $R^1$-O-$(CH_2C(R^2)HO)_x$-$(CH_2C(CH_3)HO)_y$-$(CH_2CH_2O)_z$-K bzw. die Summe im Falle eines basischen Alkoxylates aus NaOH und $R^1$-O-$(CH_2C(R^2)HO)_x$-$(CH_2C(CH_3)HO)_y$-$(CH_2CH_2O)_z$ -Na bzw. im Falle eines basischen Alkoxylates die Summe aus NaOH und $R^1$-O-$(CH_2C(R^2)HO)_x$-$(CH_2C(CH_3)HO)_y$-$(CH_2CH_2O)_z$ -Cs zum Chloressigsäure Natriumsalz im Verhältnis 1,1 eq zu 1 eq bis 1 eq zu 1,5 eq beträgt, wobei das Verhältnis von nichtionischem Tensid (B) der allgemeinen Formel (II) zu NaOH von 1 eq zu 1 eq bis 1 eq zu 1,5 eq beträgt; und

das nichtionische Tensid (B) wird über eine basenkatalysierte Alkoxylierung unter Verwendung von KOH oder von NaOH oder von CsOH oder von einer Mischung aus NaOH und KOH hergestellt und in der Carboxymethylierung entweder in neutralisierter und filtrierter (also salzfreier) Form oder in Form eines unneutralisierten basischen Alkoxylates verwendet; und

Chloressigsäure Natriumsalz und das nichtionische Tensid (B) der allgemeinen Formel (II) in der Carboxymethylierung werden in einem Reaktor zusammen vorgelegt, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq beträgt, und bei einer Temperatur von 20 - 70° C das Natriumhydroxid über einen Zeitraum von 4 - 12 h zudosiert wird, wobei die Dosierung über den gesamten Zeitraum kontinuierlich oder in gleichmäßigen Portionen im Stundentakt erfolgt; und

der Wassergehalt im Reaktor wird durch Anlegen von Vakuum und/oder durch Durchleitung von Stickstoff auf einem Wert von 0,2 bis 1,7% während der Carboxymethylierung gehalten;

• festes NaOH als Alkalimetallhydroxid und Chloressigsäure Natriumsalz werden in einer Carboxymethylierung verwendet, wobei NaOH zum Chloressigsäure Natriumsalz im Verhältnis 1 eq zu 1 eq bis 1,1 eq zu 1 eq verwendet wird; und

das nichtionische Tensid (B) wird über eine Alkoxylierung unter Verwendung von Doppelmetallcyanid-Katalyse hergestellt; und

Chloressigsäure Natriumsalz und das nichtionische Tensid (B) der allgemeinen Formel (II) werden in der Carboxymethylierung im Reaktor zusammen vorgelegt, wobei das stöchiometrische Verhältnis von nichtionischem Tensid (B) der allgemeinen Formel (II) zum Chloressigsäure Natriumsalz 1 eq zu 1 eq bis 1 eq zu 1,9 eq beträgt, und bei einer Temperatur von 20 - 70° C das Natriumhydroxid über einen Zeitraum von 4 - 12 h zudosiert wird, wobei die Dosierung über den gesamten Zeitraum kontinuierlich oder in gleichmäßigen Portionen im Stundentakt erfolgt; und

der Wassergehalt im Reaktor wird durch Anlegen von Vakuum und/oder durch Durchleitung von Stickstoff auf einem Wert von 0,2 bis 1,7% während der Carboxymethylierung gehalten.

24. Konzentrat mit einer Tensidmischung enthaltend mindestens ein anionisches Tensid (A) der allgemeinen Formel (I)

$$R^1\text{-O-}(CH_2C(R^2)HO)_x\text{-}(CH_2C(CH_3)HO)_y\text{-}(CH_2CH_2O)_z\text{-}CH_2CO_2M \qquad (I)$$

und mindestens ein nichtionisches Tensid (B) der allgemeinen Formel (II)

$$R^1\text{-O-}(CH_2C(R^2)HO)_x\text{-}(CH_2C(CH_3)HO)_y\text{-}(CH_2CH_2O)_z\text{-}H \qquad (II),$$

wobei ein molares Verhältnis von anionischem Tensid (A) zu nichtionischem Tensid (B) von 51 : 49 bis 92 : 8 vorliegt und das nichtionische Tensid (B) als Ausgangsmaterial für das anionische Tensid (A) dient, wobei

$R^1$ für einen primären linearen oder verzweigten, gesättigten oder ungesättigten, aliphatischen Kohlenwasserstoffrest mit 10 bis 36 Kohlenstoffatomen steht; und
$R^2$ für einen linearen gesättigten aliphatischen Kohlenwasserstoffrest mit 2 bis 14 Kohlenstoffatomen steht; und
M für H, Na, K oder $NH_4$ steht; und
x für eine Zahl von 0 bis 10 steht; und
y für eine Zahl von 0 bis 50 steht; und
z für eine Zahl von 1 bis 35 steht;
wobei die Summe aus x + y + z für eine Zahl von 3 bis 80 steht und die x+y+z Alkoxylatgruppen statistisch verteilt, alternierend oder blockweise angeordnet sein können; und
wobei die Summe aus x + y für eine Zahl von > 0 steht, falls es sich bei $R^1$ um einen primären linearen, gesättigten oder ungesättigten, aliphatischen Kohlenwasserstoffrest mit 10 bis 36 Kohlenstoffatomen handelt, wobei das Konzentrat 20 Gew.-% bis 70 Gew.-% der Tensidmischung, 10 Gew.-% bis 40 Gew.-% Wasser und 10 Gew.-% bis 40 Gew.-% eines Cosolvens, jeweils bezogen auf die Gesamtmenge des Konzentrats, enthält, wobei vorzugsweise

das Cosolvens aus der Gruppe der aliphatischen Alkohole mit 3 bis 8 Kohlenstoffatome oder aus der Gruppe der Alkylmonoethylenglykole, der Alkyldiethylenglykole oder der Alkyltriethylenglykole ausgewählt ist, wobei der Alkylrest ein aliphatischer Kohlenwasserstoffrest mit 3 bis 6 Kohlenstoffatomen ist.

25. Konzentrat gemäß Anspruch 245, **dadurch gekennzeichnet, dass** das Konzentrat bei 20 ° C fließfähig ist und bei 40° C eine Viskosität von <1500 mPas bei 200 Hz aufweist.

26. Konzentrat gemäß Anspruch 245 oder 25, **dadurch gekennzeichnet, dass** das Konzentrat 0,5 bis 15 Gew.-% an einer Mischung enthaltend NaCl und Diglykolsäure Dinatriumsalz enthält, wobei NaCl im Überschuss zu Diglykolsäure Dinatriumsalz vorhanden ist.

## Claims

1. A method for producing mineral oil from underground mineral oil deposits, in which an aqueous saline surfactant formulation comprising a surfactant mixture, for the purpose of lowering the interfacial tension between oil and water to < 0.1 mN/m at deposit temperature, is injected through at least one injection well into a mineral oil deposit and crude oil is withdrawn through at least one production well from the deposit, wherein

a) the mineral oil deposit has a deposit temperature of 55°C to 150°C, a crude oil having more than 20° API and a deposit water having more than 100 ppm of divalent cations; and
b) the surfactant mixture comprises at least one anionic surfactant (A) of the general formula (I)

$$R^1\text{-}O\text{-}(CH_2C(R^2)HO)_x\text{-}(CH_2C(CH_3)HO)_y\text{-}(CH_2CH_2O)_z\text{-}CH_2CO_2M \qquad (I)$$

and at least one nonionic surfactant (B) of the general formula (II)

$$R^1\text{-}O\text{-}(CH_2C(R^2)HO)x\text{-}(CH_2C(CH_3)HO)_y\text{-}(CH_2CH_2O)_z\text{-}H \qquad (II),$$

where a molar ratio of anionic surfactant (A) to nonionic surfactant (B) of 51:49 to 92:8 is present in the surfactant mixture on injection and the nonionic surfactant (B) serves as starting material for the anionic surfactant (A), where

$R^1$ is a primary linear or branched, saturated or unsaturated, aliphatic hydrocarbyl radical having 10 to 36 carbon atoms; and
$R^2$ is a linear saturated aliphatic hydrocarbyl radical having 2 to 14 carbon atoms; and
M is H, Na, K or $NH_4$; and
x is a number from 0 to 10; and
y is a number from 0 to 50; and
z is a number from 1 to 35;
where the sum total of x + y + z is a number from 3 to 80 and the x+y+z alkoxylate groups may be arranged in random distribution, in alternation or in blocks; and
where the sum total of x + y is a number > 0 if $R^1$ is a primary linear, saturated or unsaturated, aliphatic hydrocarbyl radical having 10 to 36 carbon atoms;
and

c) the concentration of all the surfactants together is 0.05% to 0.49% by weight, based on the total amount of the aqueous saline surfactant formulation.

2. The method according to claim 1, wherein a molar ratio of anionic surfactant (A) to nonionic surfactant (B) of 60:40 to 92:8 is present in the surfactant mixture on injection and the nonionic surfactant (B) serves as starting material for the anionic surfactant (A).

3. The method according to claim 1, wherein a molar ratio of anionic surfactant (A) to nonionic surfactant (B) of 60:40 to 92:8, preferably of 70:30 to 92:8, is present in the surfactant mixture on injection, the nonionic surfactant (B) serves as starting material for the anionic surfactant (A), and the interfacial tension between oil and water is preferably lowered to < 0.05 mN/m at deposit temperature.

4. The method according to claim 3, wherein a molar ratio of anionic surfactant (A) to nonionic surfactant (B) of 70:30 to 89:11 is present in the surfactant mixture on injection, the nonionic surfactant (B) serves as starting material for the anionic surfactant (A), and the interfacial tension between oil and water is lowered to < 0.01 mN/m.

5. The method according to any of claims 1 to 4, wherein

$R^1$ is a primary linear or branched, saturated or unsaturated, aliphatic hydrocarbyl radical having 10 to 36 carbon atoms; and
$R^2$ is a linear saturated aliphatic hydrocarbyl radical having 2 to 14 carbon atoms; and
M is H, Na, K or $NH_4$; and
x is a number from 1 to 10; and
y is a number from 0 to 50; and
z is a number from 3 to 35;

where the sum total of x + y + z is a number from 4 to 80.

6. The method according to any of claims 1 to 4, wherein

$R^1$ is a primary branched saturated aliphatic hydrocarbyl radical having 10 to 36 carbon atoms; and
$R^2$ is a linear saturated aliphatic hydrocarbyl radical having 2 to 14 carbon atoms; and
M is H, Na, K or $NH_4$; and
x is a number from 0 to 10; and

y is the number 0; and
z is a number from 3 to 35;

where the sum total of x + y + z is a number from 3 to 45.

7. The method according to any of claims 1 to 4 or claim 6, wherein

$R^1$ is a primary branched saturated aliphatic hydrocarbyl radical having 16 to 20 carbon atoms, preferably 2-hexyldecyl, 2-octyldecyl, 2-hexyldodecyl, 2-octyldodecyl or a mixture of the hydrocarbyl radicals mentioned; and
x is preferably the number 0.

8. The method according to any of claims 1 to 4 or claim 6, wherein

$R^1$ is a primary branched saturated aliphatic hydrocarbyl radical having 24 to 28 carbon atoms, being 2-decyltetradecyl, 2-dodecylhexadecyl, 2-decylhexadecyl or 2-dodecyltetradecyl or a mixture of the hydrocarbyl radicals mentioned; and
x is preferably the number 0.

9. The method according to any of claims 1 to 4, wherein

$R^1$ is a primary linear or branched, saturated or unsaturated, aliphatic hydrocarbyl radical having 10 to 36 carbon atoms; and
x is the number 0; and
y is a number from 3 to 25; and
z is a number from 3 to 30;

and the sum total of x + y + z is a number from 6 to 55.

10. The process as claimed in claim 9, wherein

x is the number 0; and
y is a number from 3 to 10; and
z is a number from 4 to 15;

and the sum total of x + y + z is a number from 7 to 25.

11. The method according to any of claims 1 to 6, 9 and 10, wherein

$R^1$ is a primary linear or branched, saturated or unsaturated, aliphatic hydrocarbyl radical having 13 to 20 carbon atoms.

12. The method according to any of claims 1 to 6 and 9 to 11, wherein

$R^1$ is a primary linear saturated aliphatic hydrocarbyl radical having 16 to 18 carbon atoms.

13. The method according to any of claims 1 to 12, wherein the sum total of x + y + z is a number from 7 to 24.

14. The method according to any of claims 1 to 13, wherein the aqueous surfactant formulation comprises a thickening polymer from the group of the biopolymers or from the group of the copolymers based on acrylamide.

15. The method according to any of claims 1 to 14, wherein the mixture of anionic surfactant (A) of the general formula (I) and nonionic surfactant (B) of the general formula (II) is provided in the form of a concentrate comprising 20% by weight to 70% by weight of the surfactant mixture, 10% by weight to 40% by weight of water and 10% by weight to 40% by weight of a cosolvent, based on the total amount of the concentrate, where preferably

a) the cosolvent is selected from the group of the aliphatic alcohols having 3 to 8 carbon atoms or from the group of the alkyl monoethylene glycols, the alkyl diethylene glycols or the alkyl triethylene glycols, where the alkyl radical is an aliphatic hydrocarbyl radical having 3 to 6 carbon atoms;

48

and/or
b) the concentrate is free-flowing at 20°C and has a viscosity at 40°C of < 1500 mPas at 200 Hz.

16. The method according to claim 15, wherein the concentrate comprises 0.5% to 15% by weight of a mixture comprising NaCl and diglycolic acid disodium salt, where NaCl is present in excess relative to diglycolic acid disodium salt.

17. The method according to either of claims 15 or 16, wherein the concentrate comprises butyl diethylene glycol as cosolvent.

18. The method according to any of claims 1 to 17, wherein the aqueous saline surfactant formulation comprises, as well as the anionic surfactant (A) of the general formula (I) and the nonionic surfactant (B) of the general formula (II), also further surfactants (C) which

a) are not identical to the surfactants (A) or (B); and
b) are from the group of the alkylbenzenesulfonates, alpha-olefinsulfonates, internal olefinsulfonates, paraffinsulfonates, where the surfactants have 14 to 28 carbon atoms;
and/or
c) are selected from the group of the alkyl ethoxylates and alkyl polyglucosides, where the particular alkyl radical has 8 to 18 carbon atoms.

19. The method according to any of claims 1 to 18, wherein the aqueous saline surfactant formulation comprises, as well as the anionic surfactant (A) of the general formula (I) and the nonionic surfactant (B) of the general formula (II), also a cosolvent selected from the group of the aliphatic alcohols having 3 to 8 carbon atoms or from the group of the alkyl monoethylene glycols, the alkyl diethylene glycols or the alkyl triethylene glycols, where the alkyl radical is an aliphatic hydrocarbyl radical having 3 to 6 carbon atoms.

20. The method according to any of claims 1 to 19, wherein the deposit is a sandstone deposit, and wherein more than 70 percent by weight of sand (quartz and/or feldspar) is present and up to 25 percent by weight of other minerals selected from kaolinite, smectite, illite, chlorite and/or pyrite may be present.

21. The method according to any of claims 1 to 20, wherein the production of mineral oil from underground mineral oil deposits is a surfactant flooding method or a surfactant/polymer flooding method and not an alkali/surfactant/polymer flooding method and not a flooding method in which $Na_2CO_3$ is injected as well.

22. The method according to any of claims 1 to 21, wherein the production of mineral oil from underground mineral oil deposits is a Winsor type III microemulsion flooding operation.

23. The method according to any of claims 1 to 22, wherein the surfactant mixture of anionic surfactant (A) of the general formula (I) and nonionic surfactant (B) of the general formula (II) is obtained under at least one of the following reaction conditions:

• the anionic surfactant (A) of the general formula (I) is prepared by reacting the nonionic surfactant (B) of the general formula (II), preferably while stirring, in a reactor with chloroacetic acid or chloroacetic acid sodium salt in the presence of alkali metal hydroxide or aqueous alkali metal hydroxide, with removal of water of reaction such that the water content in the reactor is kept at a value of 0.2% to 1.7% during the carboxymethylation by applying reduced pressure and/or by passing nitrogen through;
• aqueous NaOH as alkali metal hydroxide and aqueous chloroacetic acid are used in a carboxymethylation, using NaOH in relation to the chloroacetic acid in a ratio of 2 eq:1 eq to 2.2 eq:1 eq;
and

the nonionic surfactant (B) is prepared either via a base-catalyzed alkoxylation using KOH or NaOH or CsOH or via an alkoxylation using a double metal cyanide catalyst, and the alkoxylation catalyst has not been neutralized and not been removed after the alkoxylation has ended;
and
the nonionic surfactant (B) of the general formula (II) is initially charged in a reactor in the carboxymethylation and the sodium hydroxide and chloroacetic acid are metered in in parallel at a temperature of 60-110°C over a period of 1-7 h, the metered addition over the entire period being effected continuously or in equal portions every hour, and the stoichiometric ratio of nonionic surfactant (B) of the general formula (II) to the chloroacetic

EP 3 221 417 B2

acid being 1 eq:1 eq to 1 eq:1.9 eq;
and

the water content in the reactor is kept predominantly at an average value of 0.2% to 1.7% during the carboxymethylation by applying reduced pressure and/or by passing nitrogen through;

• NaOH as alkali metal hydroxide and chloroacetic acid sodium salt are used in the carboxymethylation, using NaOH in relation to the chloroacetic acid sodium salt in a ratio of 1 eq:1 eq to 1 eq:1.9 eq;
and

the nonionic surfactant (B) is prepared via a base-catalyzed alkoxylation using KOH or NaOH or CsOH and is preferably used in unneutralized form in the carboxymethylation;
and
the nonionic surfactant (B) of the general formula (II) is initially charged in a reactor in the carboxymethylation together with NaOH or aqueous NaOH, where the stoichiometric ratio of nonionic surfactant (B) of the general formula (II) to NaOH is 1 eq:1 eq to 1 eq:1.5 eq, a temperature of 60-110°C is set, and the nonionic surfactant (B) of the general formula (II) is converted to the corresponding sodium salt $R^1$-O-$(CH_2C(R^2)HO)_x$-$(CH_2C(CH_3)HO)_y$-$(CH_2CH_2O)_z$-Na by applying reduced pressure and/or passing nitrogen through and, at a temperature of 60-110°C, the chloroacetic acid sodium salt is metered in completely or preferably over a period of 4-12 h, where the stoichiometric ratio of nonionic surfactant (B) of the general formula (II) to the chloroacetic acid sodium salt is 1 eq:1 eq to 1 eq:1.9 eq and where the metered addition over the entire period is effected continuously or in equal portions every hour;
and
the water content in the reactor is kept at a value of 0.2% to 1.7% during the carboxymethylation by applying reduced pressure and/or by passing nitrogen through;

• solid NaOH as alkali metal hydroxide and chloroacetic acid sodium salt are used in a carboxymethylation, using NaOH in relation to the chloroacetic acid sodium salt in a ratio of 1 eq:1 eq to 1.1 eq:1 eq;
and

the nonionic surfactant (B) is prepared via a base-catalyzed alkoxylation using KOH or NaOH or CsOH and then neutralized with acetic acid, and is used in a carboxymethylation together with initially 0.5-1.5% water;
and
chloroacetic acid sodium salt and the nonionic surfactant (B) of the general formula (II) are initially charged together in a reactor in the carboxymethylation, where the stoichiometric ratio of nonionic surfactant (B) of the general formula (II) to the chloroacetic acid sodium salt is 1 eq:1 eq to 1 eq:1.9 eq, and the sodium hydroxide is metered in at a temperature of 20-70°C over a period of 4-12 h, the metered addition being effected continuously over the entire period or in equal portions every hour;
and
the water content in the reactor is kept at a value of 0.2% to 1.7% during the carboxymethylation by applying reduced pressure and/or by passing nitrogen through;

• solid NaOH as alkali metal hydroxide and chloroacetic acid sodium salt are used in a carboxymethylation, where NaOH or, in the case of a basic alkoxylate, the sum total of NaOH and $R^1$-O-$(CH_2C(R^2)HO)_x$-$(CH_2C(CH_3)HO)_y$-$(CH_2CH_2O)_z$-K or the sum total in the case of a basic alkoxylate of NaOH and $R^1$-O-$(CH_2C(R^2)HO)_x$-$(CH_2C(CH_3)HO)_y$-$(CH_2CH_2O)_z$-Na or, in the case of a basic alkoxylate, the sum total of NaOH and $R^1$-O-$(CH_2C(R^2)HO)_x$-$(CH_2C(CH_3)HO)_y$-$(CH_2CH_2O)_z$-Cs in relation to the chloroacetic acid sodium salt in a ratio of 1.1 eq:1 eq to 1 eq:1.5 eq, where the ratio of nonionic surfactant (B) of the general formula (II) :NaOH is from 1 eq:1 eq to 1 eq:1.5 eq;
and

the nonionic surfactant (B) is prepared via a base-catalyzed alkoxylation using KOH or NaOH or CsOH or a mixture of NaOH and KOH, and is used in the carboxymethylation either in neutralized and filtered (i.e. saltfree) form or in the form of an unneutralized basic alkoxylate;
and
chloroacetic acid sodium salt and the nonionic surfactant (B) of the general formula (II) are initially charged together in a reactor in the carboxymethylation, where the stoichiometric ratio of nonionic surfactant (B) of the general formula (II) to the chloroacetic acid sodium salt is 1 eq:1 eq to 1 eq:1.9 eq, and the sodium hydroxide is metered in at a temperature of 20-70°C over a period of 4-12 h, the metered addition being effected continuously over the entire period or in equal portions every hour;
and
the water content in the reactor is kept at a value of 0.2% to 1.7% during the carboxymethylation by applying reduced pressure and/or by passing nitrogen through;

• solid NaOH as alkali metal hydroxide and chloroacetic acid sodium salt are used in a carboxymethylation, using NaOH in relation to the chloroacetic acid sodium salt in a ratio of 1 eq:1 eq to 1.1 eq:1 eq;
and

the nonionic surfactant (B) is prepared via an alkoxylation using double metal cyanide catalysis;
and
chloroacetic acid sodium salt and the nonionic surfactant (B) of the general formula (II) are initially charged together in the reactor in the carboxymethylation, where the stoichiometric ratio of nonionic surfactant (B) of the general formula (II) to the chloroacetic acid sodium salt is 1 eq:1 eq to 1 eq:1.9 eq, and the sodium hydroxide is metered in at a temperature of 20-70°C over a period of 4-12 h, the metered addition being effected continuously over the entire period or in equal portions every hour;
and
the water content in the reactor is kept at a value of 0.2% to 1.7% during the carboxymethylation by applying reduced pressure and/or by passing nitrogen through.

24. A concentrate with a surfactant mixture comprising at least one anionic surfactant (A) of the general formula (I)

$$R^1\text{-}O\text{-}(CH_2C(R^2)HO)_x\text{-}(CH_2C(CH_3)HO)_y\text{-}(CH_2CH_2O)_z\text{-}CH_2CO_2M \qquad (I)$$

and at least one nonionic surfactant (B) of the general formula (II)

$$R^1\text{-}O\text{-}(CH_2C(R^2)HO)_x\text{-}(CH_2C(CH_3)HO)_y\text{-}(CH_2CH_2O)_z\text{-}H \qquad (II),$$

where a molar ratio of anionic surfactant (A) to nonionic surfactant (B) of 51:49 to 92:8 is present and the nonionic surfactant (B) serves as starting material for the anionic surfactant (A),
where

$R^1$ is a primary linear or branched, saturated or unsaturated, aliphatic hydrocarbyl radical having 10 to 36 carbon atoms; and
$R^2$ is a linear saturated aliphatic hydrocarbyl radical having 2 to 14 carbon atoms; and
M is H, Na, K or $NH_4$; and
x is a number from 0 to 10; and
y is a number from 0 to 50; and
z is a number from 1 to 35;
where the sum total of x + y + z is a number from 3 to 80 and the x+y+z alkoxylate groups may be arranged in random distribution, in alternation or in blocks; and
where the sum total of x + y is a number > 0 if R1 is a primary linear, saturated or unsaturated, aliphatic hydrocarbyl radical having 10 to 36 carbon atoms, where the concentrate comprises 20% by weight to 70% by weight of the surfactant mixture, 10% by weight to 40% by weight of water and 10% by weight to 40% by weight of a cosolvent, in each case based on the total amount of the concentrate, where preferably
the cosolvent is selected from the group of the aliphatic alcohols having 3 to 8 carbon atoms or from the group of the alkyl monoethylene glycols, the alkyl diethylene glycols or the alkyl triethylene glycols, where the alkyl radical is an aliphatic hydrocarbyl radical having 3 to 6 carbon atoms.

25. The concentrate according to claim 24, wherein the concentrate is free-flowing at 20°C and has a viscosity at 40°C of < 1500 mPas at 200 Hz.

26. The concentrate according to claim 24 or 25, wherein the concentrate comprises 0.5% to 15% by weight of a mixture comprising NaCl and diglycolic acid disodium salt, where NaCl is present in excess relative to diglycolic acid disodium salt.

**Revendications**

1. Procédé d'extraction de pétrole de gisements pétroliers souterrains, selon lequel une formulation aqueuse saline de tensioactifs comprenant un mélange de tensioactifs, destinée à réduire la tension interfaciale entre l'huile et l'eau à < 0,1 mN/m à la température du gisement, est injectée dans un gisement pétrolier par au moins un forage d'injection, et du pétrole brut est extrait du gisement par au moins un forage de production, **caractérisé en ce que**

   a) le gisement pétrolier présente une température de gisement de 55 °C à 150 °C, un pétrole brut de plus de 20 °API et une eau de gisement contenant plus de 100 ppm de cations bivalents; et

   b) le mélange de tensioactifs contient au moins un tensioactif anionique (A) de la formule générale (I) :

   $$R^1\text{-O-}(CH_2C(R^2)HO)_x\text{-}(CH_2C(CH_3)HO)_y\text{-}(CH_2CH_2O)_z\text{ -}CH_2CO_2M \qquad (I)$$

   et au moins un tensioactif non ionique (B) de la formule générale (II):

   $$R^1\text{-O-}(CH_2C(R^2)HO)x\text{-}(CH_2C(CH_3)HO)_y\text{-}(CH_2CH_2O)_z\text{ -}H \qquad (II),$$

   un rapport molaire entre le tensioactif anionique (A) et le tensioactif non ionique (B) de 51:49 à 92:8 étant présent dans le mélange de tensioactifs lors de l'injection, et le tensioactif non ionique (B) servant de matériau de départ pour le tensioactif anionique (A),

   $R^1$ représentant un radical hydrocarboné aliphatique primaire linéaire ou ramifié, saturé ou insaturé, de 10 à 36 atomes de carbone ; et
   $R^2$ représentant un radical hydrocarboné aliphatique saturé linéaire de 2 à 14 atomes de carbone ; et
   M représentant H, Na, K ou $NH_4$; et
   x représentant un nombre de 0 à 10 ; et
   y représentant un nombre de 0 à 50 ; et
   z représentant un nombre de 1 à 35 ;

   la somme de x+y+z représentant un nombre de 3 à 80, et les x+y+z groupes alcoxylate pouvant être agencés sous forme répartie statistiquement, alternée ou séquentielle ; et la somme de x+y représentant un nombre > 0 si R1 est un radical hydrocarboné aliphatique primaire linéaire, saturé ou insaturé, de 10 à 36 atomes de carbone; et
   c) la concentration de tous les tensioactifs ensemble est de 0,05 à 0,49 % en poids, par rapport à la quantité totale de la formulation aqueuse saline de tensioactifs.

2. Procédé selon la revendication 1, **caractérisé en ce qu'**un rapport molaire entre le tensioactif anionique (A) et le tensioactif non ionique (B) de 60:40 à 92:8 est présent dans le mélange de tensioactifs lors de l'injection, et le tensioactif non ionique (B) sert de matériau de départ pour le tensioactif anionique (A).

3. Procédé selon la revendication 1, **caractérisé en ce qu'**un rapport molaire entre le tensioactif anionique (A) et le tensioactif non ionique (B) de 60:40 à 92:8, de préférence de 70:30 à 92:8, est présent dans le mélange de tensioactifs lors de l'injection, le tensioactif non ionique (B) sert de matériau de départ pour le tensioactif anionique (A), et la tension interfaciale entre l'huile et l'eau est de préférence abaissée à < 0,05 mN/m à la température du gisement.

4. Procédé selon la revendication 3, **caractérisé en ce qu'**un rapport molaire entre le tensioactif anionique (A) et le tensioactif non ionique (B) de 70:30 à 89:11 est présent dans le mélange de tensioactifs lors de l'injection, le tensioactif non ionique (B) sert de matériau de départ pour le tensioactif anionique (A), et la tension interfaciale entre l'huile et l'eau est abaissée à < 0,01 mN/m.

5. Procédé selon l'une quelconque des revendications 1 à 4, **caractérisé en ce que**

   R1 représente un radical hydrocarboné aliphatique primaire linéaire ou ramifié, saturé ou insaturé, de 10 à 36 atomes de carbone ; et
   R2 représente un radical hydrocarboné aliphatique saturé linéaire de 2 à 14 atomes de carbone ; et
   M représente H, Na, K ou $NH_4$; et
   x représente un nombre de 1 à 10 ; et
   y représente un nombre de 0 à 50 ; et

z représente un nombre de 3 à 35 ;

la somme de x+y+z représentant un nombre de 4 à 80.

6. Procédé selon l'une quelconque des revendications 1 à 4, **caractérisé en ce que**

R1 représente un radical hydrocarboné aliphatique primaire ramifié, saturé, de 10 à 36 atomes de carbone ; et
R2 représente un radical hydrocarboné aliphatique saturé linéaire de 2 à 14 atomes de carbone ; et
M représente H, Na, K ou $NH_4$; et
x représentant un nombre de 0 à 10 ; et
y représente le nombre 0 ; et
z représente un nombre de 3 à 35 ;

la somme de x+y+z représentant un nombre de 3 à 45.

7. Procédé selon l'une quelconque des revendications 1 à 4 ou selon la revendication 6, **caractérisé en ce que**

$R^1$ représente un radical hydrocarboné aliphatique primaire ramifié saturé, de 16 à 20 atomes de carbone ; celuici étant de préférence 2-hexyldécyle, 2-octyldécyle, 2-hexyldodécyle, 2-octyldodécyle ou un mélange des radicaux hydrocarbonés mentionnés ; et
x représente de préférence le nombre 0.

8. Procédé selon l'une quelconque des revendications 1 à 4 ou selon la revendication 6, **caractérisé en ce que**

$R^1$ représente un radical hydrocarboné aliphatique primaire ramifié saturé, de 24 à 28 atomes de carbone ; celuici étant 2-décyltétradécyle, 2-dodécylhexadécyle, 2-décylhexadécyle ou 2-dodécyltétradécyle ou un mélange des radicaux hydrocarbonés mentionnés ; et
x représente de préférence le nombre 0.

9. Procédé selon l'une quelconque des revendications 1 à 4, **caractérisé en ce que**

$R^1$ représente un radical hydrocarboné aliphatique primaire linéaire ou ramifié, saturé ou insaturé, de 10 à 36 atomes de carbone ; et
x représente le nombre 0 ; et
y représente un nombre de 3 à 25 ; et
z représente un nombre de 3 à 30 ;

et la somme de x+y+z représente un nombre de 6 à 55.

10. Procédé selon la revendication 9, **caractérisé en ce que**

x représente le nombre 0 ; et
y représente un nombre de 3 à 10 ; et
z représente un nombre de 4 à 15 ;

et la somme de x+y+z représente un nombre de 7 à 25.

11. Procédé selon l'une quelconque des revendications 1 à 6, 9 et 10, **caractérisé en ce que**

$R^1$ représente un radical hydrocarboné aliphatique primaire linéaire ou ramifié, saturé ou insaturé, de 13 à 20 atomes de carbone.

12. Procédé selon l'une quelconque des revendications 1 à 6 et 9 à 11, **caractérisé en ce que**

$R^1$ représente un radical hydrocarboné aliphatique primaire linéaire saturé, de 16 à 18 atomes de carbone.

13. Procédé selon l'une quelconque des revendications 1 à 12, **caractérisé en ce que** la somme de x+y+z représente un nombre de 7 à 24.

14. Procédé selon l'une quelconque des revendications 1 à 13, **caractérisé en ce que** la formulation aqueuse de tensioactifs contient un polymère épaississant du groupe des biopolymères ou du groupe des copolymères à base d'acrylamide.

15. Procédé selon l'une quelconque des revendications 1 à 14, **caractérisé en ce que** le mélange d'un tensioactif anionique (A) de la formule générale (I) et d'un tensioactif non ionique (B) de la formule générale (II) est préparé sous la forme d'un concentré contenant 20 % en poids à 70 % en poids du mélange de tensioactifs, 10 % en poids à 40 % en poids d'eau, et 10 % en poids à 40 % en poids d'un co-solvant, par rapport à la quantité totale du concentré, de préférence

   a) le co-solvant étant choisi dans le groupe des alcools aliphatiques de 3 à 8 atomes de carbone ou dans le groupe des alkylmonoéthylène glycols, des alkyldiéthylène glycols ou des alkyltriéthylène glycols, le radical alkyle étant un radical hydrocarboné aliphatique de 3 à 6 atomes de carbone ;
   et/ou
   b) le concentré étant fluide à 20 °C et présentant à 40 °C une viscosité < 1 500 mPas à 200 Hz.

16. Procédé selon la revendication 15, **caractérisé en ce que** le concentré contient 0,5 à 15 % en poids d'un mélange contenant du NaCl et le sel de disodium de l'acide diglycolique, le NaCl étant présent en excès par rapport au sel de disodium de l'acide diglycolique.

17. Procédé selon l'une quelconque des revendications 15 à 16, **caractérisé en ce que** le concentré contient du butyldiéthylène glycol en tant que co-solvant.

18. Procédé selon l'une quelconque des revendications 1 à 17, **caractérisé en ce que** la formulation aqueuse saline de tensioactifs contient en plus du tensioactif anionique (A) de la formule générale (I) et du tensioactif non ionique (B) de la formule générale (II) encore des tensioactifs supplémentaires (C), qui

   a) ne sont pas identiques aux tensioactifs (A) ou (B) ;
   et
   b) sont du groupe des sulfonates d'alkylbenzène, des sulfonates d'alpha-oléfines, des sulfonates d'oléfines internes, des sulfonates de paraffines, les tensioactifs comprenant 14 à 28 atomes de carbone;
   et/ou
   c) sont choisis dans le groupe des éthoxylates d'alkyle et des polyglucosides d'alkyle, le radical alkyle respectif comprenant 8 à 18 atomes de carbone.

19. Procédé selon l'une quelconque des revendications 1 à 18, **caractérisé en ce que** la formulation aqueuse saline de tensioactifs contient en plus du tensioactif anionique (A) de la formule générale (I) et du tensioactif non ionique (B) de la formule générale (II) encore un co-solvant, qui est choisi dans le groupe des alcools aliphatiques de 3 à 8 atomes de carbone ou dans le groupe des alkylmonoéthylène glycols, des alkyldiéthylène glycols ou des alkyltriéthylène glycols, le radical alkyle étant un radical hydrocarboné aliphatique de 3 à 6 atomes de carbone.

20. Procédé selon l'une quelconque des revendications 1 à 19, **caractérisé en ce que** le gisement est un gisement de grès, et **en ce que** plus de 70 pour cent en poids de sable (quartz et/ou feldspath) est contenu, et jusqu'à 25 pour cent en poids d'autres minéraux choisis parmi la kaolinite, la smectite, l'illite, la chlorite et/ou la pyrite peuvent être contenus.

21. Procédé selon l'une quelconque des revendications 1 à 20, **caractérisé en ce que** l'extraction du pétrole de gisements pétroliers souterrains consiste en un procédé par balayage de tensioactif ou en un procédé par balayage de tensioactif-polymère, et ne consiste pas en un procédé par balayage d'alcali-tensioactif-polymère et pas en un procédé de balayage selon lequel du $Na_2CO_3$ est injecté.

22. Procédé selon l'une quelconque des revendications 1 à 21, **caractérisé en ce que** l'extraction du pétrole de gisements pétroliers souterrains consiste en un balayage de microémulsion de type Winsor III.

23. Procédé selon l'une quelconque des revendications 1 à 22, **caractérisé en ce que** le mélange de tensioactifs du tensioactif anionique (A) de la formule générale (I) et du tensioactif non ionique (B) de la formule générale (II) est obtenu dans au moins une des conditions de réaction suivantes :

• le tensioactif anionique (A) de la formule générale (I) est fabriqué par mise en réaction du tensioactif non ionique (B) de la formule générale (II), de préférence sous agitation, dans un réacteur avec de l'acide chloroacétique ou un sel de sodium de l'acide chloroacétique, en présence d'un hydroxyde alcalin ou d'un hydroxide alcalin aqueux, l'eau de réaction formée étant éliminée de telle sorte que la teneur en eau dans le réacteur soit maintenue par application d'un vide et/ou par passage d'azote à une valeur de 0,2 à 1,7 % pendant la carboxyméthylation ;

• du NaOH aqueux en tant qu'hydroxyde de métal alcalin et de l'acide chloroacétique aqueux sont utilisés dans une carboxyméthylation, le NaOH et l'acide chloroacétique étant utilisés en un rapport de 2 éq. sur 1 éq. à 2,2 éq. sur 1 éq. ;
et

le tensioactif non ionique (B) est fabriqué soit par une alcoxylation catalysée par une base utilisant du KOH ou du NaOH ou du CsOH, soit par une alcoxylation utilisant un catalyseur de cyanure de deux métaux, et le catalyseur de l'alcoxylation n'est pas neutralisé et n'est pas séparé après la fin de l'alcoxylation ;
et

le tensioactif non ionique (B) de la formule générale (II) est chargé initialement dans la carboxyméthylation dans un réacteur, et l'hydroxyde de sodium et l'acide chloroacétique sont ajoutés en parallèle à une température de 60 à 110 °C en une durée de 1 à 7 h, l'ajout ayant lieu en continu sur l'ensemble de la durée ou toutes les heures en portions uniformes, et le rapport stoechiométrique entre le tensioactif non ionique (B) de la formule générale (II) et l'acide chloroacétique étant de 1 éq. sur 1 éq. à 1 éq. sur 1,9 éq. ; et la teneur en eau dans le réacteur est maintenue par application d'un vide et/ou par passage d'azote essentiellement à une valeur moyenne de 0,2 à 1,7 % pendant la carboxyméthylation ;

• du NaOH en tant qu'hydroxyde de métal alcalin et un sel de sodium de l'acide chloroacétique sont utilisés dans une carboxyméthylation, le NaOH et le sel de sodium de l'acide chloroacétique étant utilisés en un rapport de 1 éq. sur 1 éq. à 1 éq. sur 1,9 éq. ;
et

le tensioactif non ionique (B) est fabriqué par une alcoxylation catalysée par une base utilisant du KOH ou du NaOH ou du CsOH, et est de préférence utilisé sous forme non neutralisée dans la carboxyméthylation ; et le tensioactif non ionique (B) de la formule générale (II) est chargé initialement dans la carboxyméthylation dans un réacteur conjointement avec du NaOH ou du NaOH aqueux, le rapport stoechiométrique entre le tensioactif non ionique (B) de la formule générale (II) et NaOH étant de 1 éq. sur 1 éq. à 1 éq. sur 1,5 éq., une temperature de 60 à 110 °C est ajustée, et le tensioactif non ionique (B) de la formule générale (II) est transformé par application d'un vide et/ou par passage d'azote en le sel de sodium correspondant $R^1$-O-$(CH_2C(R^2)HO)_x$-$(CH_2C(CH_3)HO)_y$-$(CH_2CH_2O)_z$ -Na et le sel de sodium de l'acide chloroacétique est ajouté en totalité ou de préférence en une durée de 4 à 12 h à une température de 60 à 110 °C, le rapport stoechiométrique entre le tensioactif non ionique (B) de la formule générale (II) et le sel de sodium de l'acide chloroacétique étant de 1 éq. sur 1 éq. à 1 éq. sur 1,9 éq., et l'ajout a lieu en continu sur l'ensemble de la durée ou toutes les heures en portions uniformes ;
et
la teneur en eau dans le réacteur est maintenue par application d'un vide et/ou par passage d'azote à une valeur de 0,2 à 1,7 % pendant la carboxymethylation;

• du NaOH solide en tant qu'hydroxyde de métal alcalin et un sel de sodium de l'acide chloroacétique sont utilisés dans une carboxyméthylation, le NaOH et le sel de sodium de l'acide chloroacétique étant utilisés en un rapport de 1 éq. sur 1 éq. à 1,1 éq. sur 1 éq. ;
et

le tensioactif non ionique (B) est fabriqué par une alcoxylation catalysée par une base utilisant du KOH ou du NaOH ou du CsOH, puis neutralisé avec de l'acide acétique et utilisé dans une carboxyméthylation conjointement avec initialement 0,5 à 1,5 % d'eau ;
et
le sel de sodium de l'acide chloroacétique et le tensioactif non ionique (B) de la formule générale (II) sont chargés initialement ensemble dans la carboxyméthylation dans un réacteur, le rapport stoechiométrique entre le tensioactif non ionique (B) de la formule générale (II) et le sel de sodium de l'acide chloroacétique étant de 1 éq. sur 1 éq. à 1 éq. sur 1,9 éq., et l'hydroxyde de sodium est ajouté à une température de 20 à 70 °C pendant une durée de 4 à 12 h, l'ajout ayant lieu en continu sur l'ensemble de la durée ou toutes les heures en portions uniformes ;

et

la teneur en eau dans le réacteur est maintenue par application d'un vide et/ou par passage d'azote à une valeur de 0,2 à 1,7 % pendant la carboxyméthylation ;

• du NaOH solide en tant qu'hydroxyde de métal alcalin et un sel de sodium de l'acide chloroacétique sont utilisés dans une carboxyméthylation, le NaOH ou, dans le cas d'un alcoxylate basique, la somme de NaOH et $R^1$-O-$(CH_2C(R^2)HO)_x$-$(CH_2C(CH_3)HO)_y$-$(CH_2CH_2O)_z$-K ou la somme, dans le cas d'un alcoxylate basique, de NaOH et $R^1$-O-$(CH_2C(R^2)HO)_x$-$(CH_2C(CH_3)HO)_y$-$(CH_2CH_2O)_z$-Na ou, dans le cas d'un alcoxylate basique, la somme de NaOH et $R^1$-O-$(CH_2C(R^2)HO)_x$-$(CH_2C(CH_3)HO)_y$-$(CH_2CH_2O)_z$-Cs, et le sel de sodium de l'acide chloroacétique en un rapport de 1,1 éq. sur 1 éq. à 1 éq. sur 1,5 éq., le rapport entre le tensioactif non ionique (B) de la formule générale (II) et NaOH étant de 1 éq. sur 1 éq. à 1 éq. sur 1,5 éq. ; et

le tensioactif non ionique (B) est fabriqué par une alcoxylation catalysée par une base utilisant du KOH ou du NaOH ou du CsOH ou un mélange de NaOH et KOH, et utilisé dans la carboxyméthylation soit sous forme neutralisée et filtrée (c.-à-d. sans sels), soit sous la forme d'un alcoxylate basique non neutralisé ; et le sel de sodium de l'acide chloroacétique et le tensioactif non ionique (B) de la formule générale (II) sont chargés initialement ensemble dans la carboxyméthylation dans un réacteur, le rapport stoechiométrique entre le tensioactif non ionique (B) de la formule générale (II) et le sel de sodium de l'acide chloroacétique étant de 1 éq. sur 1 éq. à 1 éq. sur 1,9 éq., et l'hydroxyde de sodium est ajouté à une température de 20 à 70 °C pendant une durée de 4 à 12 h, l'ajout ayant lieu en continu sur l'ensemble de la durée ou toutes les heures en portions uniformes ; et

la teneur en eau dans le réacteur est maintenue par application d'un vide et/ou par passage d'azote à une valeur de 0,2 à 1,7 % pendant la carboxyméthylation;

• du NaOH solide en tant qu'hydroxyde de métal alcalin et un sel de sodium de l'acide chloroacétique sont utilisés dans une carboxyméthylation, le NaOH et le sel de sodium de l'acide chloroacétique étant utilisés en un rapport de 1 éq. sur 1 éq. à 1,1 éq. sur 1 éq. ; et

le tensioactif non ionique (B) est fabriqué par une alcoxylation utilisant une catalyse par cyanure de deux métaux ; et

le sel de sodium de l'acide chloroacétique et le tensioactif non ionique (B) de la formule générale (II) sont chargés initialement ensemble dans la carboxyméthylation dans le réacteur, le rapport stoechiométrique entre le tensioactif non ionique (B) de la formule générale (II) et le sel de sodium de l'acide chloroacétique étant de 1 éq. sur 1 éq. à 1 éq. sur 1,9 éq., et l'hydroxyde de sodium est ajouté à une température de 20 à 70 °C pendant une durée de 4 à 12 h, l'ajout ayant lieu en continu sur l'ensemble de la durée ou toutes les heures en portions uniformes ; et

la teneur en eau dans le réacteur est maintenue par application d'un vide et/ou par passage d'azote essentiellement à une valeur de 0,2 à 1,7 % pendant la carboxyméthylation.

24. Concentré contenant un mélange de tensioactifs contenant au moins un tensioactif anionique (A) de la formule générale (I) :

$$R^1\text{-O-}(CH_2C(R^2)HO)_x\text{-}(CH_2C(CH_3)HO)_y\text{-}(CH_2CH_2O)_z\text{-}CH_2CO_2M \qquad (I)$$

et au moins un tensioactif non ionique (B) de la formule générale (II):

$$R^1\text{-O-}(CH_2C(R^2)HO)_x\text{-}(CH_2C(CH_3)HO)_y\text{-}(CH_2CH_2O)_z\text{-}H \qquad (II),$$

un rapport molaire entre le tensioactif anionique (A) et le tensioactif non ionique (B) de 51:49 à 92:8 étant présent, et le tensioactif non ionique (B) servant de matériau de départ pour le tensioactif anionique (A),

$R^1$ i représentant un radical hydrocarboné aliphatique primaire linéaire ou ramifié, saturé ou insaturé, de 10 à 36 atomes de carbone ; et

R$^2$ représentant un radical hydrocarboné aliphatique saturé linéaire de 2 à 14 atomes de carbone ; et
M représentant H, Na, K ou NH$_4$; et
x représentant un nombre de 0 à 10 ; et
y représentant un nombre de 0 à 50 ; et
z représentant un nombre de 1 à 35 ;
la somme de x+y+z représentant un nombre de 3 à 80, et les x+y+z groupes alcoxylate pouvant être agencés sous forme répartie statistiquement, alternée ou séquentielle ; et
la somme de x+y représentant un nombre > 0 si R1 est un radical hydrocarboné aliphatique primaire linéaire, saturé ou insaturé, de 10 à 36 atomes de carbone, le concentré contenant 20 % en poids à 70 % en poids du mélange de tensioactifs, 10 % en poids à 40 % en poids d'eau, et 10 % en poids à 40 % en poids d'un co-solvant, à chaque fois par rapport à la quantité totale du concentré, de préférence
le co-solvant étant choisi dans le groupe des alcools aliphatiques de 3 à 8 atomes de carbone ou dans le groupe des alkylmonoéthylène glycols, des alkyldiéthylène glycols ou des alkyltriéthylène glycols, le radical alkyle étant un radical hydrocarboné aliphatique de 3 à 6 atomes de carbone.

25. Concentré selon la revendication 24, **caractérisé en ce que** le concentré est fluide à 20 °C et présente à 40 °C une viscosité < 1 500 mPas à 200 Hz.

26. Concentré selon la revendication 24 ou 25, **caractérisé en ce que** le concentré contient 0,5 à 15 % en poids d'un mélange contenant du NaCl et le sel de disodium de l'acide diglycolique, le NaCl étant présent en excès par rapport au sel de disodium de l'acide diglycolique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4457373 A1
- US 4485873 A1
- US 4542790 A1
- US 4811788 A1
- EP 0207312 B1
- WO 2009100298 A1
- WO 09124922 A1
- WO 11110502 A1
- WO 2012027757 A1
- WO 2013159027 A1
- DE 2418444 A1

- EP 0106018 A1
- US 20100081716 A1
- US 8304575 B2
- EP 1061064 B1
- EP 2432807 A
- WO 2014095621 A
- US 7700702 B
- WO 2013060670 A
- DE 4325237 A1
- DE 10243361 A1

**In der Beschreibung aufgeführte Nicht-Patentliteratur**

- **VON D. G. KESSEL**. *Journal of Petroleum Science and Engineering*, 1989, vol. 2, 81-101
- Petroleum, Enhanced Oil Recovery. **KIRK-OTH-MER**. Encyclopedia of Chemical Technology. John Wiley & Sons, 2010
- **TAYLOR, K.C** ; **NASR-EL-DIN, H.A**. *J. Petr. Sci. Eng.*, 1998, vol. 19, 265-280

- **C. MELROSE** ; **C. F. BRANDNER**. *J. Canadian Petr. Techn.*, October 1974, 58
- **S. CHEN et al.** *Int. J. Oil and Coal Technology*, 2014, vol. 7 (1), 52-66
- Oil and Gas. **K. WEGGEN** ; **G. PUSCH** ; **H. RISCHMÜLLER**. Ullmann's Encyclopedia of Industrial Chemistry. Wiley-VCH, 2010, 37